# EUROPÄISCHE PATENTSCHRIFT

(11) **EP 1 637 438 B1**
(45) Veröffentlichungstag und Bekanntmachung des Hinweises auf die Patenterteilung: **14.05.2008**
(21) Anmeldenummer: 05018460.5
(22) Anmeldetag: 25.08.2005
(51) Int. Cl.: B62D 21/02, B62D 21/11

(54) **Nutzfahrzeug, insbesondere Müllsammel- oder sonstiges Kommunalfahrzeug, mit einem Low-Entry-Fahrerhaus**
Utility vehicle, particularly a rubbish collection or council vehicle, with a low-entry cab
Véhicule utilitaire, en particulier un véhilcue de collectes des ordures ménagères ou un véhicule communal, présentant une cabine à accès rabaissé

(30) Priorität: 17.09.2004 DE 102004045157
(43) Veröffentlichungstag der Anmeldung: 22.03.2006
(73) Patentinhaber: MAN Nutzfahrzeuge Österreich AG, 1230 Wien (AT)
(72) Erfinder: Fidi, Peter, Ing., 1160 Wien (AT); Penias, Erwin, 1230 Wien (AT); Nechwatal, Erwin, Ing., 1230 Wien (AT); Schlegel, Christoph, Dip.-Ing., 3730 Eggenburg (AT)

(56) Entgegenhaltungen:
- EP-A1- 0 940 272
- WO-A-20/04062984
- US-A- 2 502 622

## Beschreibung

Die Erfindung betrifft ein Nutzfahrzeug, insbesondere Müllsammel- oder sonstiges Kommunalfahrzeug, mit gattungsgemäßen Merkmalen gemäß dem Oberbegriff des Anspruchs 1.

Müllsammelfahrzeuge mit Low-Entry-Fahrerhaus sind relativ selten gebaute Sonderfahrzeuge, die sich dadurch kennzeichnen, dass sie als Basis ein gegenüber einem herkömmlichen Lastkraftwagen abgeändertes Fahrgestell und Fahrerhaus aufweisen. Der Fahrgestell-Rahmen ist dabei in seinem vorderen Bereich nach unten abgekröpft und unterhalb des tiefergelegten Fahrerhauses auf einem gegenüber dem hinteren Rahmenabschnitt niedrigeren Höhenniveau nach vorne geführt worden. Die Vorderachse und das aus Verbrennungsmotor, Kupplung und Getriebe bestehende Antriebsaggregat sind bei diesen Baumustern hinter der Rahmenkröpfung angeordnet. Dies bedeutet einen relativ großen vorderen Überhang, der das Befahren enger Straßen und Kurven in Kommunen erheblich erschwert. Außerdem behindert die weit hinten gegebene Anordnung der Hinterachse und des Antriebsaggregates die Anbindung des Aufbaues und erschwert auch die Anbindung von Aufbauaggregaten an den Nebenaggregateabtrieb des Getriebes.

Ein gattungsgemäßes Nutzfahrzeug ist aus der US-A-2 502 622 bekannt.

Es ist demgegenüber daher Aufgabe der Erfindung, ein Nutzfahrzeug der gattungsgemäßen Art so umzugestalten, dass es im Bereich des Low-Entry-Fahrerhauses kürzer und kompakter realisierbar und auch der Aufbau samt Nebenaggregaten günstig anschließbar ist.

Diese Aufgabe ist erfindungsgemäß durch ein Nutzfahrzeug mit den im Anspruch 1 angegebenen Merkmalen gelöst.

Vorteilhafte, teilweise für sich selbst erfinderische Weiterbildungen und Details des erfindungsgemäßen Nutzfahrzeugs sind in den Unteransprüchen gekennzeichnet.

Da alle Merkmale der Erfindung und der erfindungsgemäßen Details ihre Stütze in der Beschreibung haben, sein an dieser Stelle auf deren wörtliche Zitierung verzichtet.

In seiner Gesamtheit zeichnet sich das erfindungsgemäße Nutzfahrzeug durch eine Vielzahl von Innovationen aus. Es ist äußerst kompakt realisierbar. Dies insbesondere aufgrund seines speziell gestalteten Fahrgestell-Rahmens, des speziell ausgebildeten und an letzteren angeschlossenen Low-Entry-Fahrerhauses, der verwendeten Vorderachse sowie der speziellen Anordnung von Fahrzeugteilen und -aggregaten an diesem speziellen Rahmen und an einen eigenständigen Aggregateträger.

Nachstehend sind die Erfindung und die Detailerfindungen anhand eines in der Zeichnung dargestellten Ausführungsbeispieles eines Nutzfahrzeuges näher erläutert.

In der Zeichnung zeigen:
- Fig. 1: in Seitenansicht eine Ausführungsform des Fahrgestells eines Nutzfahrzeuges erfindungsgemäßer Bauart, hier mit Nachlaufachse,
- Fig. 2: das Fahrgestell des Nutzfahrzeugs von Fig. 1 in Draufsicht,
- Fig. 3: den Rahmen des erfindungsgemäßen Nutzfahrzeugs, teilweise, in Seitenansicht,
- Fig. 4: einen Abschnitt des Rahmens des erfindungsgemäßen Nutzfahrzeugs mit angebautem Unterfahrschutz in Ansicht von unten,
- Fig. 5: den Unterfahrschutz aus Fig. 4 gemäß dem dortigen Schnitt A-A und die Zuordnung des Stoßfängers hierzu,
- Fig. 6: den Unterfahrschutz aus Fig. 4, 5 in Perspektivansicht,
- Fig. 7: eine Ausführungsform der erfindungsgemäß verwendeten Vorderachse, am Rahmen angebaut, in Perspektivansicht,
- Fig. 8: die Vorderachse von Fig. 7 in Vorderansicht,
- Fig. 9: die Vorderachse von Fig. 7 in Draufsicht,
- Fig. 10: die Vorderachse von Fig. 7 in Seitenansicht,
- Fig. 11: einen Schnitt durch die Darstellung von Fig. 10 entlang der Schnittlinie A-A,
- Fig. 12: den erfindungsgemäßen Rahmen nur mit den Querträgern für die Anlenkung und Abstützung der Vorderachse von Fig. 7,
- Fig. 13: die Darstellung von Fig. 12 in Seitenansicht,
- Fig. 14: einen Schnitt durch die Darstellung von Fig. 13 entlang der dortigen Schnittlinie A-A,
- Fig. 15: eine Draufsicht auf die Darstellung von Fig. 12,
- Fig. 16: eine Art der Anbringung des Lenkgetriebes am erfindungsgemäßen Rahmen in Seitenansicht,
- Fig. 17: einen Schnitt durch die Darstellung von Fig. 16 entlang der dortigen Schnittlinie A-A,
- Fig. 18: eine Draufsicht auf die Darstellung von Fig. 16,
- Fig. 19: einen Schnitt durch die Darstellung von Fig. 18 entlang der dortigen Schnittlinie B-B,
- Fig. 20: einen Schnitt durch die Darstellung von Fig. 18 entlang der dortigen Schnittlinie C-C,
- Fig. 21: vergrößert in Seitenansicht die in der Ausführungsform gemäß Fig. 16 verwendete Lenkgetriebe-Konsole,
- Fig. 22: einen Schnitt durch die Lenkgetriebe-Konsole von Fig. 21 entlang der dortigen Schnittlinie A-A,
- Fig. 23: einen Schnitt durch die Lenkgetriebe-Konsole von Fig. 21 entlang der dortigen Schnittlinie B-B,
- Fig. 24: eine Draufsicht auf die Lenkgetriebe-Konsole von Fig. 21,
- Fig. 25: partiell den erfindungsgemäßen Rahmen in Seitenansicht mit dem FahrerhausBoden und den zugehörigen Bodenträgern und vorderen sowie hinteren Fahrerhauslagern in Seitenansicht,
- Fig. 26: eine Draufsicht auf die Darstellung gemäß Fig. 25,
- Fig. 27: die Einzelheit A aus Fig. 25 vergrößert dargestellt,
- Fig. 28: die Einzelheit B aus Fig. 26 vergrößert dargestellt,
- Fig. 29: ein vorderes Fahrerhauslager in Perspektivansicht,
- Fig. 30: die Einzelheit C aus Fig. 25 vergrößert dargestellt,
- Fig. 31: die Einzelheit D aus Fig. 26 vergrößert dargestellt,
- Fig. 32: ein hinteres Fahrerhauslager in Perspektivansicht,

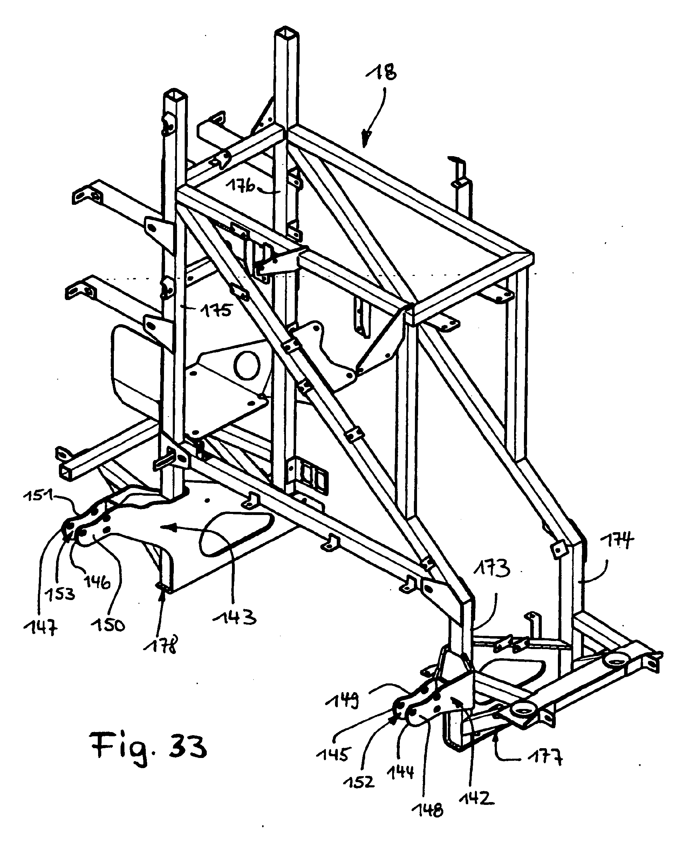

- Fig. 33: eine Ausführungsform des Traggestells eines Aggregateträgers in Perspektivansicht,

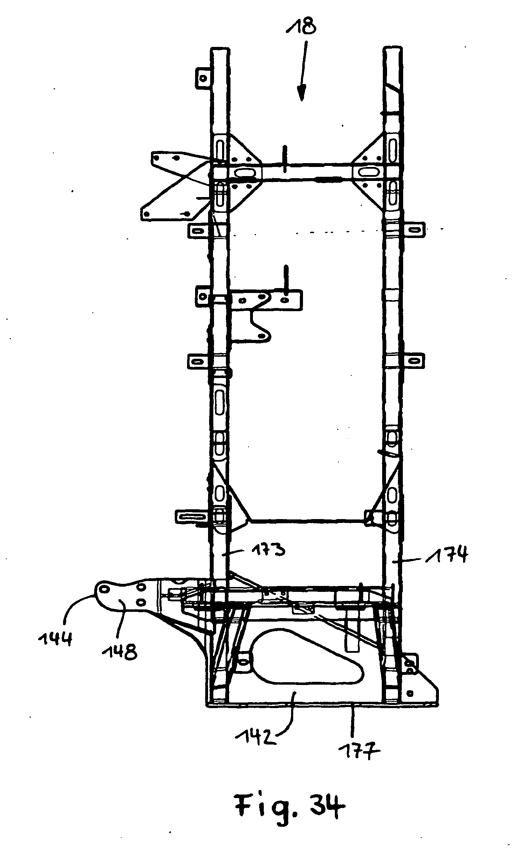

- Fig. 34: das Traggestell von Fig. 33 in Seitenansicht,

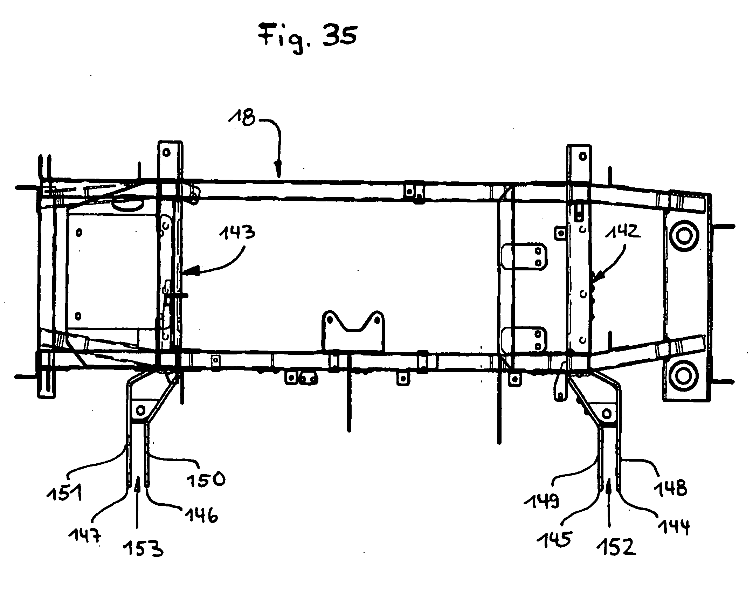

- Fig. 35: das Traggestell von Fig. 33 in Draufsicht,

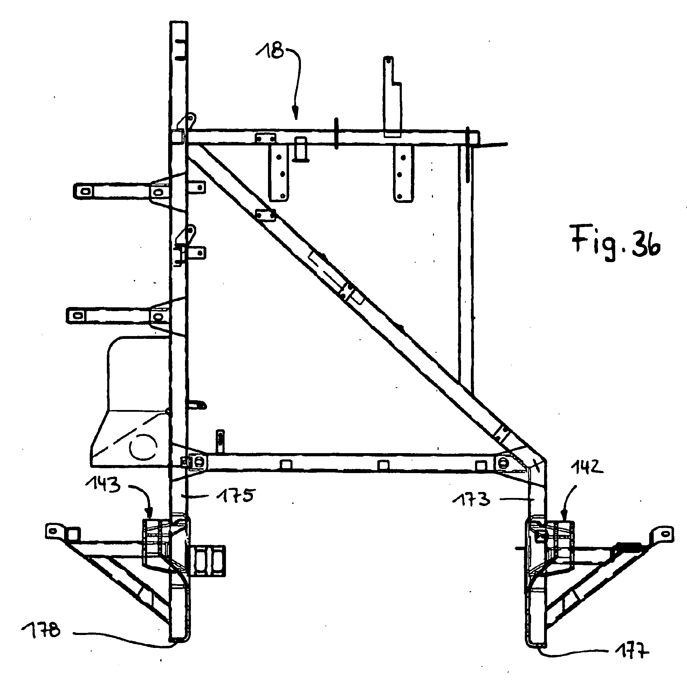

- Fig. 36: das Traggestell von Fig. 33 in Vorderansicht,
- Fig. 37: in Perspektivansicht das Traggestell von Fig. 33 in Anbaulage am erfindungsgemäßen Rahmen,
- Fig. 38: die Darstellung von Fig. 37 in Seitenansicht,
- Fig. 39: die Darstellung von Fig. 37 in Draufsicht,
- Fig. 40: die Darstellung von Fig. 37 in Vorderansicht, aus einem Querschnitt durch den Rahmen,
- Fig. 41: in Seitenansicht den Anbau des Lenkgetriebes und eines Geberzylinders für Nachlaufachslenkung,
- Fig. 42: einen Schnitt durch die Darstellung von Fig. 41 entlang der dortigen Schnittlinie A-A,
- Fig. 43: einen Schnitt durch die Darstellung von Fig. 41 entlang der dortigen Schnittlinie B-B.
- Fig. 44: eine Draufsicht auf die Darstellung von Fig. 41,
- Fig. 45: in Perspektivansicht eine Ausführungsform eines Lagerbockes für rahmenseitige Anlenkung eines Faherhaus-Kippzylinders,

In den Figuren sind gleiche bzw. einander entsprechende Teile mit gleichen Bezugszeichen angezogen.

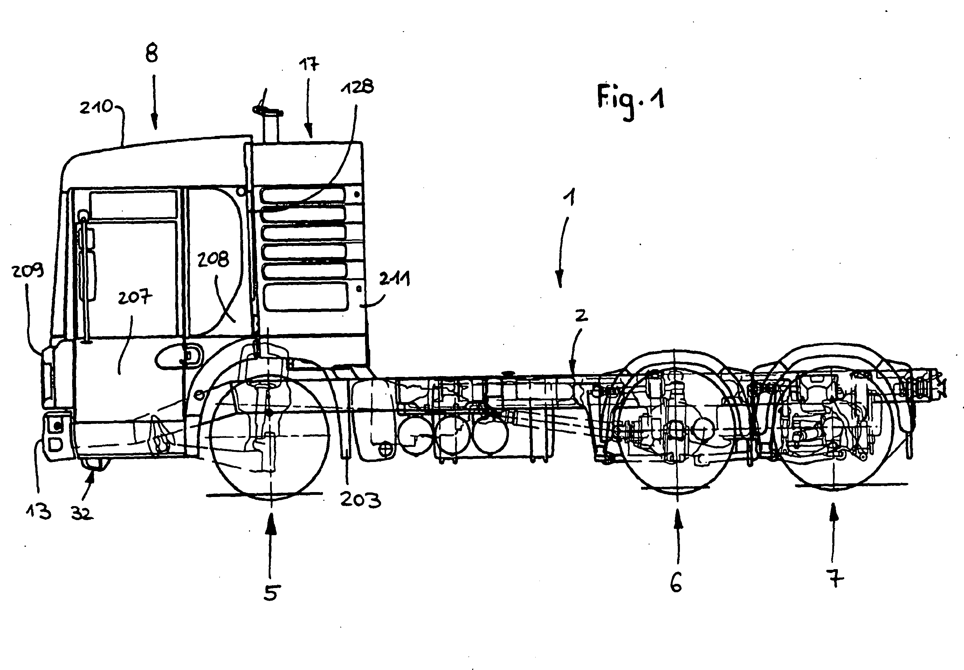

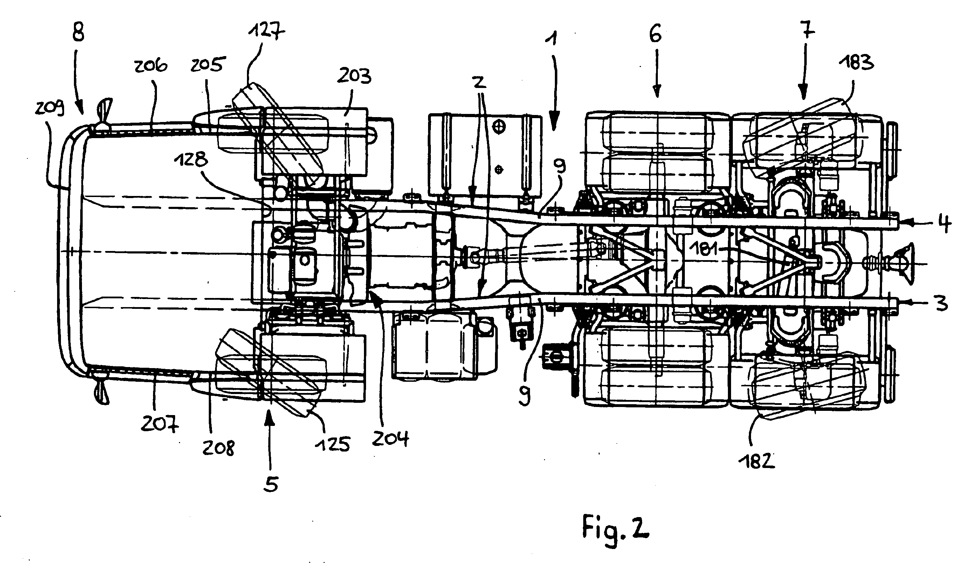

In den Figuren 1 und 2 ist ein Fahrgestell eines Nutzfahrzeugs erfindungsgemäßer Bauart in Seitenansicht und Draufsicht dargestellt.

Dabei kann es sich bei diesem Nutzfahrzeug um ein Müllsammelfahrzeug oder sonstiges Kommunalfahrzeug handeln, bei dem ein Low-Entry-Fahrerhaus vorgesehen ist. Unter Low-Entry-Fahrerhaus ist ein solches zu verstehen, das einen sehr niedrigen Einstieg und im vorderen Abschnitt einen ebenen vergleichsweise niedrig über der Fahrbahn angeordneten Boden hat. Dieser niedrige ebene Bodenabschnitt erlaubt ein Stehen im Fahrerhaus und ungehindertes Durchgehen von der Fahrer- zur Beifahrerseite für Fahrer und Begleitpersonal.

Das in Fig. 1 und 2 dargestellte Nutzfahrzeug weist ein speziell gestaltetes Fahrgestell 1 auf, dessen Rahmen 2 aus zwei durch mehrere Querträger miteinander verbundenen Längsträgern 3, 4 besteht, an dem eine Vorderachse 5 und eine Hinterachse 6, gegebenenfalls auch eine Vorlauf- oder ― wie dargestellt ― Nachlaufachse 7 angelenkt und ein kippbares Low-Entry-Fahrerhaus 8 gelagert sind.

Jeder der beiden Längsträger 3, 4 besteht erfindungsgemäß aus einem sich in Normalhöhe parallel zur Fahrbahn erstreckenden Hinterteil 9, einem sich daran anschließenden, schräg nach vorn unten geneigten Mittelteil 10 und einen sich daran auf tieferem Niveau anschließenden, entweder parallel oder leicht geneigt zur Fahrbahn nach vorn erstreckenden Vorderteil 11. Die vorderen Enden dieser beiden Längsträger 3, 4 sind erfindungsgemäß durch einen speziellen Frontend-Querträger 12 verbunden, an dem erfindungsgemäß ein Stoßfänger 13 befestigt und das Low-Entry-Fahrerhaus 8 vorne über zwei Lageranordnungen 14, 15 kippbar angelenkt sind. Das Low-Entry-Fahrerhaus 8 ist erfindungsgemäß über den Vorder- und Mittelteilen 10, 11 der Längsträger 3, 4 sowie dem vorderen Abschnitt 16 der Längsträger-Hinterteile 9 angeordnet. Unmittelbar hinter dem Low-Entry-Fahrerhaus 8 ist ein Aggregateträger 17 angeordnet, der mit seinem Gestell 18 und daran vorgesehenen Lageranordnungen 19, 20 erfindungsgemäß über dessen Normalfunktion hinausgehend auch die hintere Lagerstelle für das dort lösbar verriegelbare Low-Entry-Fahrerhaus 8 bildet. Ein weiteres erfindungsgemäßes Merkmal besteht darin, dass als Vorderachse 5 eine Verbundlenkerachse 21 verwendet ist, deren fest mit ihrem Achskörper 22 verbundene Längslenker 23, 24 an äußeren Lagerstellen 25, 26 eines die Längsträger-Mittelteile 10 in deren vorderen Bereich verbindenden Querträgers 27 angelenkt sind. Diese Verbundlenkerachse 21 ist beidseitig erfindungsgemäß über Feder-Dämpfer-Beine 28, 29 gegenüber dem Rahmen 2 abgefedert, wobei diese oben an einem die beiden Längsträger-Hinterteile 9 in deren vorderen Endabschnitt 16 verbindenden sowie den Achskörper 22 überdeckenden Querträger 30 und unten am Achskörper 22 abgestützt sind. An den Längsträger-Mittel- und Vorderteilen 10, 11 sowie den diese verbindenden Querträgern 27, 30 sind in erfindungsgemäßer Weise verschiedene weitere Fahrzeugteile sowie Fahrzeugaggregate wie ein Lenkgetriebe 31, weitere Lenkungsteile, auf die weiter hinten noch näher eingegangen ist, ein Unterfahrschutz 32, ein Fahrerhauskippzylinder, etc. über jeweils eigene Halter oder Konsolen angebaut. Nachstehend ist auf die Vielzahl von erfindungsgemäßen Details näher eingegangen.

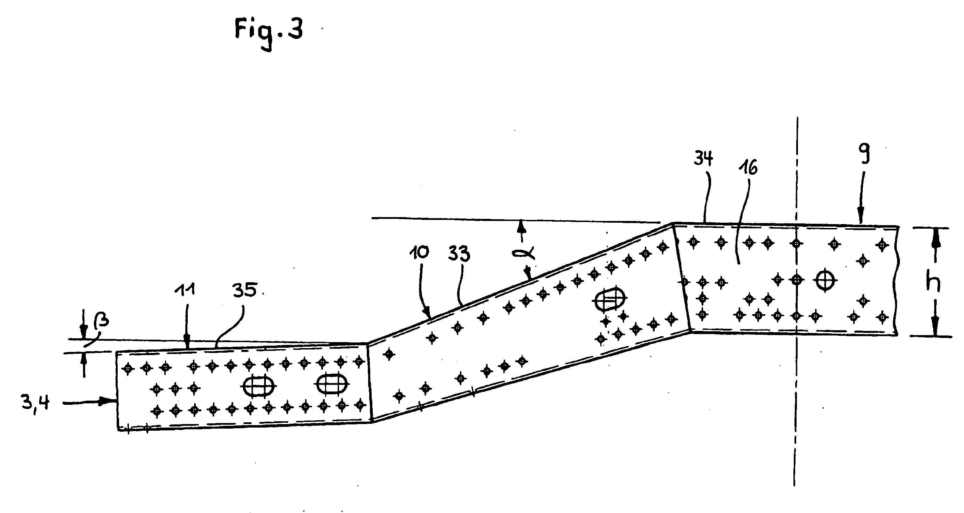

Die beiden Rahmen-Längsträger 3, 4 haben einen jeweils gleichen U-förmigen Querschnitt. Dabei ist die Querschnittshöhe h (siehe insbesondere Fig. 3) in jedem Längsträger-Hinterteil 9 über die gesamte Länge gleich bleibend, nimmt im Längsträger-Mittelteil 10 vom Hinterteil 9 ausgehend zum Vorderteil 11 hin kontinuierlich auf 0,7 bis 0,8 h ab und setzt sich im Längsträger-Vorderteil 11 mit dieser reduzierten Höhe gleich bleibend fort. Dabei ist das Mittelteil 10 jedes Rahmen-Längsträgers 3, 4 mit seiner Oberkante 33 um einen Winkel αvon ca. 20° zu der die Oberkanten 34 der Längsträger-Hinterteile 9 einschließenden Ebene geneigt und die die Oberkante 35 der Längsträger-Vorderteile 11 einschließende Ebene ist vorzugsweise um einen Winkel β von ca. 2 bis 5° gegenüber der Horizontalebene nach vorn unten geneigt.

Wie aus Fig. 2 gut ersichtlich, verlaufen die beiden Rahmen-Längsträger 3, 4 in Draufsicht gesehen im hinteren Abschnitt ihrer Hinterteile 9 bis vor die Achse(n) 6, 7 parallel, sind dann in den anschließenden mittleren Abschnitten ihrer Hinterteile 9 schräg nach außen vorn auf einen größeren Abstand ausgestellt und setzen sich dann mit diesem Abstand gleichbleibend in den anschließenden vorderen Abschnitten ihrer Hinterteile 9 sowie den anschließenden Mittelteilen 10 und Vorderteilen 11 parallel verlaufend fort.

Das Hinterteil 9, das Mittelteil 10 und das Vorderteil 11 jedes Rahmen-Längsträgers 3, 4 kann jeweils durch ein einstückiges Blech-Stanz-Biegeteil realisiert sein, welche drei vorgefertigten Teile jedes Rahmen-Längsträgers 3, 4 dann jeweils stumpf aneinander stoßend miteinander verschweißt sind und dann den fertigen Längsträger-Rohling bilden.

Alternativ hierzu können das Vorderteil 11 und das Mittelteil 10 jedes Rahmen-Längsträgers 3, 4 durch ein einstückiges Blech-Stanz-Biegeteil realisiert sein. Ebenso ist das Hinterteil 9 jedes Rahmen-Längsträgers 3, 4 durch ein einstückiges Blech-Stanz-Biegeteil gebildet. Die beiden vorgefertigten Einzelteile jedes Rahmen-Längsträgers werden dann stumpf aneinander stoßend miteinander verschweißt und bilden dann den fertigen Längsträger-Rohling.

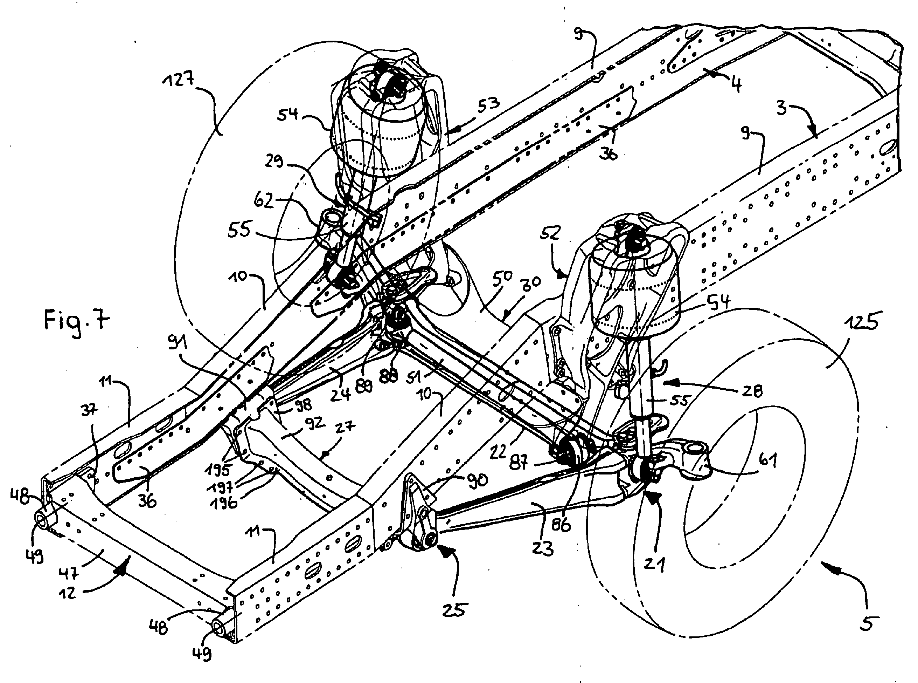

Die wie vorstehend vorgefertigten Rahmen-Längsträger 3, 4 können durch innen angesetzte, insbesondere angeschweißte und die jeweiligen Stoßstellen bzw. Knickstellen der drei Teile 9, 10, 11 überquerende Einlageplatten 36 (siehe z. B. Fig. 7, 12, 13) versteift sein.

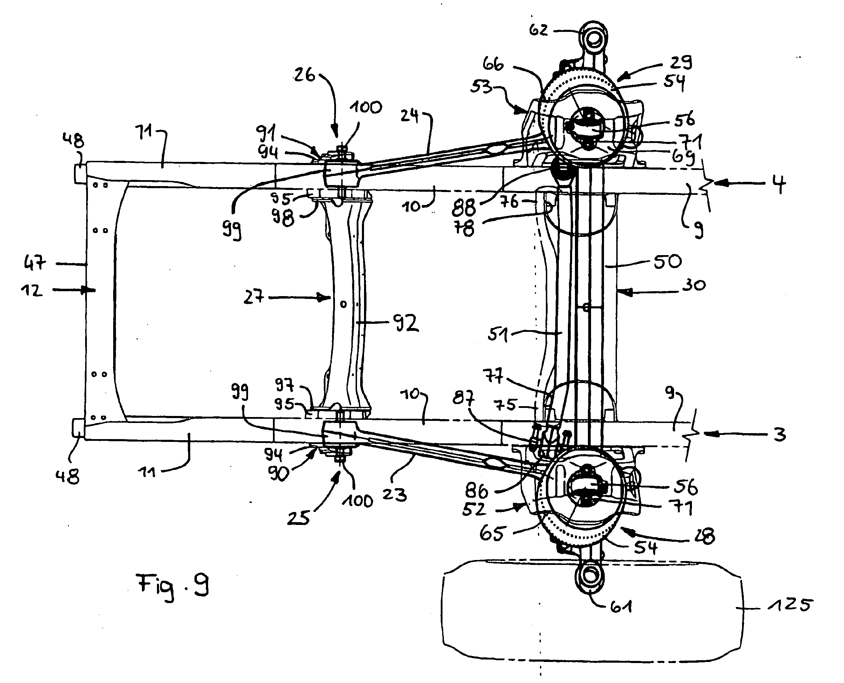

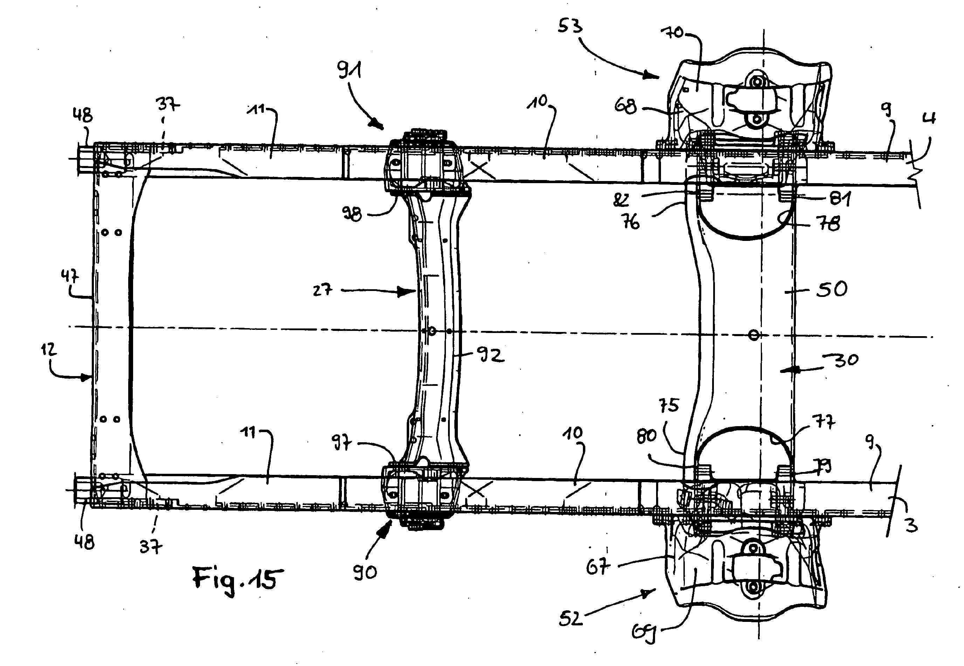

Der erfindungsgemäße, den vorderen Rahmenabschluss bildende Frontend-Querträger 12 (siehe beispielsweise Fig. 7, 9, 15) ist beispielsweise durch ein im Querschnitt U-förmiges Blech-Stanz-Biegeteil gebildet, an dessen seitlichen äußeren Enden Befestigungsflansche 37 angeschweißt sind. Dieser Frontend-Querträger 12 erstreckt sich zwischen den vorderen Enden der beiden Längsträger-Vorderteile 11 und ist innen an deren Vertikalwänden über seine Befestigungsflansche 37 sowie zueinander fluchtende Bohrungen durchdringende Schraubverbindungen angeflanscht befestigt.

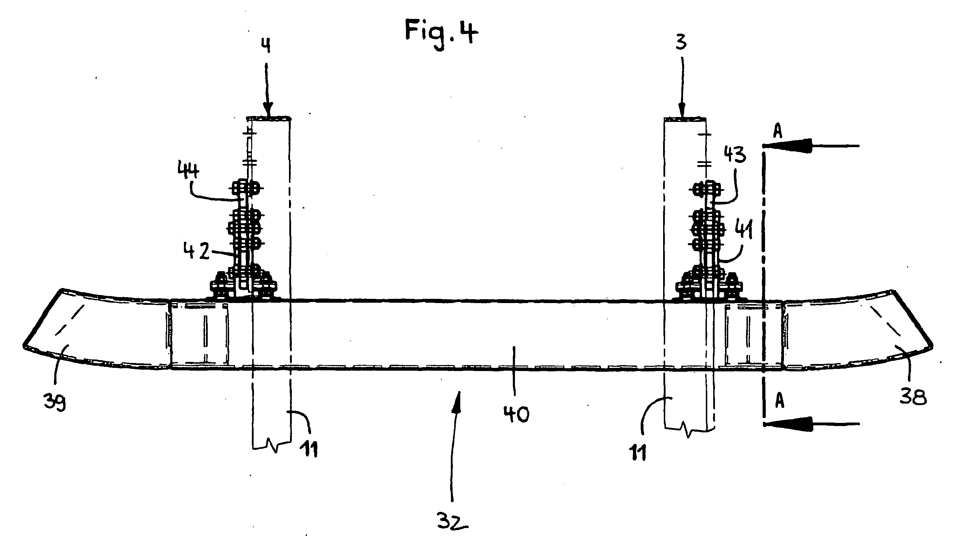

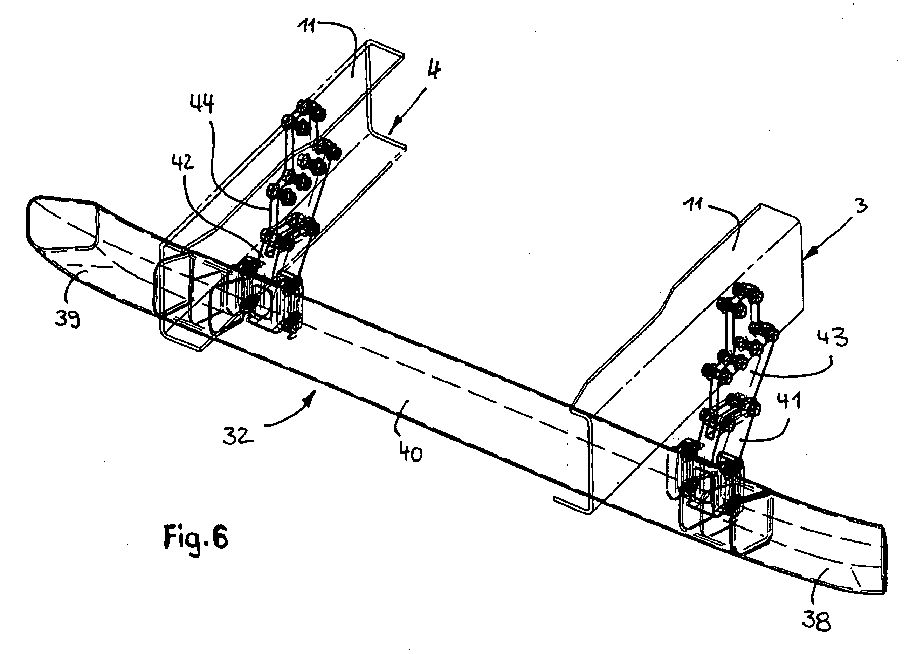

Der Unterfahrschutz 32 (siehe insbesondere Fig. 4, 5, 6) ist vorzugsweise durch ein an seinen Enden 38, 39 geringfügig nach hinten gekrümmtes, dazwischen ansonsten gerades Profilrohr 40 gebildet, an dem Halter 41, 42 angebracht sind, mit denen es an zwei Lagerschilden 43, 44 befestigt ist, von denen jeder jeweils außen am zugehörigen Längsträger-Vorderteil 11 befestigt ist. Dabei ist die diesbezügliche Befestigung vorzugsweise über zueinander fluchtende Bohrungen durchdringende Schraubverbindungen (wie aus Fig. 4 und 6 ersichtlich) bewerkstelligt, kann aber auch durch Anschweißen erfolgen.

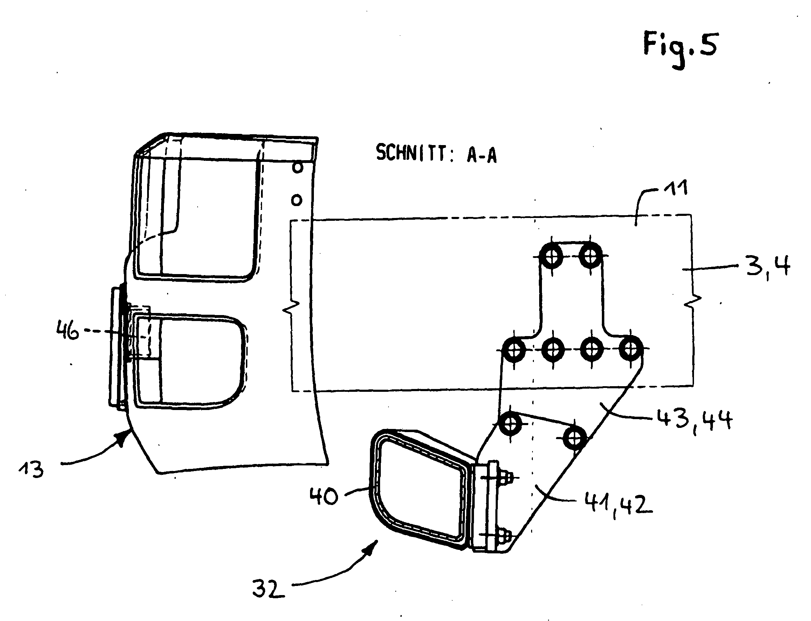

Das Profilrohr 40 des Unterfahrschutzes 32 ist ― wie gut aus Fig. 5 ersichtlich ― räumlich beabstandet hinter dem Stoßfänger 13 angeordnet und erstreckt sich dabei in einer gegenüber der Unterseite 45 des Stoßfängers 13 geringeren Höhe parallel zur Fahrbahn, wobei hinsichtlich dieser Lage und Zuordnung des Unterfahrschutzes 32 die gesetzlichen Bestimmungen eingehalten sind.

Der schalenförmig ausgebildete Stoßfänger 13, selbst ist erfindungsgemäß über innere, Abstand gebende Konsolen 46 an der vorderen Vertikalwand 47 des Frontend-Querträgers 12 lösbar mittels Schraubverbindungen befestigt und gegebenenfalls auch noch über Stützstreben (nicht dargestellt) an anderen Stellen des Frontend-Querträgers 12 abgestützt. In den Stoßfänger sind Scheinwerfer, Nebel- und Fernlichtscheinwerfer, Blinkleuchten, gegebenenfalls auch Seitenbegrenzungsleuchten und Scheinwerfer-Wisch-Wasch-Vorrichtungen integriert.

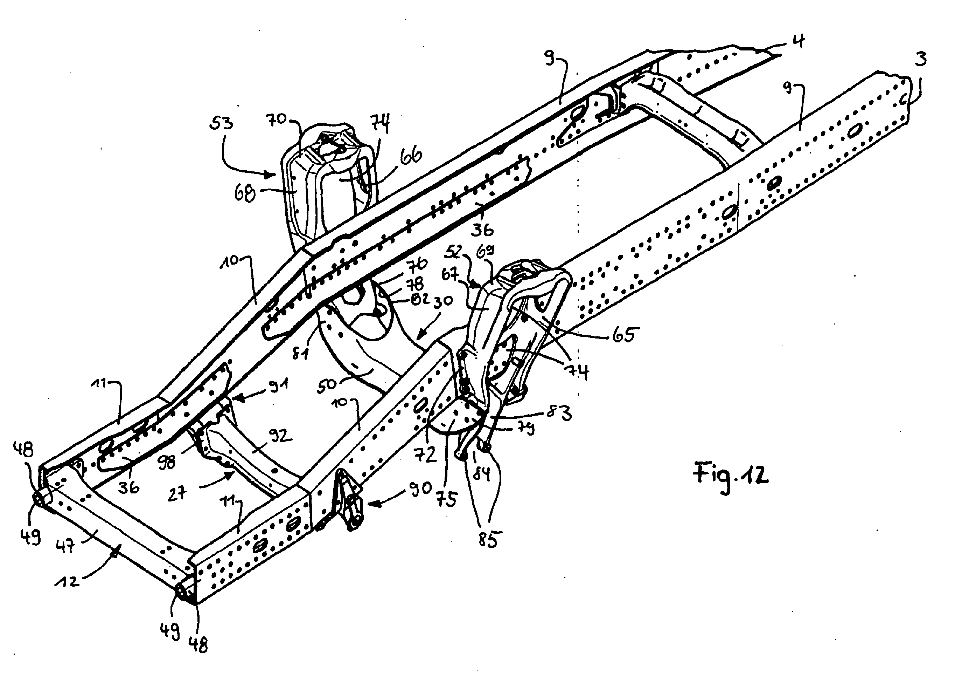

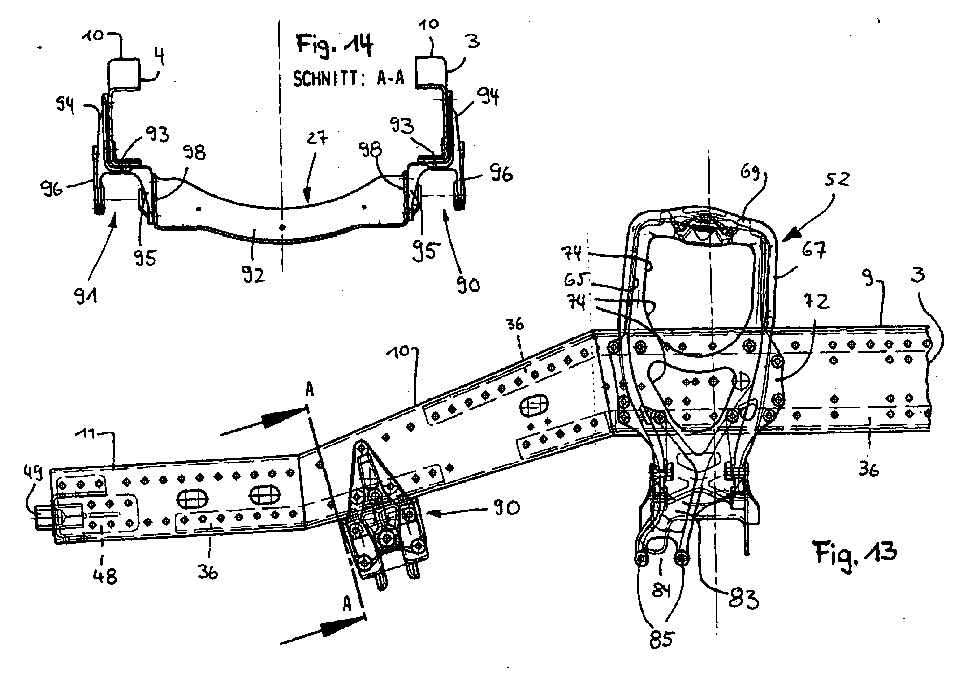

Im Bereich des Frontend-Querträgers 12 ist entweder direkt an diesem oder einem der beiden Längsträger-Vorderteile 11 innen wenigstens ein Anschlussbock 48 mit Gewindebohrung 49 für das Einschranken einer Abschleppöse (siehe z. B. Fig. 12, 13) entweder durch zueinander fluchtende Bohrungen durchdringende Schraubverbindungen befestigt oder angeschweißt.

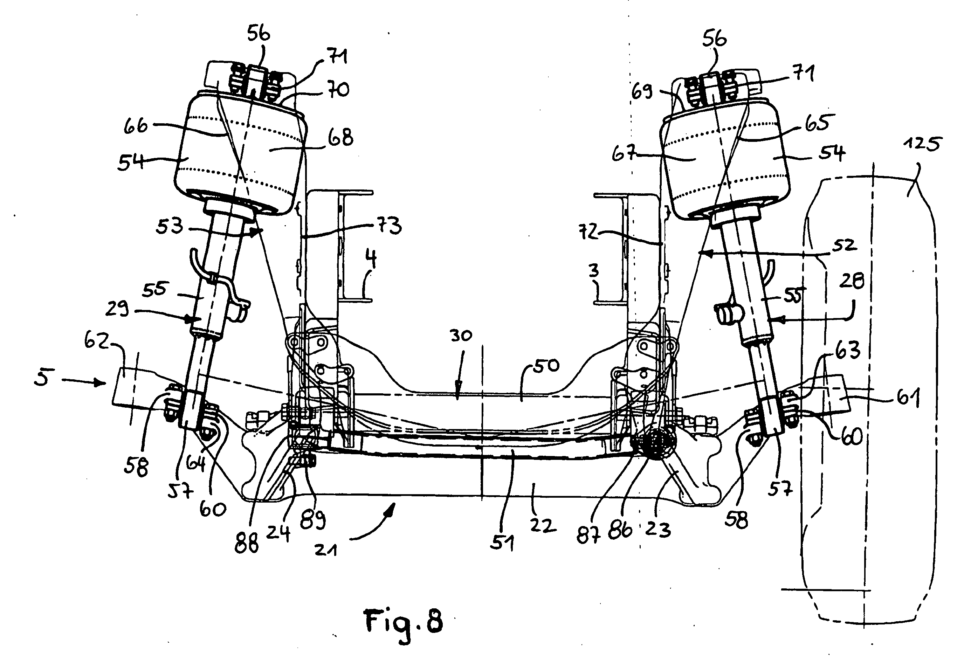

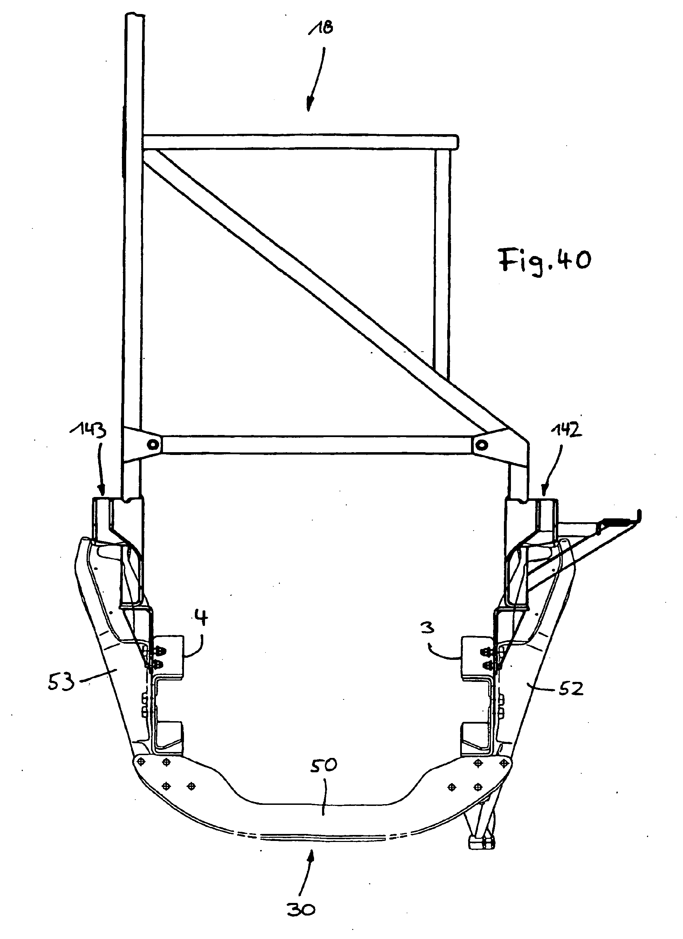

Der im Bereich der Vorderachse 5 angeordnete erfindungsgemäße Querträger 30 ist (siehe z. B. Fig. 8, 12, 40) - von vorne gesehen ― U-förmig ausgebildet. Er überbrückt mit seiner Quertraverse 50 den Achskörper 22 der Verbundlenkerachse 21 dachbildend und ebenso einen darunter quer verlaufenden Panhardstab 51. Der Querträger 30 ist vorzugsweise aus drei Teilen zusammengesetzt, nämlich der Quertraverse 50 und zwei an deren Enden befestigten Federbeinhaltern 52, 53. Dabei ist der U-förmige Querträger 30 mit jeweils einem Federbeinhalter 52, 53 außen an einem der beiden Rahmen-Längsträger 3, 4, dort im Bereich des vorderen Endabschnitts 16 des Hinterteils 9, befestigt. Jedes einer Achsseite der Verbundlenkerachse 21 zugeordnete Feder-Dämpfer-Bein 28, 29 besteht aus einer Luft- oder Schraubenfeder 54 und einem hierzu koaxialen Stoßdämpfer 55. Jedes Feder-Dämpfer-Bein 28, 29 ist mit seinem oberen Ende 56 am zugehörigen Federbeinhalter 52, 53 und mit seinem unteren Ende 57 an einer Anlenkstelle 58 am Achskörper 22 angeschlossen. Die Verbundlenkerachse 21 ist mit den freien Enden 99 ihrer beiden Längslenker 23, 24 an den rahmenfesten äußeren Lagerstellen 25, 26 des Querträgers 27 in einer weiter hinten noch näher erläuterten Weise angebracht. Der zur Querführung der Verbundlenkerachse 21 notwendige Panhardstab 51 ist einenendes am Starrachskörper-Längslenker-Verbund und andernendes mittelbar am Rahmen angelenkt, in einer ebenfalls weiter hinten noch näher beschriebenen Weise.

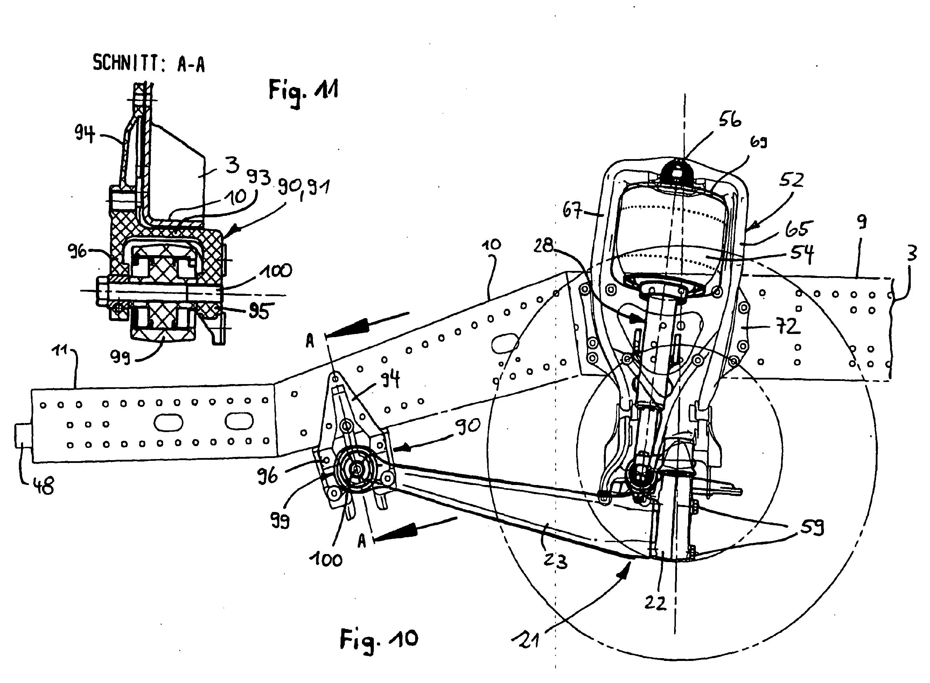

In bevorzugter Weise ist als Verbundlenkerachse 21 eine solche verwendet, die selbststabilisierend ausgebildet ist, der demzufolge auch die Funktion eines das Wanken des Nutzfahrzeuges begrenzenden Stabilisators aufgeprägt ist. Dabei sind die beiden Längslenker 23, 24 weit voneinander beabstandet jeweils vorzugsweise stirnseitig vom am Starrachskörper 22 mittels Schrauben 59 (siehe Fig. 10) kraft- und gegebenenfalls auch formschlüssig angeschlossen. Außerdem ist dabei der Starrachskörper 22 in einem geraden Mittelbereich zwischen den angeschlossenen Längslenkern 23, 24 definiert torsionsfähig ausgebildet. Die beiden Längslenker 23, 24 dagegen sind in Vertikalrichtung gesehen vergleichsweise biegesteif, um ihre Längsachse aber begrenzt tordierbar ausgebildet und hinsichtlich ihrer Biegefestigkeit sowie Torsionsfähigkeit auf den Gesamtstabilisierungseffekt in Verbindung mit dem torsionsfähigen Starrachskörper 22 abgestimmt durch entsprechende Bemessung und Formgebung der hierfür maßgeblichen Querschnitte.

Jedes der beiden Federbeine 28, 29 ist ― von der Seite her gesehen ― entweder vertikal oder leicht nach vorn oder hinten geneigt (siehe z. B. Fig. 10) angeordnet und an seinem unteren Ende 57 mit einem Lagerauge über ein eingebautes Pratzengelenk 60 an der achskörperfesten Lagerstelle 58 angelenkt, die durch am Achskörper 22 soweit wie möglich zu jeweils einem achskörperendigen Radträger-Anschlusskopf 61, 62 hingerückt mit angeformten und entsprechend spanabhebend nachbearbeitete Vorsprünge 63, 64 gebildet ist.

Jeder Federbeinhalter 52, 53 ist zumindest in seinem oberen Bereich nach Art einer nach außen offenen Halbschale 65, 66 ausgebildet, von deren Begrenzungswand 67, 68 das zugehörige Federbein 28, 29 im Bereich seiner Luft- oder Schraubenfeder 54 radial außen mit geringem Abstand von innen her partiell überdeckt wird und an deren Kopfplatte 69, 70 das jeweilige Federbein 28, 29 obenendig abgestützt und mittels eines Pratzengelenks 71 befestigt ist.

Jeder Federbeinhalter 52, 53 weist etwa in seinem mittleren Höhenbereich einen außenseitig an der Halbschale 65, 66 anschließenden Anschlussflansch 72, 73 mit Schraubenlöchern auf, welcher Anschlussflansch 72, 73 etwa im Schubmittelpunkt gegeben ist. Jeder Federbeinhalter 52, 53 ist mit seinem Anschlussflansch 72, 73 und dessen Schraubenlöchern und hierzu längsträgerseitig fluchtende Löcher durchdringende Schraubverbindungen am jeweiligen Rahmen-Längsträger 3, 4 außen angeflanscht befestigt.

Jeder der beiden Federbeinhalter 52, 53 ist vorzugsweise durch ein Stahlgussteil realisiert, das nach dem Abguss an erforderlichen Stellen spanabhebend nach- bzw. endbearbeitet wird und an geeigneten Stellen Durchbrüche 74 zur Gewichtsreduzierung aufweist.

Die ebenfalls wie die beiden Federbeinhalter 52, 53 ein Teil des U-förmigen Querträgers 30 bildende Quertraverse 50 ist vorzugsweise durch ein im Querschnitt hutförmiges Blechpress- oder Blech-Stanz-Biegeteil, gegebenenfalls alternativ auch durch ein Schmiede- oder Gussteil gebildet. Diese Quertraverse 50 weist einen geraden Mittelabschnitt und beiderseits desselben je einen schräg hochgezogenen Endabschnitt 75, 76 sowie gegebenenfalls in der Mitte seines Obergurtes einen oder mehrere zur Gewichtsreduzierung dienende Durchbrüche auf (siehe z. B. Fig. 10 bis 15).

Die äußeren Enden dieser Quertraverse 50 sind nach Art eines Maules ausgebildet, mit dem der links- und rechtsseitig anzuschließende Federbeinhalter 52, 53 außen übergriffen wird. Dabei ist jedes Maul an der Quertraverse 50 durch einen Ausschnitt 77, 78 in dessen Obergurt und beiderseits jedes Ausschnitts 77, 78 verbleibende Wangen 79, 80 bzw. 81, 82 gebildet, denen am jeweiligen Federbeinhalter 52, 53 vorn und hinten zugehörige Anlageflächen zugeordnet sind, in deren Bereich die Quertraverse 50 mit ihren Wangen abgestützt und dort über zueinander fluchtende Bohrungen durchdringende Schraubverbindungen mit den Federbeinhaltern 52, 53 fest verbunden ist.

Einem der beiden Federbeinhalter 52, 53 ist über seine eigentliche Funktion hinaus auch noch jene Funktion aufgeprägt, nämlich das Abstütz-, Halte- und Anlenkorgan für das eine, fahrgestellseitige Ende des Panhardstabes 51 zu bilden. Hierzu ist z. B. der Federbeinhalter 52 (siehe z. B. Fig. 12, 13) nach unten durch ein Lagerschild 83 verlängert, an dessen unterem Ende ein Maul 84 und beiderseits desselben je ein Lagerauge 85 ausgebildet sind, an welchen Lageraugen 85 der Panhardstab 51 über ein in seinem am zugehörigen Ende gegebenen Lagerauge 86 eingebautes Pratzengelenk 87 durch Schraubverbindungen befestigt ist.

An seinem gegenüberliegenden Ende ist der Panhardstab 51 über ein in das dortige Lagerauge 88 eingebautes Pratzengelenk 89 an einer geeigneten Stelle des Starrachskörper-Längslenker-Verbundes angelenkt, bei der es sich beispielsweise um einen Lagerbock handelt, der entweder am Achskörper 22 oder einem Längslenker 23 bzw. 24 entweder mit angeformt oder dort angebaut ist und an dem eine entsprechende Anlagefläche und Gewindebohrungen für die Anschraubung des Pratzengelenkes 89 mittels Schrauben vorgesehen sind.

Der Querträger 27, an dem die Längslenker 23, 24 der Verbundlenkerachse 21 angelenkt sind, besteht erfindungsgemäß aus drei durch Verschraubungen miteinander verbundenen Teilen, nämlich einem linken Anschlusswinkel 90 und einem rechten Anschlusswinkel 91 sowie einer Quertraverse 92. Dabei weist jeder Anschlusswinkel 90, 91 (siehe Fig. 11) einen Quersteg 93, daran einen nach oben abragenden Vertikalsteg 94 sowie eine innere und äußere, am Quersteg 93 nach unten abragend angeordnete Lagerwange 95, 96 auf. Jeder Anschlusswinkel 90, 91 ist mit seinem Quersteg 93 und dem äußeren Vertikalsteg 94 unten und außen am Längsträger-Mittelteil 10 anliegend mittels zueinander fluchtende Bohrungen durchdringender Schraubverbindungen befestigt. Zwischen den inneren Lagerwangen 95 der beiden Anschlusswinkel 90, 91 ist die stirnseitig Anschlussflansche 97, 98 aufweisende Quertraverse 92 aufgenommen und an jedem Ende mit ihren Anschlussflanschen 97, 98 mit den Anschlusswinkeln 90, 91 über zueinander fluchtende Bohrungen durchdringende Schraubverbindungen verbunden. Zwischen den beiden nach unten abragenden Lagerwangen 95, 96 jedes Anschlusswinkels 90, 91 ist das vordere, als Lagerauge mit eingebauten Gummi-Metall-Lager ausgebildete Ende 99 eines Längslenkers 23, 24 quergeführt aufgenommen und dort mittels einer zueinander fluchtende Querbohrungen durchdringenden Lagerschraube 100 angelenkt.

Die beiden Anschlusswinkel 90, 91 und die Quertraverse 92 des Querträgers 27 können jeweils als Gussteil hergestellt sein. Die Quertraverse 92 wird jedoch vorzugsweise als einstückiges Blech-Stanz-Biegeteil bzw. Blech-Stanz-Prägeteil realisiert.

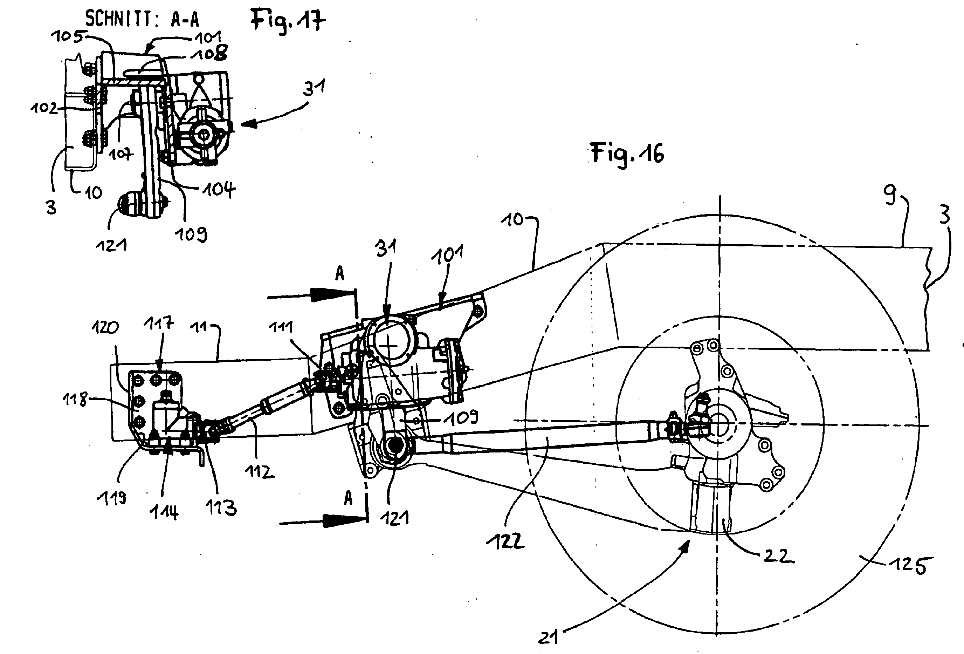

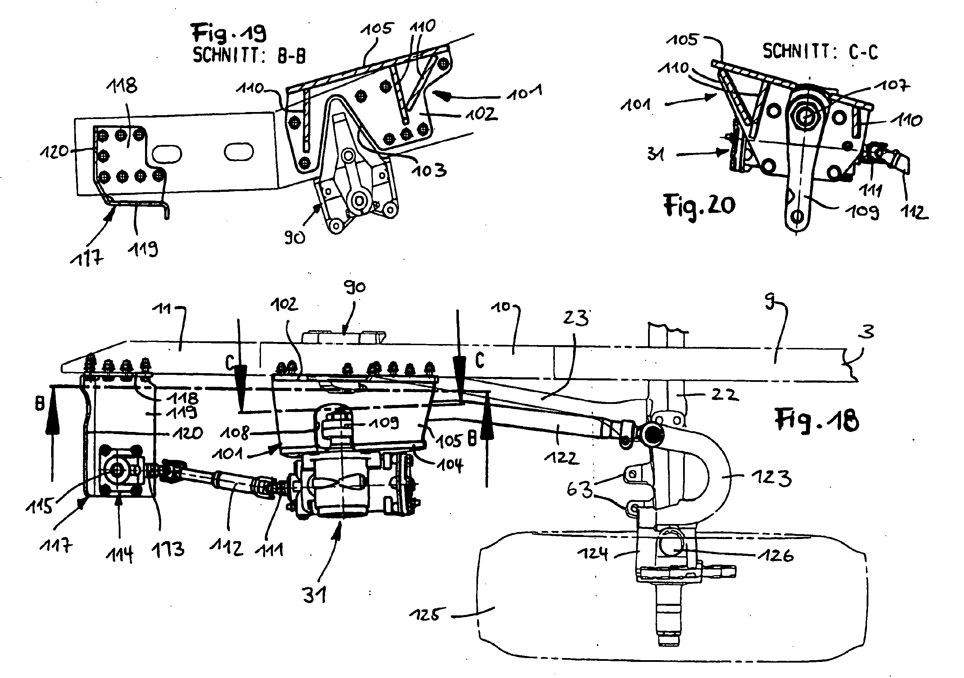

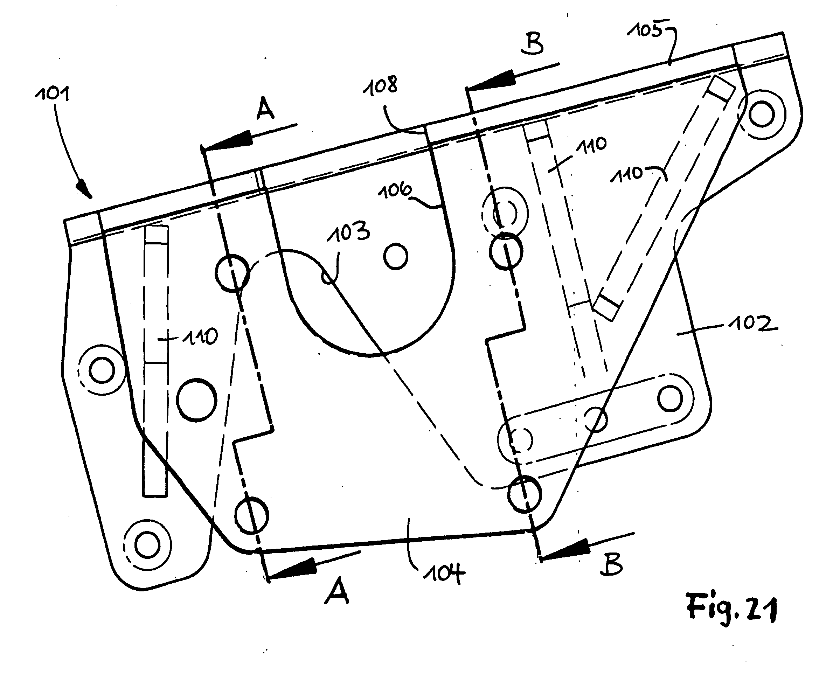

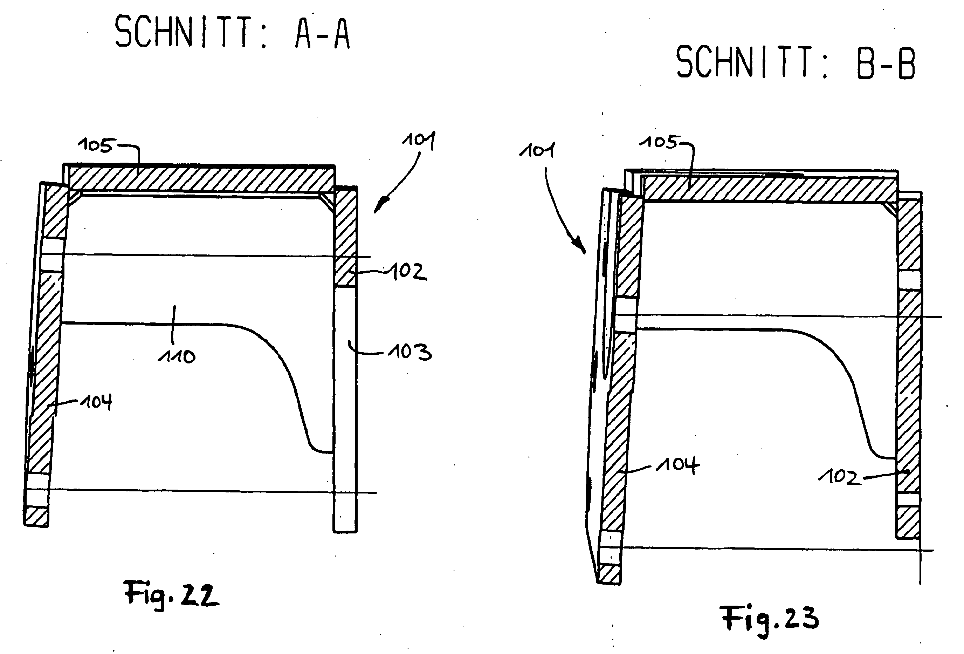

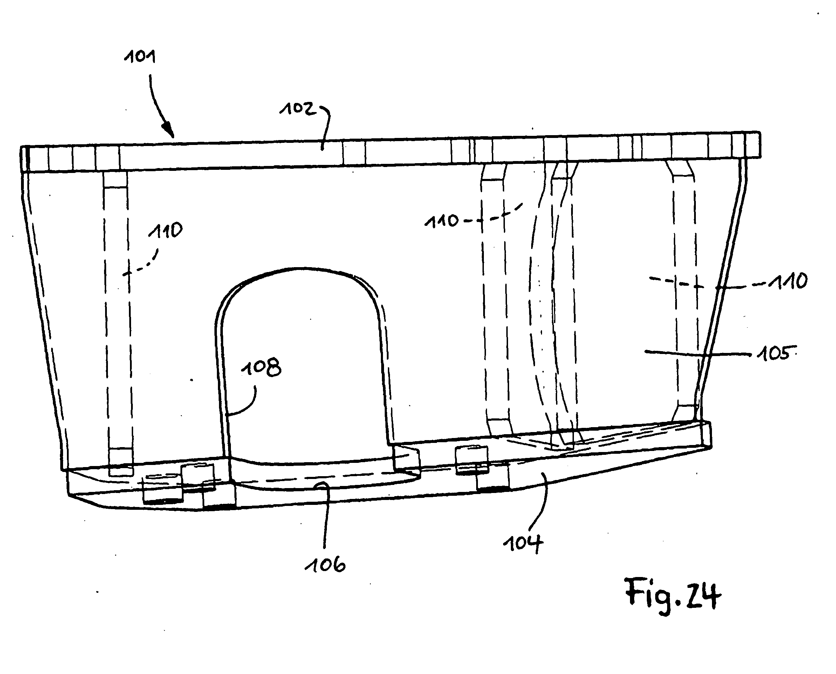

Das Lenkgetriebe 31 ist in erfindungsgemäßer Weise am vorderen Endbereich eines Längsträger-Mittelteils 10 in einer leicht nach vorne gekippten Lage auf einer speziell gestalteten Konsole 101 befestigt angeordnet (siehe Fig. 16 bis 24). Diese Konsole 101 übergreift den Anschlusswinkel 90 des Querträgers 27 räumlich (siehe insbesondere Fig. 19) und ist beiderseits desselben außen am Längsträger-Mittelteil 10 mittels zueinander fluchtende Bohrungen durchdringender Schraubverbindungen angeflanscht befestigt. Die Konsole 101 besteht (wie gut aus Fig. 21 bis 24 ersichtlich) aus einer inneren Platte 102 mit einer Aussparung 103 für den Durchtritt des Anschlusswinkels 90 des Querträgers 27, einer zur inneren (102) beabstandet zumindest annähernd parallelen äußeren Platte 104 und einer oben die beiden Platten 102, 104 verbindenden Kopfplatte 105. Die innere Platte 102 weist mehrere Querdurchgangsbohrungen für die Durchführung von Schrauben zu ihrer Befestigung an der Außenseite des Längsträger-Mittelteils 10 auf. Die äußere Platte 104 weist mehrere Querdurchgangsbohrungen für die Durchführung von Schrauben zur Befestigung des Lenkgetriebes 31 an ihrer Außenseite auf. Außerdem weist die Konsole 101 in ihrer äußeren Platte 104 eine Aussparung 106 für den Durchtritt der Ausgangswelle 107 des Lenkgetriebes 31 in den Innenraum der Konsole 101. Die Aussparung 106 setzt sich in einer Aussparung 108 in der Kopfplatte 105 fort, welche ein partielles Eintauchen eines an der Ausgangswelle 107 des Lenkgetriebes 31 befestigten Lenkhebels 109 ermöglicht.

Die Konsole 101 ist innen durch sich zwischen den Platten 102, 104 erstreckende Stegwände 110 versteift und entweder durch eine Schweißkonstruktion oder eine Gusskonstruktion realisiert.

Die vorne am Lenkgetriebe 31 gegebene Eingangswelle 111 steht über eine nach vorne führende Gelenkwelle 112 mit der Ausgangswelle 113 eines Winkelgetriebes 114 und über dessen Eingangswelle 115 mit der Lenksäule des Nutzfahrzeugs in Verbindung, die aus dem Low-Entry-Fahrerhaus 8 durch eine Öffnung in dessen Boden 116 heraus und zur Eingangswelle 115 des Winkelgetriebes 114 hinführt. Das Winkelgetriebe 114 ist an einer Konsole 117 durch Schraubverbindungen befestigt, die seitlich außen am vorderen Bereich des Längsträger-Vorderteils durch mehrere Schraubverbindungen oder Anschweißen befestigt ist.

Die Konsole 117 selbst besteht aus einem Anschlussflansch 118, mit dem sie am Längsträger-Vorderteil 11 angeflanscht ist, einer unten am Anschlussflansch 118 nach außen abstehenden Querplatte 119, auf der das Winkelgetriebe 114 befestigt ist, und einer äußeren Versteifungsstrebe 120, die mit dem Anschlussflansch 118 und der Querplatte 119 verbunden ist. Die Konsole 117 ist entweder durch ein Blech-Stanz-Biegeteil oder Blech-Stanz-Prägeteil oder ein Guss- oder Schmiedeteil gebildet.

Wie gut aus der Zeichnung ersichtlich, ist der Ausgang des seitlich außen an der Konsole 101 angebauten Lenkgetriebes 31 innen im geschützten Überdeckungsbereich/Innenraum der Konsole 101 gegeben. Der an der Ausgangswelle 107 des Lenkgetriebes 31 angeschlossene Lenkhebel 109 wirkt über eine an seinem unteren freien Ende gelenkig z. B. einem Kugelkopf 121 und zugehörige Kalotte angeschlossene Lenkschubstange 122 auf einen Lenkhebel 123 am Radträger 124 eines Rades 125 der Vorderachse 5, wobei der Radträger 124 außen am Achskörper 22 der Verbundlenkerachse 21 über einen Achsschenkelbolzen 126 angelenkt ist (siehe insbesondere Fig. 18).

Das Low-Entry-Fahrerhaus 8 ist erfindungsgemäß so lange ausgebildet und in Relation zur Vorderachse 5 angeordnet, dass die Drehachsen der Räder 125, 127 der Vorderachse 5 in einer Vertikalquerebene gegeben sind, die die Rückwand 128 des Low-Entry-Fahrerhauses 8 einschließt oder benachbart vor oder hinter dieser steht.

Das Low-Entry-Fahrerhaus 8 ist erfindungsgemäß wie folgt gelagert.

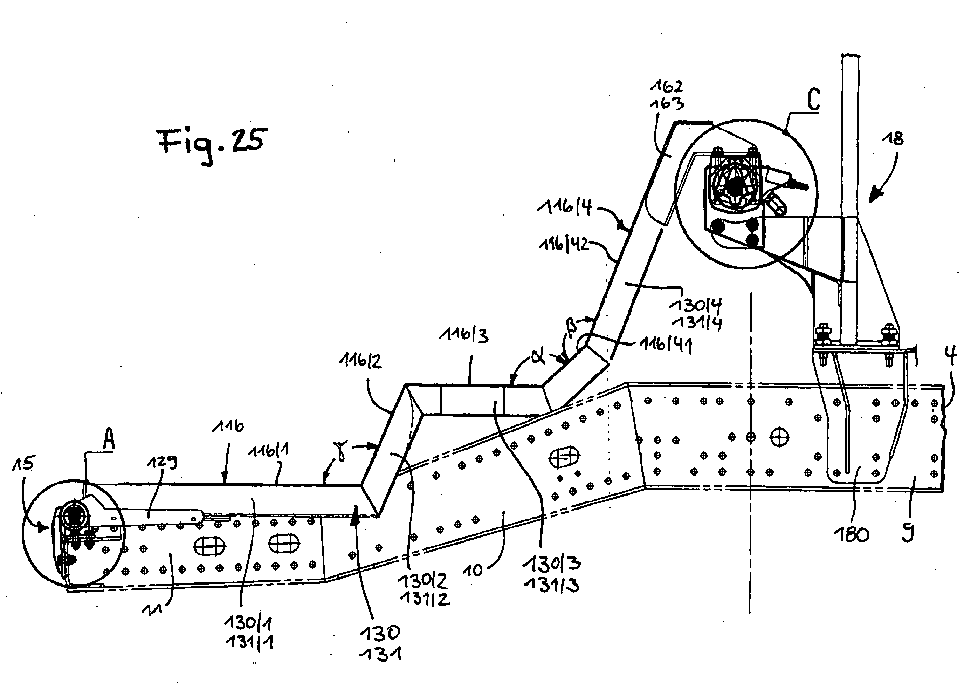

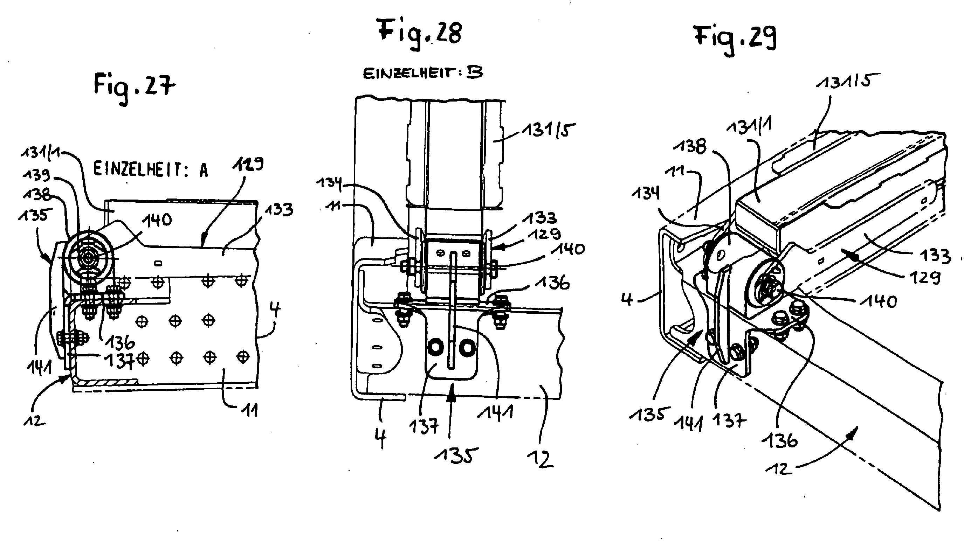

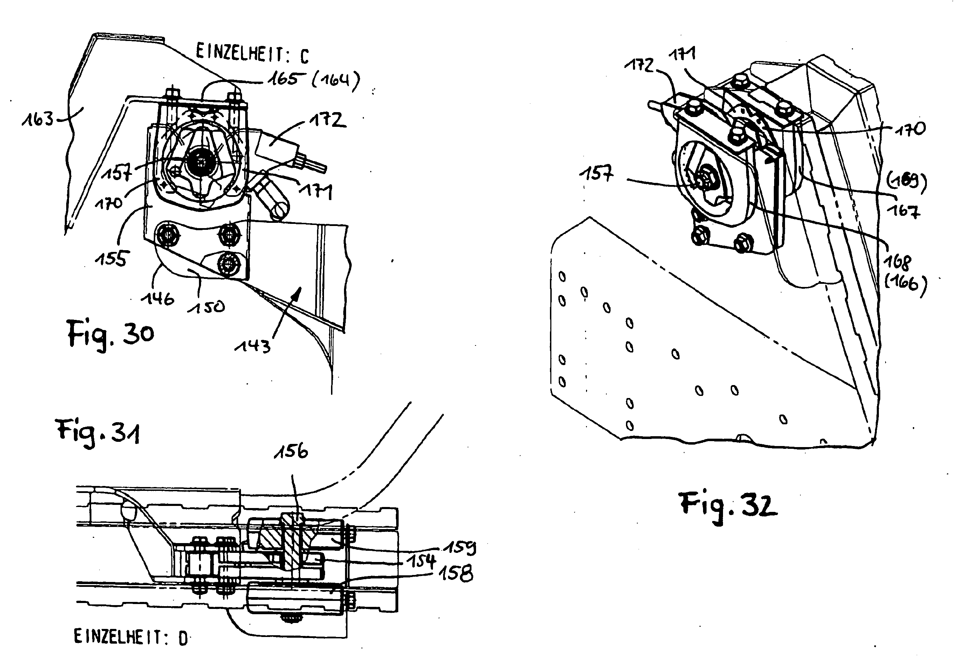

Zur vorderen Lagerung des Low-Entry-Fahrerhauses 8 sind die beiden Lageranordnungen 14, 15 vorgesehen. Jede derselben weist - wie gut aus Fig. 25 bis 32 ersichtlich ― eine mit der anderen identische Konsole 129 auf, von denen jede am vorderen Ende eines der beiden den Fahrerhaus-Boden 116 außen versteifenden Bodenträger 130, 131 befestigt ist. Jede der beiden Konsolen 129 weist eine Anschlussplatte 132 und zwei an dieser parallel beabstandet nach oben abragende Lagerwangen 133, 134 auf. Als weitere Teile der Lageranordnungen 14, 15 sind zwei gleich ausgebildete abgewinkelte Tragböcke 135 vorgesehen, die mit ihrer Winkelquerplatte 136 und Winkelvertikalplatte 137 an der Oberseite und der Vorderseite des Frontend-Querträgers 12 anliegend vorzugsweise über zueinander fluchtende Bohrungen durchdringende Schraubverbindungen befestigt sind. Oberseitig an seiner Winkelquerplatte 136 weist jeder der beiden Tragböcke 135 ein Lagerauge 38 mit eingebautem Gummi-Metall-Lager 139 auf, das außen beidseitig von den Lagerwangen 133, 134 der zugehörigen Konsole 129 übergriffen wird. Die Verbindung zwischen einem Tragbock 135 und der zugehörigen Konsole 129 ist über eine die Zentralbohrung im Gummi-Metall-Lager 139 sowie hierzu fluchtende Bohrungen in den Konsolen-Lagerwangen 133, 134 durchdringende Lagerschraube 140 hergestellt. Zur Versteifung des Lagers ist vorne an jedem Tragbock 135 eine Versteifungsrippe 141 angeordnet.

Jede der beiden gleich ausgebildeten Konsolen 129 ist vorzugsweise als Blech-Stanz-Biegeteil realisiert und besitzt in jenem Bereich, in dem sie am zugehörigen Fahrerhaus-Bodenträger 130 bzw. 131 angeschlossen, insbesondere angeschweißt ist, einen U-förmigen Querschnitt und umgreift in diesem Bereich den Bodenträger 130 bzw. 131 außen formschlüssig. Die Lagerwangen 133, 134 dieser Konsolen 129 sind über den U-Profil-Bereich hinaus nach vorne verlängert, soweit, dass das Lagerauge 138 am zugehörigen Tragbock 135 vollständig überdeckt ist.

Jeder der beiden Tragböcke 135 kann entweder durch eine Schweiß- oder Gusskonstruktion realisiert sein.

Zur hinteren Lagerung des Low-Entry-Fahrerhauses sind erfindungsgemäß am Traggestell 18 des Aggregateträgers 17 zwei Lagerkonsolen 142, 143 mit jeweils zwei nach vorne abragenden Lagerschilden 144, 145 bzw. 146, 147 vorgesehen, deren frei nach vorne auskragende Endbereiche ein beiderseits von zueinander und zur Fahrzeuglängsrichtung parallelen Wangen 148, 149 bzw. 150, 151 begrenztes Maul 152, 153 bilden, in dem ein nach oben herausragendes Lagerschild 154, 155 entweder eingeschweißt oder mittels zueinander fluchtende Querbohrungen durchdringender Schraubverbindungen befestigt ist. Oberhalb seines Befestigungsbereiches weist jeder Lagerschild 154, 155 einen querdurchgehenden, beiderseits ein gewisses Maß überstehenden Lagerzapfen 156, 157 mit jeweils einem auf jeden überstehenden Zapfenteil befestigten Gummi-Metall-Lager 158, 159 bzw. 160, 161 auf.

Des Weiteren ist zur hinteren Lagerung des Low-Entry-Fahrerhauses 8 am hinteren Ende jedes der beiden Fahrerhaus-Bodenträger 130, 131 eine Lagerkonsole 162, 163 angeschweißt, die horizontal angeordnete Anschlussflansche 164, 165 aufweist, an der zwei zueinander und zur Fahrzeuglängsrichtung parallele Lagerschilde 166, 167 bzw. 168, 169 in entsprechendem Abstand nach unten abragend mittels Schraubverbindungen befestigt sind. An diesen Lagerschilden 166, 167 bzw. 168, 169 sind innen jeweils zwei Kupplungsbacken 170, 171 obenendig schwenkbar gelagert, die Teile eines Fahrerhaus-Verriegelungsmechanismus bilden und durch einen zugehörigen Betätigungsmechanismus 172 aus einer Verriegelungsposition, in der sie die Gummi-Metall-Lager 158, 159 bzw. 160, 161 außen größtenteils umfassen, in eine Entriegelungsstellung überführbar sind, die dann das Kippen des Low-Entry-Fahrerhauses 8 erlaubt.

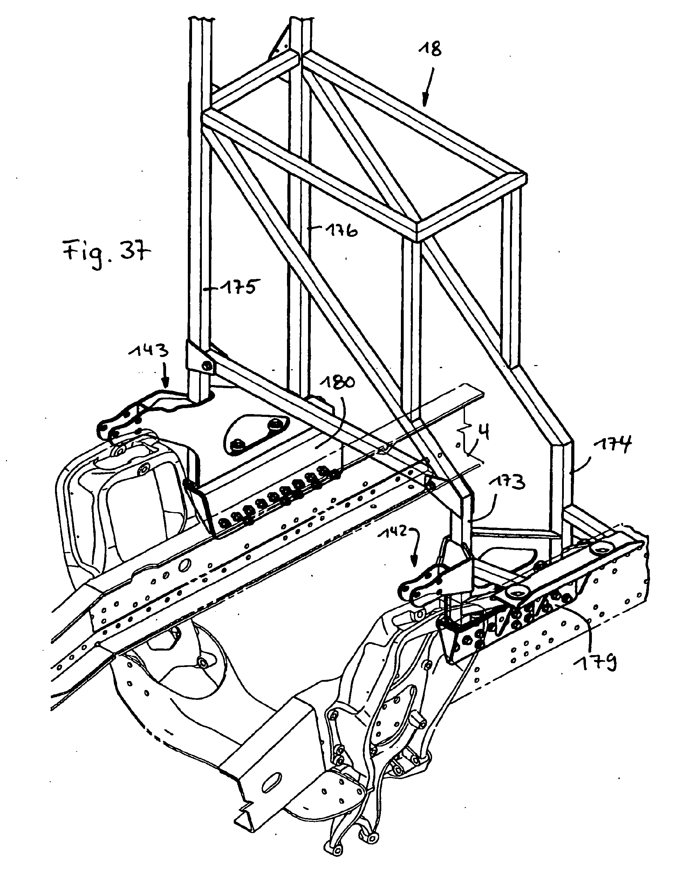

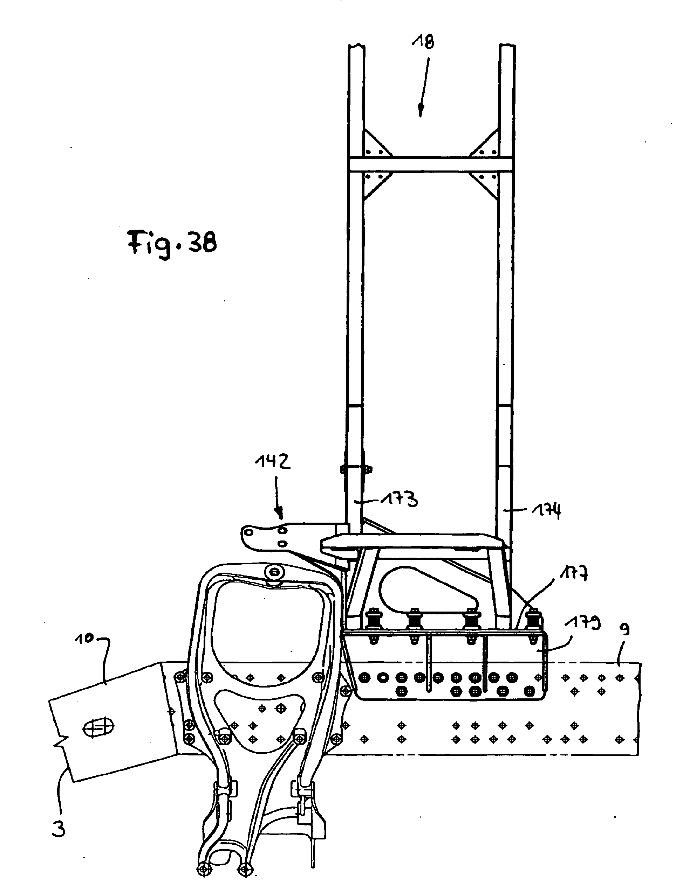

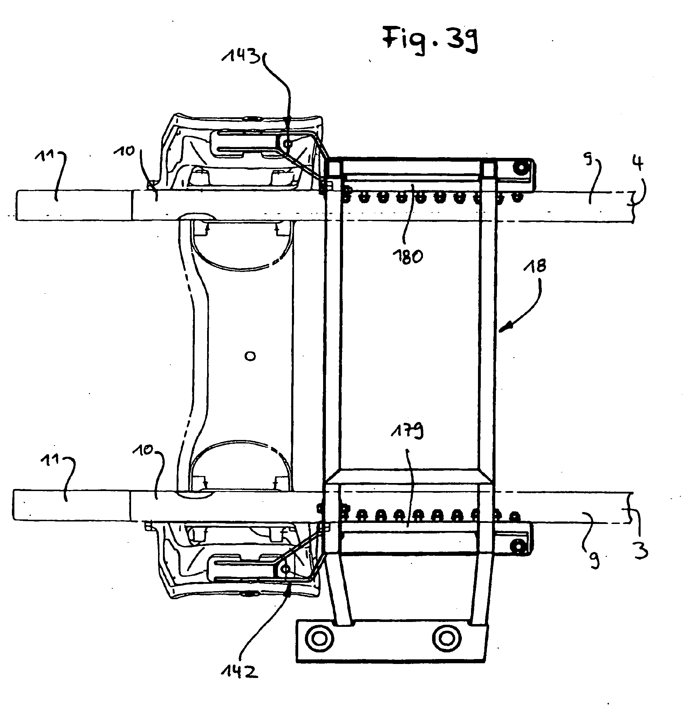

Wie aus den Figuren 37 bis 40 ersichtlich, erstrecken sich die beiden am Traggestell 18 des Aggregateträgers 17 angeordneten Lagerkonsolen 142, 143 mit ihren nach vorne abragenden Lagerschilden 144, 145 bzw. 146, 147 bis in einen Bereich nach vorne, der oberhalb des Achskörpers 22 der Verbundlenkerachse 21 gegeben ist. Jede der beiden Lagerkonsolen 142, 143 besteht aus mehreren einzeln hergestellten und dann zusammengeschweißten Blech-Stanz- und/oder Blech-Stanz-Biegeteilen. In bevorzugter Ausführung dient jede der beiden Konsolen 142, 143 gleichzeitig auch als Verbindungselement für die beiden je Seite des Traggestells 18 vorn und hinten angeordneten Tragsäulen 173, 174 bzw. 175, 176 und ist auch diesem Zusatzzweck entsprechend ausgebildet sowie mit diesen Tragsäulen nach Art einer versteifenden Strebe bzw. Wand durch Schweißen verbunden. In weiters bevorzugter Ausgestaltung bildet jede der beiden Konsolen 142, 143 gleichzeitig auch einen je Seite des Traggestells vorgesehenen Traggestell-Fuß. Hierzu weist jede der beiden Lagerkonsolen 142, 143 unten eine Bodenplatte 177, 178 auf, an der innen die je Traggestell-Seite vordere und hintere Tragsäule 173, 174 bzw. 175, 176 aufsteht und die ein Abstützplateau bildet, mit dem das Traggestell 18 entweder direkt auf einem Längsträger-Hinterteil 9 oder (wie aus Fig. 37, 38, 39 ersichtlich) auf einer am Längsträger-Hinterteil 9 angeschraubten oder angeschweißten Konsole 179, 180 lösbar über zueinander fluchtende Bohrungen durchdringende Schraubverbindungen befestigbar ist.

In bzw. am Traggestell 18 des Aggregateträgers 17 sind verschiedene Fahrzeugteile und Fahrzeugaggregate befestigt, die an anderen Stellen des Nutzfahrzeugs nicht unterbringbar sind, wie Kühler, Druckluftbehälter und weitere Teile der Druckluftanlage, Luftansaugleitungsabschnitte, Auspuffleitungsabschnitte und dergleichen.

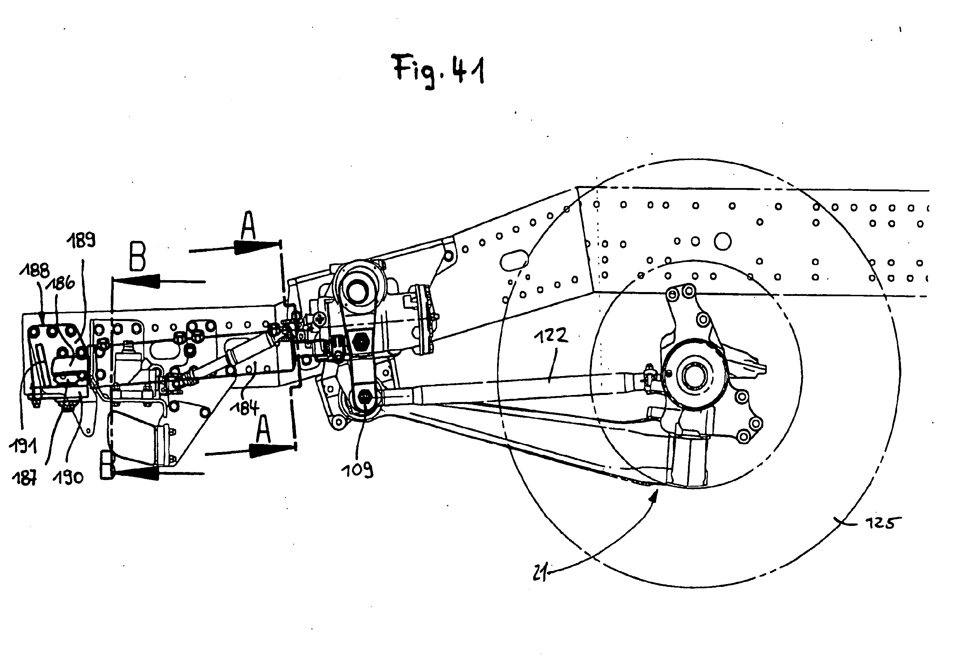

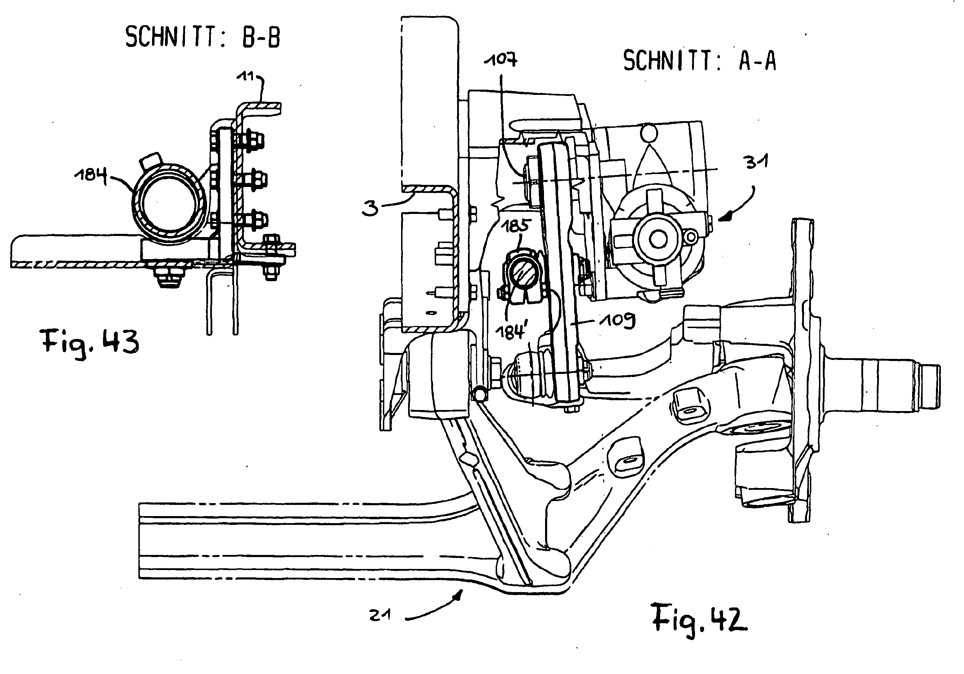

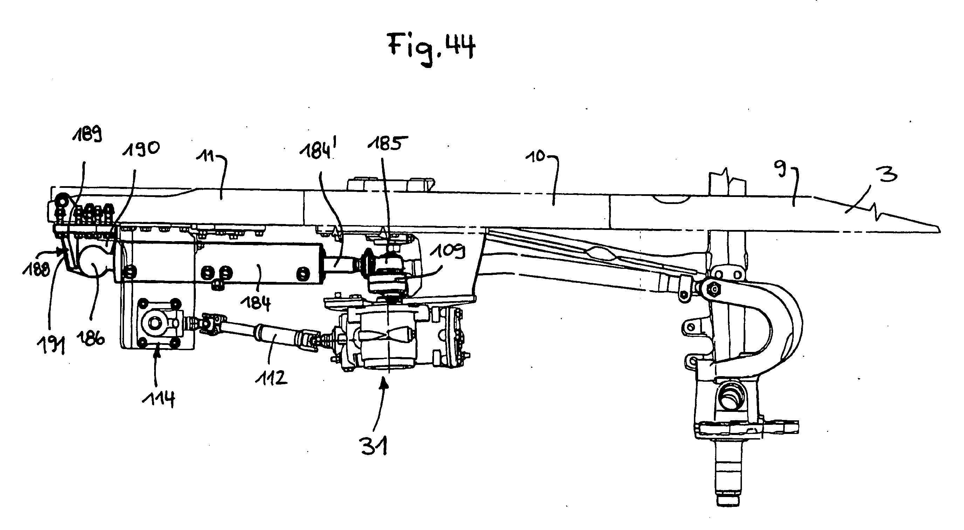

In dem Fall, wenn das Nutzfahrzeug eine lenkbare, der Hinterachse 6 beigestellte Vor- oder Nachlaufachse 7 aufweist, erfolgt die Lenkung der Räder 182, 183 der Vor- oder Nachlaufachse 7 über einen hydraulischen Nehmerzylinder 181 (siehe Fig. 2), der einenendes am Fahrgestell-Rahmen 2 und andernendes am Radträger eines der beiden Räder 182, 183 der Vor- oder Nachlaufachse 7 angelenkt und über Hydraulikleitungen mit einem Geberzylinder 184 verbunden ist. Dieser Geberzylinder 184 ist erfindungsgemäß in spezieller Lage am Nutzfahrzeug gegeben. Er ist mit seinem hinteren, z. B. am freien Ende seiner Kolbenstange 184' gegebenen Ende 185 am ausgangs des Lenkgetriebes 31 angeschlossenen Lenkhebel 109, dort etwa in der Mitte zwischen Ausgangswelle 107 und Kugelkopf 121, gelenkig angeschlossen (siehe Fig. 42) und erstreckt sich (wie gut aus Fig. 41 und 44 ersichtlich) außen längs des Längsträger-Vorderteils 11 (in an sich unüblicher Weise) entgegen der Fahrtrichtung nach vorne, wo er mit seinem vorderen Ende 186 an einem Lagerorgan 187 an einem Lagerbock 188 angelenkt ist, der außen am vorderen Ende des benachbarten Längsträger-Vorderteils 11 befestigt ist. Dieser Lagerbock 188 kann durch eine Schweiß- oder Gusskonstruktion gebildet sein. Er ist vorzugsweise am Längsträger-Vorderteil 11 über zueinander fluchtende Bohrungen durchdringende Schraubverbindungen befestigt, kann aber im Fall einer Schweißkonstruktion auch angeschweißt sein. Der Lagerbock 188 ist in sich abgewinkelt, hat eine Vertikalwange 189 für Anschluss am Längsträger-Vorderteil 11 und eine an der Vertikalwange 189 nach außen abragende Querwange 190, auf der das Lagerorgan 187, z. B. ein Kugelkopf, angeordnet ist, an dem der Geberzylinder 184 mit einer an seinem vorderen Ende 186 gegebenen Kugelkalotte angelenkt ist. Die Querwange 190 und Vertikalwange 189 sind vorzugsweise noch durch eine sie verbindende Rippe oder Strebe 191 versteift.

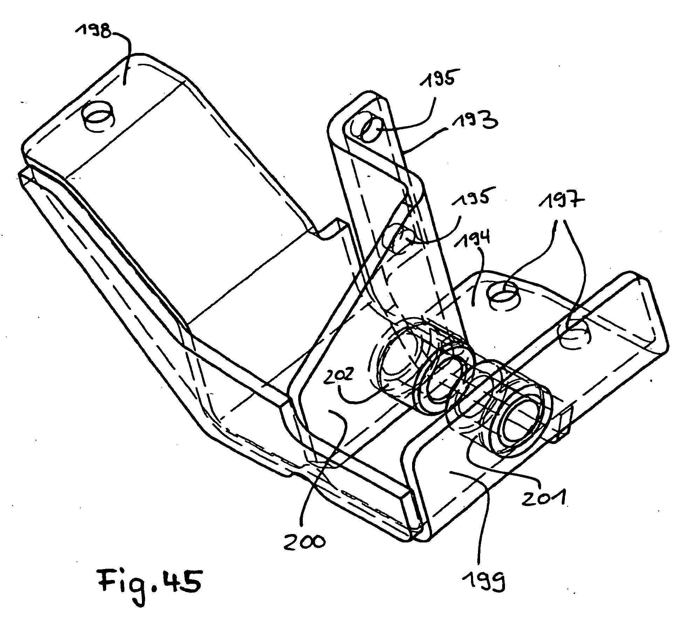

Ein Fahrerhaus-Kippzylinder (nicht dargestellt) ist mit seinem hinteren Ende an einem rahmenfesten Lagerbock 192 (siehe Fig. 45) angelenkt, erstreckt sich entgegen Fahrtrichtung nach vorn und ist mit seinem vorderen Ende an einem am Fahrerhaus-Boden 116 oder einem Fahrerhaus-Bodenträger 130, 131 befestigten Lagerbock angelenkt. Der rahmenfeste Lagerbock 192 kann entweder an einem Längsträger 3, 4 oder dem die beiden Längsträger 3, 4 verbindenden, die Vorderachs-Längslenker 23, 24 vorn lagernden Querträger 27 oder sowohl am Querträger 27 als auch einem Längsträger 3, 4 befestigt und hierfür entsprechend ausgebildet sein. Der zuletzt genannten Variante gehorcht der in Fig. 45 dargestellte Lagerbock 192. Dieser besteht entweder aus einem Blech-Stanz-Biegeteil oder mehreren vorgefertigten und zusammengeschweißten Blech-Stanz-Biegeteilen. Er weist einen vertikalen Anschlussflansch 193 auf, mit dem er am vorn überstehenden Teil des Flansches 97 bzw. 98 an der Quertraverse 92 von innen her anflanscht mittels zueinander fluchtende Schraubenlöcher 195 (siehe z. B. Fig. 7) durchdringender Schraubverbindungen befestigt ist. Ferner weist er eine Grundplatte 194 auf, mit der er an einem vorderen Auflageflansch 196 an der Quertraverse 92 aufgesetzt und dort ebenfalls mittels zueinander fluchtende Schraubenlöcher 197 durchdringender Schraubverbindungen befestigt ist. Mit einem weiteren, an der Grundplatte 194 seitlich außen und schräg nach oben führenden und obenendig horizontal nach außen abgewinkelten Arm 198 ist er oben am benachbarten Anschlusswinkel 90 bzw. 91 angeflanscht und dort mittels einer Schraubverbindung befestigt. Ferner weist der Lagerbock 192 an der Grundplatte 194 zwei vertikal abstehende, zueinander und zur Fahrzeuglängsrichtung parallele Wangen 199, 200 auf, an denen innenseitig zueinander fluchtende Lagerbuchsen 201, 202 angeschweißt sind, zwischen denen ein am hinteren Ende des Kippzylinders angeordnetes Lagerauge aufgenommen und dort über eine querdurchgehende Lagerschraube schwenkbar am Lagerbock 192 angelenkt ist.

Der Fahrerhaus-Kippzylinder ist über eine hydraulische Leitung mit einer hydraulischen Fahrerhaus-Kipppumpe verbunden, die beispielsweise an einem rahmenfesten Halter befestigt ist, der gleichzeitig auch als Halter für ein über einem Rad der Vorderachse angeordnetes Kotflügelteil 203 dient.

Nachfolgend ist auf die Ausgestaltung des erfindungsgemäßen Low-Entry-Fahrerhauses 8 näher eingegangen.

Der Boden 116 des Low-Entry-Fahrerhauses 8 ist (wie gut aus Fig. 25 ersichtlich) in seinem vorderen Bereich 116/1 eben und parallel zur Fahrbahn angeordnet, in seinem anschließenden mittleren Bereich zur Bildung eines Podestes für Fahrer- und Beifahrersitz-Befestigung stufenartig ausgebildet, wobei dieses Podest vorne durch einen vertikal oder leicht schräg nach hinten oben geneigten, mit dem vorderen Boden-Bereich 116/1 einen Winkel γ von ca. 120° einschließenden Bodenabschnitt 116/2 und oben durch einen parallel zur Fahrbahn verlaufenden erhöhten Bodenabschnitt 116/3 gebildet ist, an den sich ein hinterer Boden-Bereich 116/4 schräg steil nach oben gezogen anschließt. Dabei kann der hintere Boden-Bereich 116/4 in einer Ebene liegen oder aber ― wie im dargestellten Beispiel ― in sich gekrümmt sein. In diesem Fall schließt der untere, relativ kurze und ebene Abschnitt 116/41 des hinteren Boden-Bereichs 116/4 mit dem oberen Bodenabschnitt 116/3 im Podestbereich einen Winkel α von ca. 140° ein. Der sich an diesen unteren Abschnitt 116/41 anschließende obere ebene Abschnitt 116/42 steht gegenüber letzterem steiler und schließt mit diesem (116/41) einen Winkel β von etwa 155° ein.

Unabhängig von der jeweils festgelegten Form des Faherhaus-Bodens 116 folgen die beiden ihn stabilisierenden Bodenträger 130, 131, wie ebenfalls gut aus Fig. 25 ersichtlich, ange-schmiegt der Kontur des Bodens 116. Die Bodenträger 130, 131 haben im Querschnitt ein U-Profil oder Hut-Profil.

Die beiden Bodenträger 130, 131 verlaufen dabei ― in Draufsicht gesehen ― in ihren vorderen Abschnitten 130/1, 131/1 in einem Abstand, der kleiner als jener der Rahmen-Längsträger 3, 4 in deren Vorderteilen 11 ist, parallel zueinander, sind dann unter dem Bodenabschnitt 116/2 mit ihren Abschnitten 130/2, 131/2 parallel zueinander schräg hochgezogen, führen dann mit an diesen Abschnitten 130/2, 131/2 anschließenden, die Längsträger-Abschnitte 11 oben mit Abstand überquerenden Abschnitten 130/3, 131/3 quer zur Fahrtrichtung nach außen und gehen dann parallel zueinander und zur Fahrzeuglängsachse mit Abschnitten 130/4, 131/4 bis zum hinteren Ende des Bodens 116 weiter.

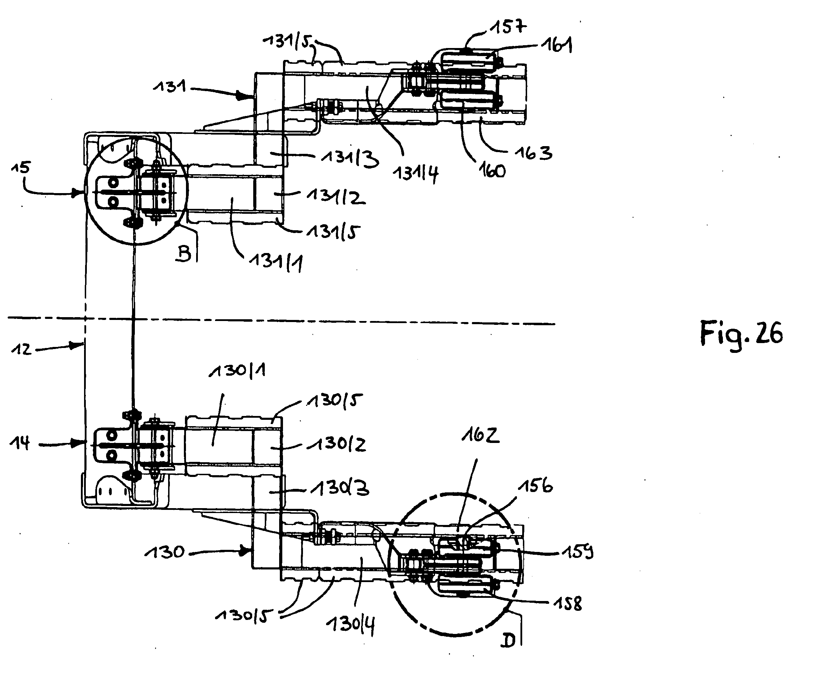

An verschiedenen Stellen sind die Bodenträger 130, 131, wenn im Querschnitt U-Profil aufweisend- wie gut aus Fig. 26 ersichtlich - durch angeschweißte, Hut- oder Winkel-Profil aufweisende Konsolen 130/5, 131/5 ergänzt, die die Auflagefläche für den Fahrerhaus-Boden 116 vergrößernde Anschlussflansche aufweisen, auf denen der Fahrerhaus-Boden 116 mittels Schraubverbindungen oder durch Anschweißen befestigt ist.

Der Boden 116 des Low-Entry-Fahrerhauses 8 weist in seinem podestartigen mittleren Bereich 116/2, 116/3 einen in Querrichtung gesehen neben einem den Fahrersitz tragenden Abschnitt unter einem einen Beifahrersitz tragenden Abschnitt einen Wanddurchbruch auf, der durch einen Deckel verschließbar ist und einen Zugang zu einem am Fahrerhausboden 116 in diesem Bereich angebauten Aufnahmekasten bildet, in dem Elektrik- und Elektronikkomponenten wie Fahrzeugführungsrechner und/oder andere Rechner, Zentralelektrik, Sicherungen, Diagnosesteckdosen etc., die nicht im Bereich des Armaturenbretts oder der Frontwand 209 des Nutzfahrzeugs unterbringbar sind, nun in entsprechenden Einschubschächten oder an Konsolen befestigt und die über einen unterbodenseitig verlegten Kabelstrang mit armaturenbrettseitig und fahrerhausfrontwandseitig vorhandenen Elektrik- und Armaturenkomponenten des Nutzfahrzeugs verbunden sind.

Wie aus Fig. 25 ersichtlich, ist der Boden 116 des Low-Entry-Fahrerhauses 8 mit seinem hinteren Bereich 116/4 um ein Maß in der Größenordnung von 500 bis 700 mm bis in eine Höhenlage über der Oberkante der hinteren Längsträger-Bereiche 9 hochgezogen. Dieser hintere Boden-Bereich 116/4 kann in der Mitte seiner Quererstreckung eine Einbuchtung aufweisen, in die das dahinter angeordnete, im Fahrgestell 2 zwischen den Rahmen Längsträgern 3, 4 gelagerte Antriebsaggregat 204 des Nutzfahrzeugs partiell eintaucht.

Generell gilt, dass das sich am hinteren Boden-Bereich 116/4 des Low-Entry-Fahrerhauses 8 anschließende, aus Verbrennungsmotor, Kupplung und Getriebe bestehende Antriebsaggregat 204 des Nutzfahrzeugs den Achskörper 22 der Verbundlenkerachse 21 sowie auch den diesen überdeckenden Querträger 30 im Bereich von dessen Quertraverse 50 oben mit geringem Abstand überquert und sich auch unterhalb des Aggregateträgers 17 nach hinten geführt erstreckt.

Das Low-Entry-Fahrerhaus 8 weist in seiner beifahrerseitigen Seitenwand 205 eine einflügelige, nach innen schwenkbare Beifahrertür 206 auf. Diese ist an einer oben und unten im Low-Entry-Fahrerhaus 8 drehbar gelagerten Stange an dort querabstehenden Armen befestigt und beabstandet hiervon zumindest in ihrem oberen Bereich mittels einer Kulissenrolle oder einem Kulissenstein in einer seitenwandintegralen Führungskulisse geführt. Das Öffnen und Schließen dieser Beifahrertür 206 erfolgt mittels eines Hydraulikzylinders, der einenendes an der Fahrerhaus-Seitenwand 205 oberhalb der Beifahrertür 206 und andernendes am freien Ende eines an der Stange abragenden Schwenkarmes angelenkt ist.

Die Beifahrertür ist vorzugsweise ebenso wie die Fahrertür 207 in der Seitenwand 208 des Low-Entry-Fahrerhauses 8 nahezu vollständig von oben nach unten reichend verglast, so dass eine hervorragende Sicht zu Bereichen seitlich neben dem Fahrerhaus-Bereich gewährleistet ist.

Das Low-Entry-Fahrerhaus 8 hat im Bereich zwischen seinem vorderen BodenAbschnitt 116/1 und dem Fahrerhaus-Dach 210 eine Höhe, die dort auch großen Personen ein aufrechtes Stehen und Begehen des Low-Entry-Fahrerhauses 8 ermöglicht.

Um den ästhetischen Gesamteindruck des Nutzfahrzeugs abzurunden, ist der hinter dem Low-Entry-Fahrerhaus 8 angeordnete Aggregateträger 17 beidseitig außen durch Sichtschutzblenden 211 abgedeckt, die ― wie aus Fig. 1 ersichtlich ― gestalterisch an das Design des Low-Entry-Fahrerhauses 8 angepasst sind, aber auch funktionale Bereiche wie Lufteinlass-Öffnungen oder -Lamellen und dergleichen aufweisen können.

## Patentansprüche

1. Nutzfahrzeug, insbesondere Müllsammel- oder sonstiges Kommunalfahrzeug, mit einem Low-Entry-Fahrerhaus (8), das kippbar an einem unter ihm speziell gestalteten Fahrgestell (1) gelagert ist, dessen beide Längsträger (3, 4) durch mehrere Querträger verbunden sind und das eine Vorderachse (5), eine Hinterachse (6) und gegebenenfalls eine dieser zugeordnete Vor- oder Nachlaufachse (7) aufweist, wobei jeder der beiden Längsträger (3, 4) aus einem sich in Normalhöhe parallel zur Fahrbahn erstreckenden Hinterteil (9), einem sich daran anschließenden schräg nach vorn unten geneigten Mittelteil (10) und einen sich daran auf tieferem Niveau anschließenden, entweder leicht geneigt oder parallel zur Fahrbahn nach vorn erstreckenden Vorderteil (11) besteht, und wobei über den Längsträger-Vorder- und Mittelteilen (10, 11) sowie dem vorderen Endabschnitt (16) der Längsträger-Hinterteile (9) ein speziell gestaltetes Low-Entry-Fahrerhaus (8) angeordnet ist, **dadurch gekennzeichnet, dass** die vorderen Enden der beiden Längsträger (3, 4) durch einen Frontend-Querträger (12) verbunden sind, an dem ein Stoßfänger (13) befestigt und das Low-Entry-Fahrerhaus (8) vorne über zwei Lageranordnungen (14, 15) kippbar angelenkt ist, dass hinter dem Low-Entry-Fahrerhaus (8) am Fahrgestell-Rahmen (2) ein Aggregateträger (17) angeordnet ist, der mit seinem Gestell (18) und dort vorgesehenen Lageranordnungen (19, 20) über dessen Normalfunktion hinausgehend auch die hintere Lagerstelle für das dort lösbar verriegelbare Low-Entry-Fahrerhaus (8) bildet, dass als Vorderachse (5) eine Verbundlenkerachse (21) verwendet ist, deren fest mit dem Achskörper (22) verbundene Längslenker (23, 24) an äußeren Lagerstellen (25, 26) eines die Längsträger-Mittelteile (10) in deren vorderen Bereich verbindenden Querträgers (27) angelenkt sind und deren beidseitige Feder-Dämpfer-Beine (28, 29) oben an einem Querträger (30), der die beiden Längsträger-Hinterteile (9) in deren vorderen Endabschnitt (16) verbindet und den Achskörper (22) überdeckt, sowie unten am Achskörper (22) abgestützt sind, und dass an den Längsträger-Mittel- und Vorderteilen (10, 11) sowie den diese verbindenden Querträgern (27, 30) verschiedene weitere Fahrzeugteile sowie -aggregate wie ein Lenkgetriebe (31), weitere Lenkungsteile (114, 184, 188), ein Unterfahrschutz (32), ein Fahrerhauskippzylinder etc. über jeweils eigene Halter oder Konsolen angebaut sind.

2. Nutzfahrzeug nach Anspruch 1, **dadurch gekennzeichnet, dass** die beiden Rahmen-Längsträger (3, 4) jeweils einen gleichen U-förmigen Querschnitt haben, wobei die Querschnittshöhe h im Hinterteil (9) über die ganze Länge gleich bleibend ist, im Mittelteil (10) vom Hinterteil (9) ausgehend zum Vorderteil (11) hin kontinuierlich auf ca. 0,7-0,8 h abnimmt und sich im Vorderteil (11) mit dieser reduzierten Höhe gleich bleibend fortsetzt.

3. Nutzfahrzeug nach einem der Ansprüche 1 und 2, **dadurch gekennzeichnet, dass** das Mittelteil (10) jedes Rahmen-Längsträgers (3, 4) mit seiner Oberkante (33) um einen Winkel α von ca. 20° zu der die Oberkante (34) der Hinterteile (9) einschließenden Ebene geneigt ist, und dass die die Oberkante (35) der Vorderteile (11) einschließende Ebene um einen Winkel β von ca. 2° bis 5° gegenüber der Horizontalebene nach vorn unten geneigt ist.

4. Nutzfahrzeug nach einem der vorhergehenden Ansprüche, **dadurch gekennzeichnet, dass** die Rahmen-Längsträger (3, 4) in Draufsicht gesehen im hinteren Abschnitt ihrer Hinterteile (9) bis vor die Achse(n) (6, 7) parallel verlaufen, in den anschießenden mittleren Abschnitten ihrer Hinterteile (9) schräg nach außen vorn auf einen größeren Abstand ausgestellt sind und sich dann mit gleichem Abstand in den anschließenden vorderen Abschnitten ihrer Hinterteile (9) sowie den anschließenden Mittelteilen (10) und Vorderteilen (11) parallel verlaufend fortsetzen.

5. Nutzfahrzeug nach einem der vorhergehenden Ansprüche, **dadurch gekennzeichnet, dass** das Hinterteil (9), Mittelteil (10) und Vorderteil (11) jedes Rahmen-Längsträgers (3, 4) jeweils einstückig in Form eines Blech-Stanz-Biegeteils hergestellt und dann diese drei vorgefertigten Teile jedes Rahmen-Längsträgers (3, 4) jeweils stumpf aneinander stoßend miteinander verschweißt sind.

6. Nutzfahrzeug nach einem der Ansprüche 1 bis 4, **dadurch gekennzeichnet, dass** das Vorder- und Mittelteil (11, 10) jedes Rahmen-Längsträgers (3, 4) durch ein einstückiges Blech-Stanz-Biegeteil gebildet ist, dass auch das Hinterteil (9) jedes Rahmen-Längsträgers (3, 4) durch ein einstückiges Blech-Stanz-Biegeteil gebildet ist, und dass diese beiden vorgefertigten Einzelteile jedes Rahmen-Längsträgers (3, 4) stumpf aneinander stoßend miteinander verschweißt sind.

7. Nutzfahrzeug nach einem der vorhergehenden Ansprüche, **dadurch gekennzeichnet, dass** die Rahmen-Längsträger (3, 4) durch innen angesetzte, insbesondere angeschweißte und die jeweiligen Stoßstellen bzw. Knickstellen der drei Teile (9, 10, 11) überquerende Einlageplatten (36) versteift sind.

8. Nutzfahrzeug nach Anspruch 1, **dadurch gekennzeichnet, dass** der den vorderen Rahmenabschluss bildende Frontend-Querträger (12) durch ein im Querschnitt U-förmiges Blech-Stanz-Biegeteil mit an den äußeren Enden angeschweißten Befestigungsflanschen (37) gebildet ist, sich zwischen den vorderen Enden der beiden Längsträger-Vorderteile (11) erstreckt und innen an deren Vertikalwänden über seine Befestigungsflansche (37) durch zueinander fluchtende Bohrungen durchdringende Schraubverbindungen befestigt ist.

9. Nutzfahrzeuge nach Anspruch 1, **dadurch gekennzeichnet, dass** der Unterfahrschutz (32) durch ein an seinen Enden (38, 39) geringfügig nach hinten gekrümmtes, dazwischen ansonsten gerades Profilrohr (40) gebildet ist, an dem Halter (41, 42) angebracht sind, mit denen es an zwei Lagerschilden (43, 44) befestigt ist, von denen jeder jeweils außen am Längsträger-Vorderteil (11) befestigt ist, wobei die jeweilige Befestigung vorzugsweise über zueinander fluchtende Bohrungen durchdringende Schraubverbindungen bewerkstelligt ist.

10. Nutzfahrzeug nach Anspruch 9, **dadurch gekennzeichnet, dass** sich das Profilrohr (40) des Unterfahrschutzes (32) räumlich beabstandet hinter dem Stoßfänger (13) in einer gegenüber der Unterseite (45) des Stoßfängers (13) geringeren Höhe parallel in Bezug auf die Fahrbahn erstreckt.

11. Nutzfahrzeug nach Anspruch 8, **dadurch gekennzeichnet, dass** der schalenförmige Stoßfänger (13) über innere, Abstand gebende Konsolen (46) an der Vertikalwand (47) des Frontend-Querträgers (12) lösbar mittels Schraubverbindungen befestigt und gegebenenfalls auch noch über Stützstreben an anderen Stellen des Frontend-Querträgers (12) abgestützt ist.

12. Nutzfahrzeug nach einem der Ansprüche 1 und 8 **dadurch gekennzeichnet, dass** im Bereich des Frontend-Querträgers (12), entweder direkt an diesem oder einem oder beiden der Längsträger-Vorderteile (11) innen wenigstens ein Anschlussbock (48) mit Gewindebohrung (49) für das Einschrauben einer Abschleppöse entweder durch Schraubverbindungen befestigt oder angeschweißt ist.

13. Nutzfahrzeug nach Anspruch 1, **dadurch gekennzeichnet, dass** der im Bereich der Vorderachse (5) angeordnete Querträger (30) von vorne gesehen U-förmig ausgebildet ist, mit seiner Quertraverse (50) den Achskörper (22) der Verbundlenkerachse (21) dachbildend und auch einen darunter querverlaufenden Panhardstab (51) überbrückt sowie aus drei Teilen zusammengesetzt ist, nämlich der Quertraverse (50) und zwei an deren Enden befestigten Federbeinhaltern (52, 53), wobei
- der U-förmige Querträger (30) mit jeweils einem Federbeinhalter (52, 53) außen an einem der beiden Rahmen-Längsträger (3, 4) befestigt ist,
- je Achsseite ein aus einer Luft- oder Schraubenfeder (54) und einem hierzu koaxialen Stoßdämpfer (55) bestehendes Federbein (28, 29) vorgesehen ist,
- jedes Federbein (28, 29) mit seinem oberen Ende (56) am zugehörigen Federbeinhalter (52, 53) und mit seinem unteren Ende (57) an einer Anlenkstelle (58) am Achskörper (22) angeschlossen ist,
dass die Verbundlenkerachse mit den freien Enden ihrer beiden Längslenker (23, 24) an den rahmenfesten Lagerstellen (25, 26) des Querträgers (27) angelenkt ist, und dass der zur Querführung der Verbundlenkerachse (21) vorgesehene Panhardstab (51) einenendes am Starrachskörper-Längslenker-Verbund und andernendes mittelbar am Rahmen angelenkt ist.

14. Nutzfahrzeug nach einem der Ansprüche 1 und 13, **dadurch gekennzeichnet, dass** die Verbundlenkerachse (21) selbststabilisierend ausgebildet ist, ihr demzufolge auch die Funktion eines das Wanken des Nutzfahrzeuges begrenzenden Stabilisators aufgeprägt ist, wobei
- die beiden Längslenker (23, 24) weit voneinander beabstandet jeweils vorzugsweise stirnseitig vorn am Starrachskörper (22) mittels Schrauben (59) kraft- und gegebenenfalls auch formschlüssig angeschlossen sind,
- der Starrachskörper (22) in einem geraden Mittelbereich zwischen den angeschlossenen Längslenkern (23, 24) definiert torsionsfähig ausgebildet ist,
- die beiden Längslenker (23, 24) in Vertikalrichtung gesehen vergleichsweise biegesteif, um ihre Längsachse aber begrenzt tordierbar ausgebildet und hinsichtlich ihrer Biegesteifigkeit sowie Torsionsfähigkeit auf den Gesamtstabilisierungseffekt in Verbindung mit dem torsionsfähigen Starrachskörper (22) abgestimmt sind durch entsprechende Bemessung und Formgebung der hierfür maßgeblichen Querschnitte.

15. Nutzfahrzeug nach einem der Ansprüche 13 und 14, **dadurch gekennzeichnet, dass** jedes der beiden Federbeine (28, 29) - von der Seite her gesehen - entweder vertikal oder leicht nach vorn oder hinten geneigt angeordnet ist und an seinem unteren Ende (57) mit einem Lagerauge über ein eingebautes Pratzengelenk (60) an der achskörperfesten Lagerstelle (58) angelenkt ist, die durch am Achskörper (22) so weit wie möglich zu jeweils einem achskörperendigen Radträger-Anschlusskopf (61, 62) hingerückt mit angeformte und entsprechend spanabhebend nachbearbeitete Vorsprünge (63, 64) gebildet ist.

16. Nutzfahrzeug nach einem der Ansprüche 13 bis 15, **dadurch gekennzeichnet, dass** jeder Federbeinhalter (52, 53) zumindest in seinem oberen Bereich nach Art einer nach außen offenen Halbschale (65, 66) ausgebildet ist, von deren Begrenzungswand (67, 68) das zugehörige Federbein (28, 29) im Bereich seiner Luft- oder Schraubenfeder (54) radial außen mit geringem Abstand von innen her partiell überdeckt wird und an deren Kopfplatte (69, 70) das jeweilige Federbein (28, 29) obenendig abgestützt und mittels eines Pratzengelenks (71) befestigt ist.

17. Nutzfahrzeug nach Anspruch 16, **dadurch gekennzeichnet, dass** jeder Federbeinhalter (52, 53) etwa in seinem mittleren Höhenbereich einen außenseitig an der Halbschale (65, 66) anschließenden Anschlussflansch (72, 73) mit mehreren Schraubenlöchern aufweist, dass dieser Anschlussflansch (72, 73) etwa im Schubmittelpunkt gegeben ist, und dass jeder Federbeinhalter (52, 53) mit seinem Anschlussflansch (72, 73) über die Schraubenlöcher und hierzu längsträgerintern fluchtende Löcher durchdringende Schraubverbindungen am jeweiligen Rahmen-Längsträger (3, 4) angeflanscht befestigt ist.

18. Nutzfahrzeug nach einem der Ansprüche 13 bis 17, **dadurch gekennzeichnet, dass** die beiden Federbeinhalter (52, 53) jeweils durch ein Stahlgussteil realisiert sind, das nach dem Abguss an erforderlichen Stellen spanabhebend nach- bzw. endbearbeitet ist und an geeigneten Stellen Durchbrüche (74) zur Gewichtsreduzierung aufweist, und dass die ebenfalls als Teil des U-förmigen Querträgers (30) fungierende Quertraverse (50) durch ein im Querschnitt hutförmiges Blechpressteil, gegebenenfalls auch Schmiede- oder Gussteil gebildet ist, das einen geraden Mittelabschnitt und beiderseits desselben je einen schräg hochgezogenen Endabschnitt (75, 76) sowie gegebenenfalls in der Mitte seines Obergurtes einen oder mehrere zur Gewichtsreduzierung dienende Durchbrüche aufweist.

19. Nutzfahrzeug nach Anspruch 18, **dadurch gekennzeichnet, dass** die äußeren Enden der Quertraverse (50) nach Art eines Maules ausgebildet sind, mit dem der anzuschließende Federbeinhalter (52, 53) außen übergriffen wird, wobei jedes Maul an der Quertraverse (50) durch einen Ausschnitt (77, 78) in dessen Obergurt und beiderseits jedes Ausschnitts (77, 78) verbleibende Wangen (79, 80; 81, 82) gebildet ist, denen am jeweiligen Federbeinhalter (52, 53) vorn und hinten zugehörige Anlageflächen zugeordnet sind, in deren Bereich die Quertraverse (50) mit ihren Wangen abgestützt und dort über zueinander fluchtende Bohrungen durchdringende Schraubverbindungen mit dem Federbeinhalter (52, 53) fest verbunden ist.

20. Nutzfahrzeug nach einem der Ansprüche 13 bis 19 **dadurch gekennzeichnet, dass** einem der beiden Federbeinhalter (52, 53) über seine eigentliche Funktion hinaus auch noch jene Funktion aufgeprägt ist, nämlich das Abstütz-, Halte-, und Anlenkorgan für das eine, fahrgestellseitige Ende des Panhardstabes (51) zu bilden, wozu dieser Federbeinhalter nach unten durch ein Lagerschild (83) verlängert ist, an dessen unterem Ende ein Maul (84) und beiderseits desselben je ein Lagerauge (85) ausgebildet sind, an denen der Panhardstab (51) über ein in seinem einenendigen Lagerauge (86) eingebautes Pratzengelenk (89) durch Schraubverbindungen befestigt ist, und dass der Panhardstab (51) mit seinem anderen, gegenüberliegenden Ende über ein in das dortige Lagerauge (88) eingebautes Pratzengelenk (89) an geeigneter Stelle des Starrachskörper-Längslenker-Verbundes angelenkt ist, bei der es sich beispielsweise um einen Lagerbock handelt, der entweder am Achskörper (22) oder einem der beiden Längslenker (23, 24) entweder mitangeformt oder dort angebaut ist und an dem eine entsprechende Anlagefläche und Gewindebohrungen für die Anschraubung des Pratzengelenkes (89) mittels Schrauben vorgesehen sind.

21. Nutzfahrzeug nach einem der Ansprüche 1 und 13 bis 20, **dadurch gekennzeichnet, dass** der Querträger (27), an dem die Längslenker (23, 24) der Verbundlenkerachse (21) angelenkt sind, aus drei durch Verschraubungen miteinander verbundenen Teilen besteht, nämlich einem linken und einem rechten Anschlusswinkel (90, 91) sowie einer Quertraverse (92), wobei jeder Anschlusswinkel (90, 91) einen Quersteg (93), einen außen daran nach oben abragenden Vertikalsteg (94) sowie eine innere und äußere, am Quersteg (93) nach unten abragend angeordnete Lagerwange (95, 96) aufweist, wobei jeder Anschlusswinkel (90, 91) mit seinem Quersteg (93) und dem äußeren Vertikalsteg (94) seitlich und unten am Längsträger-Mittelteil (10) anliegend mittels zu einander fluchtende Bohrungen durchdringender Schraubverbindungen befestigt ist, dass zwischen den inneren Lagerwangen (95) der beiden Anschlusswinkel (90, 91) die stirnseitig Anschlussflansche (97, 98) aufweisende Quertraverse (92) aufgenommen und mit diesen mittels fluchtenden Bohrungen durchdringender Schraubverbindungen verbunden ist, und dass zwischen den beiden am Quersteg (93) nach unten abragenden Lagerwangen (95, 96) jedes Anschlusswinkels (90, 91) das vordere, als Lagerauge mit eingebauten Gummi-Metall-Lager ausgebildete Ende (99) jeweils eines Längslenkers (23, 24) quergeführt aufgenommen und dort mittels einer zueinander fluchtende Querbohrungen durchdringenden Lagerschraube (100) angelenkt ist.

22. Nutzfahrzeug nach Anspruch 1, **dadurch gekennzeichnet, dass** das Lenkgetriebe (31) am vorderen Endbereich des Längsträger-Mittelteils (10) in einer leicht nach vorn gekippten Lage auf einer speziell gestalteten Konsole (101) befestigt angeordnet ist.

23. Nutzfahrzeug nach den Ansprüchen 21 und 22, **dadurch gekennzeichnet, dass** die das Lenkgetriebe (31) tragende Konsole (101) den Anschlusswinkel (90) des Querträgers (27) räumlich übergreift und beiderseits desselben außen am Längsträger-Mittelteil (10) mittels zueinander fluchtende Bohrungen durchdringender Schraubverbindungen angeflanscht befestigt ist.

24. Nutzfahrzeug nach einem der Ansprüche 22 und 23, **dadurch gekennzeichnet, dass** die Lenkgetriebe-Konsole(101) aus einer inneren Platte (102) und einer zu dieser beabstandet und zumindest annähernd parallelen äußeren Platte (104) sowie einer die beiden Platten (102, 104) oben verbindenden Kopfplatte (105) besteht, dass die innere Platte (102) eine Aussparung (103) für den Durchtritt des Anschlusswinkels (90) des Querträgers (27) sowie Querdurchgangsbohrungen für die Durchführung von Schrauben zur Befestigung an der Außenseite des Längsträger-Mittelteils (10) aufweist, dass die äußere Platte (104) mehrere Querdurchgangsbohrungen für die Befestigung des Lenkgetriebes (31) mittels Schraubverbindungen sowie eine Aussparung (106) für den Durchtritt der Ausgangswelle (107) des Lenkgetriebes (31) in den Innenraum der Konsole (101) aufweist, und dass sich die Aussparung (106) in einer Aussparung (108) in der Kopfplatte (105) fortsetzt, die ein partielles Eintauchen eines an der Lenkgetriebe-Ausgangswelle (107) befestigten Lenkhebels (109) ermöglicht.

25. Nutzfahrzeug nach Anspruch 24, **dadurch gekennzeichnet, dass** die Konsole (101) innen durch sich zwischen den Platten (102, 104) erstreckende Stegwände (110) versteift und entweder durch eine Schweißkonstruktion oder eine Gusskonstruktion realisiert ist.

26. Nutzfahrzeug nach einem der Ansprüche 22 bis 25 **dadurch gekennzeichnet, dass** die vorne am Lenkgetriebe (31) gegebene Eingangswelle (111) über eine nach vorne führende Gelenkwelle (112) mit der Ausgangswelle (113) eines Winkelgetriebes (114) und über dessen Eingangswelle (115) mit der Lenksäule des Nutzfahrzeugs in Verbindung steht, die aus dem Low-Entry-Fahrerhaus (8) durch eine Öffnung in dessen Boden (116) heraus zur Eingangswelle (115) des Winkelgetriebes (114) hingeführt ist, wobei das Winkelgetriebe (114) an einer am vorderen Bereich des Längsträger-Vorderteils (11) seitlich außen befestigten Konsole (117) angebaut ist.

27. Nutzfahrzeug nach einem der Ansprüche 24 bis 26, **dadurch gekennzeichnet, dass** der Ausgang des seitlich außen an der Konsole (101) angebauten Lenkgetriebes (31) innen im geschützten Überdeckungsbereich der Konsole (101) gegeben ist, und dass der an der Ausgangswelle (107) des Lenkgetriebes (31) angeschlossene Lenkhebel (109) über eine an seinem unteren freien Ende gelenkig angeschlossene Lenkschubstange (122) auf einen Lenkhebel (123) am Radträger (124) eines Rades (125) der Vorderachse (5) wirkt.

28. Nutzfahrzeug nach Anspruch 1, **dadurch gekennzeichnet, dass** das Low-Entry-Fahrerhaus (8) so lange ausgebildet und in Relation zur Vorderachse (5) angeordnet ist, dass die Drehachsen der Räder (125, 127) der Vorderachse (5) in einer Vertikatquerebene liegen, die die Rückwand (28) des Low-Entry-Fahrerhauses (8) einschließt oder benachbart vor oder hinter dieser steht.

29. Nutzfahrzeug nach Anspruch 1, **dadurch gekennzeichnet, dass** die beiden zur vorderen Lagerung des Low-Entry-Fahrerhauses (8) vorgesehenen Lageranordnungen (14, 15) jeweils eine am vorderen Ende eines der beiden Fahrerhaus-Bodenträger (130, 131) befestigte Konsole (129), die zwei an einer Anschlussplatte (132) parallel beabstandet abragende Lagerwangen (133, 134) aufweist, und zwei abgewinkelte Tragböcke (135) vorgesehen sind, welche letztere mit ihrer Winkelquerplatte (136) und Winkelvertikalplatte (137) an der Oberseite und Vorderseite des Frontend-Querträgers (12) anliegend vorzugsweise über zueinander fluchtende Bohrungen durchdringende Schraubverbindungen befestigt sind und in einem oberseitigen Lagerauge (138) ein eingebautes Gummi-Metall-Lager (139) aufweisen, das außen beidseitig von den Lagerwangen (133, 134) der zugehörigen Konsole (129) übergriffen wird, und dass die Verbindung zwischen einer Konsole (129) und dem zugehörigen Tragbock (135) über eine die Zentralbohrung im Gummi-Metall-Lager (139) sowie hierzu fluchtende Bohrungen in den Konsolen-Lagerwangen (133, 134) durchdringende Lagerschraube (140) hergestellt ist.

30. Nutzfahrzeug nach Anspruch 29, **dadurch gekennzeichnet, dass** jede der beiden gleich ausgebildeten Konsolen (129) in jenen Bereich, in dem sie am zugehörigen Fahrerhaus-Bodenträger (130, 131) angeschlossen, insbesondere angeschweißt ist, einen U-förmigen Querschnitt hat und in diesen Bereich den Bodenträger (130, 131) außen formschlüssig übergreift, und dass die Lagerwangen (133, 134) dieser Konsolen (129) über den U-Profil-Bereich hinaus nach vorne soweit verlängert sind, dass das Lagerauge (138) am zugehörigen Tragbock (135) vollständig überdeckt ist.

31. Nutzfahrzeug nach Anspruch 1, **dadurch gekennzeichnet, dass** zur hinteren Lagerung des Low-Entry-Fahrerhauses (8) am Traggestell (18) des Aggregateträgers (17) zwei Lager-Konsolen (142, 143) mit jeweils zwei nach vorne abragenden Lagerschilden (144, 145 bzw. 146, 147) vorgesehen sind, deren frei nach vorne auskragenden Endbereiche ein beiderseits von zueinander und zur Fahrzeuglängsrichtung parallelen Wangen (148, 149 bzw. 150 151) begrenztes Maul (152, 153) bilden, in dem ein nach oben herausragendes Lagerschild (154, 155) eingeschweißt oder mittels zueinander fluchtende Querbohrungen durchdringender Schraubverbindungen befestigt ist, welcher Lagerschild (154, 155) oberhalb seines Befestigungsbereiches einen zentral querdurchgehenden, beiderseits ein gewisses Maß überstehenden Lagerzapfen (156, 157) mit jeweils einem auf jedem überstehenden Zapfenteil befestigten Gummi-Metall-Lager (158, 159; 160, 161) aufweist.

32. Nutzfahrzeug nach Anspruch 31, **dadurch gekennzeichnet, dass** zur hinteren Lagerung des Low-Entry-Fahrerhauses (8) des weiteren am hinteren Ende jedes der beiden Fahrerhaus-Bodenträger (130, 131) eine Lagerkonsole (162, 163) angeschweißt ist, die horizontal angeordnete Anschlussflansche (164, 165) aufweist, an denen zwei zueinander und zur Fahrzeuglängsrichtung parallele Lagerschilde (166, 167 bzw. 168, 169) in entsprechendem Abstand nach unten abragend mittels Schraubverbindungen befestigt sind, an denen innen jeweils zwei Kupplungsbacken (170, 171) obenendig schwenkbar gelagert sind, die Teile eines Fahrerhaus-Verriegelungsmechanismus bilden und durch einen zugehörigen Betätigungsmechanismus (172) aus Verriegelungsposition, in der sie die Gummi-Metall-Lager (158, 159 bzw. 160, 161) außen größtenteils umfassen, in eine Entriegelungsstellung überführbar sind, die dann das Kippen des Low-Entry-Fahrerhauses (8) erlaubt.

33. Nutzfahrzeug nach Anspruch 31, **dadurch gekennzeichnet, dass** sich die beiden am Traggestell (18) des Aggregateträgers (17) angeordneten Konsolen (142, 143) mit ihren nach vorne abragenden, zur hinteren Fahrerhauslagerung dienenden Lagerschilden (144, 145; 146, 147) bis in einen Bereich nach vorne erstrecken, der oberhalb des Achskörpers (22) der Verbundlenkerachse (21) gegeben ist.

34. Nutzfahrzeug nach einem der Ansprüche 31 bis 33, **dadurch gekennzeichnet, dass** jede am Traggestell (18) des Aggregateträgers (17) angeordnete, zur hinteren Fahrerhauslagerung dienende Laderkonsole (142, 143) aus mehreren einzeln hergestellten und dann zusammengeschweißten Blech-Stanz- und/oder Blech-Stanz-Biegeteilen besteht.

35. Nutzfahrzeug nach Anspruch 34, **dadurch gekennzeichnet, dass** jede der beiden am Traggestell (18) des Aggregateträgers (17) angeordneten, zur hinteren Fahrerhauslagerung dienenden Lagerkonsolen (142, 143) gleichzeitig auch als Verbindungselement für die beiden je Seite des Traggestells (18) vorn und hinten angeordneten Tragsäulen (173, 174; 175, 176) fungierend ausgebildet ist und mit diesen Tragsäulen nach Art einer versteifenden Strebe bzw. Wand durch Schweißen verbunden ist.

36. Nutzfahrzeug nach Anspruch 35, **dadurch gekennzeichnet, dass** jede der beiden Lagerkonsolen (142, 143) gleichzeitig auch einen je Seite des Traggestells (18) vorgesehenen Traggestell-Fuß bildet und hierzu unten eine Bodenplatte (177, 178) aufweist, an der innen die je Seite hintere und vordere Tragsäule (173, 174; 175, 176) des Traggestells (18) aufsteht und die ein Abstützplateau bildet, mit dem das Traggestell (18) entweder direkt auf einem Längsträger-Hinterteil (9) oder auf einer am Längsträger-Hinterteil (9) angeschraubten oder angeschweißten Konsole (179, 180) lösbar über zueinander fluchtende Bohrungen durchdringende Schraubverbindungen befestigt ist.

37. Nutzfahrzeug nach einem der vorhergehenden Ansprüche, **dadurch gekennzeichnet, dass** im Traggestell.(18) des Aggragateträgers (17) verschiedene Fahrzeugaggregate und -teile wie Kühler, Druckluftbehälter und weitere Teile der Druckluftanlage, Luftansaugleitungsabschnitte, Auspuffleitungsabschnitte und dergleichen mittelbar befestigt sind.

38. Nutzfahrzeug nach Anspruch 1, **dadurch gekennzeichnet, dass** dann, wenn dieses eine lenkbare, der Hinterachse (6) beigestellte Vor- oder Nachlaufachse (7) aufweist, die Lenkung von deren Rädern (182, 183) über einen hydraulischen Nehmerzylinder (181) erfolgt, der einenendes am Fahrgestell-Rahmen (3, 4) und andernendes am Radträger eines der beiden Räder (182, 183) der Vor- oder Nachlaufachse (7) angelenkt und über Hydraulikleitungen mit einem Geberzylinder (184) verbunden ist, der mit seinem hinteren Ende (185) etwa mittig am ausgangs des Lenkgetriebes (31) angeschlossenen Lenkhebel (109) angelenkt ist und sich außen längs des Längsträger-Vorderteils (11) entgegen Fahrtrichtung nach vorne erstreckt und mit seinem vorderen Ende (186) an einem Lagerorgan (187) an einen Lagerbock (188) angelenkt ist, der außen am vorderen Ende des Längsträger-Vorderteils (11) befestigt ist.

39. Nutzfahrzeug nach Anspruch 38, **dadurch gekennzeichnet, dass** der Lagerbock (188) in sich abgewinkelt ist, mit seiner Vertikalwange (189) außen am Längsträger-Vorteil (11) angeschweißt oder mittels mehrerer zueinander fluchtende Bohrungen durchdringender Schraubverbindungen befestigt ist und oben auf seiner Querwange (190) als Lagerorgan (187) z. B. einen Kugelkopf trägt, an dem der Geberzylinder (184) mit einer an seinem vorderen Ende (186) gegebenen Kugelkalotte angelenkt ist.

40. Nutzfahrzeug nach Anspruch 1, **dadurch gekennzeichnet, dass** ein Fahrerhaus-Kippzylinder mit seinem hinteren Ende an einem rahmenfesten Lagerbock (192) angelenkt ist, sich entgegen Fahrtrichtung nach vorne erstreckt und mit seinem vorderen Ende an einem am Fahrerhaus-Boden (116) oder einem Fahrerhaus-Bodenträger (130, 131) befestigten Lagerbock angelenkt ist, wobei der rahmenfeste Lagerbock (192) entweder an einem Längsträger (3, 4) oder dem die beiden Längsträger (3, 4) verbindenden, die Vorderachs-Längslenker (23, 24) vorn lagernden Querträger (27) oder sowohl an diesem Querträger (27) als auch einem Längsträger (3, 4) befestigt ist.

41. Nutzfahrzeug nach Anspruch 40, **dadurch gekennzeichnet, dass** der Lagerbock (192) aus einem Blech-Stanz-Biegeteil oder mehreren vorgefertigten und zusammengeschweißten Blech-Stanz-Biegeteilen besteht und wenigstens einen Anschlussflansch (193, 194) für seine Befestigung vorne am Querträger (27) und/oder einem der Anschlusswinkel (90, 91) und zwei zueinander und zur Fahrzeuglängsrichtung parallele Wangen (199, 200) aufweist, zwischen denen ein am hinteren Ende des Kippzylinders angeordnetes Lagerauge aufgenommen und dort über eine zueinander fluchtende Bohrungen durchdringende Lagerschraube schwenkbar angelenkt ist.

42. Nutzfahrzeug nach den Ansprüchen 40 und 41, **dadurch gekennzeichnet, dass** der Fahrerhaus-Kippzylinder über eine hydraulische Leitung mit einer hydraulischen Fahrerhauskipp-Pumpe verbunden ist, die an einem rahmenfesten Halter befestigt ist, der gleichzeitig auch als Halter für ein über einem Rad der Vorderachse (5) angeordnetes Kotflügelteil (203) dient.

43. Nutzfahrzeug nach Anspruch 1, **dadurch gekennzeichnet, dass** der Boden (116) des Low-Entry-Fahrerhauses (8) in seinem vorderen Bereich (116/1) eben ausgebildet und parallel zur Fahrbahn angeordnet ist, in seinem anschließenden mittleren Bereich zur Bildung eines Podestes für Fahrer- und Beifahrersitz-Befestigung stufenartig ausgebildet ist, wobei dieses Podest vorne durch einen vertikal oder leicht schräg nach hinten oben geneigten, mit dem vorderen Boden-Bereich (116/1) einen Winkel γ von ca. 120° einschließenden Bodenabschnitt (116/2) und oben durch einen parallel zur Fahrbahn verlaufenden Bodenabschnitt (116/3) gebildet ist, an den sich ein hinterer Boden-Bereich (116/4) schräg und steil nach oben gezogen anschließt.

44. Nutzfahrzeug nach Anspruch 43, **dadurch gekennzeichnet, dass** der hintere Boden-Bereich (116/4) in sich gekrümmt ist, wobei dessen unterer relativ kurzer ebener Abschnitt (116/41) mit dem oberen Bodenabschnitt (116/3) im Podest-Bereich einen Winkel a von etwa 140° einschließt und der sich an den unteren Abschnitt (116/41) anschließende obere Abschnitt (116/42) steiler steht und mit dem unteren Abschnitt (116/41) einen Winkel β von etwa 155° einschießt.

45. Nutzfahrzeug nach einem der Ansprüche 43 und 44, **dadurch gekennzeichnet, dass** die Bodenträger (130, 131) der vorgegebenen Form des Fahrerhaus-Bodens (116) an diesen angeschmiegt folgen und im Querschnitt ein U-Profil oder Hut-Profil aufweisen.

46. Nutzfahrzeug nach Anspruch 45, **dadurch gekennzeichnet, dass** die Bodenträger (130, 131) - in Draufsicht gesehen - in vorderen Abschnitten (130/1, 131/1) in einem Abstand, der kleiner als jener der beiden Rahmen-Längsträger (3, 4) ist, parallel zueinander verlaufen, dann unter dem Bodenabschnitt (116/2) mit ihren Abschnitten (130/2, 131/2) parallel zueinander schräg hochgezogen sind, dann mit an diesen Abschnitten (130/1, 131/2) anschließenden, die Längsträger-Vorderteile (11) überquerenden Abschnitten (130/3, 131/3) quer zur Fahrtrichtung nach außen führen und dann mit parallel zueinander und zur Fahrzeuglängsachse verlaufenden Abschnitten (130/4, 131/4) bis zum hinteren Ende des Bodens (116) weiterführen.

47. Nutzfahrzeug nach einem der Ansprüche 45 und 46, **dadurch gekennzeichnet, dass** die Bodenträger (130, 131) an verschiedenen Stellen durch Hut- oder Winkel-Profil aufweisende, angeschweißte Konsolen (130/5, 131/5) ergänzt sind, die die Auflagefläche für den Fahrerhausboden (116) vergrößernde Anschlussflansche aufweisen, auf denen der Fahrerhausboden (116) mittels Schraubverbindungen oder durch Anschweißen befestigt ist.

48. Nutzfahrzeug nach einem der Ansprüche 43 bis 47, **dadurch gekennzeichnet, dass** der hintere Boden-Bereich (116/4) um ein Maß in der Größenordnung von ca. 500 bis 700 mm bis in eine Höhenlage über der Oberkante der hinteren Längsträger-Bereiche (9) hochgezogen ist.

49. Nutzfahrzeug nach Anspruch 48, **dadurch gekennzeichnet, dass** der hintere Boden-Bereich (116/4) in der Mitte seiner Quererstreckung eine Einbuchtung aufweist, in die das dahinter angeordnete, im Fahrgestell (2) zwischen den Rahmen-Längsträgern (3, 4) gelagerte Antriebsaggregat (204) des Nutzfahrzeugs partiell eintaucht.

50. Nutzfahrzeug nach einem der Ansprüche 43 bis 49, **dadurch gekennzeichnet, dass** das sich am hinteren Boden-Bereich (116/4) des Low-Entry-Fahrerhauses (8) anschließende, aus Verbrennungsmotor, Kupplung und Getriebe bestehende Antriebsaggregat (204) des Nutzfahrzeugs den Achskörper (22) der Verbundlenkerachse (21) sowie auch den diesen überdeckenden Querträger (30) im Bereich von dessen Quertraverse (50) oben mit geringem Abstand überquert und sich auch unterhalb des Aggregateträgers (17) nach hinten geführt erstreckt.

51. Nutzfahrzeug nach einem der Ansprüche 43 bis 47, **dadurch gekennzeichnet, dass** der Boden (116) des Low-Entry-Fahrerhauses (8) in seinem podestartigen mittleren Bereich (116/2, 116/3) einen in Querrichtung gesehen neben einem den Fahrersitz tragenden Abschnitt unter einem einen Beifahrersitz tragenden Abschnitt einen Wanddurchbruch aufweist, der durch einen Deckel verschließbar ist und einem Zugang zu einem am Fahrerhausboden (116) in diesem Bereich angebauten Aufnahmekasten für Elektrik- und Elektronikkomponenten wie Fahrzeugführungsrechner und/oder andere Rechner, Zentralelektrik, Sicherungen, Diagnosesteckdose etc. bildet, die nicht im Bereich des Armaturenbretts oder der Frontwand (209) des Nutzfahrzeugs unterbringbar sind, die nun in entsprechenden Einschubschächten oder an Konsolen im Aufnahmekasten befestigt sind und die über einen unterbodenseitig verlegten Kabelstrang mit armaturenbrettseitig und fahrerhausfrontwandseitig vorhandenen Elektrik- und Armaturenkomponenten des Nutzfahrzeugs verbunden sind.

52. Nutzfahrzeug nach Anspruch 1, **dadurch gekennzeichnet, dass** das Low-Entry-Fahrerhaus (8) in seiner beifahrerseitigen Seitenwand (205) eine einflügelige, nach innen schwenkbare Beifahrertür (206) aufweist, die an einer oben und unten im Low-Entry-Fahrerhaus (8) drehbar gelagerten Stange an dort querabstehenden Armen befestigt sowie beabstandet hiervon zumindest in ihrem oberen Bereich mittels einer Kulissenrolle oder einem Kulissenstein in einer seitenwandintegralen Führungskulisse geführt ist und deren Öffnung und Schließung mittels eines Hydraulikzylinders erfolgt, der einenendes an der Fahrerhaus-Seitenwand (205) und andererseits am freien Ende eines an der Stange abragenden Schwenkarmes angelenkt ist.

## Claims

1. Commercial vehicle, especially a refuse collector or other utility vehicle, with a low-entry driver's cab (8) mounted so that it tilts on a specially designed chassis (1) below the cab (8), which chassis (1) has two longitudinal members (3, 4) connected by several cross members and features a front axle (5), a rear axle (6) and, where applicable, an assigned leading or trailing axle (7), whereby each of the two longitudinal members (3, 4) consists of a rear part (9) which extends parallel to the road at normal height, an adjacent middle part (10) which is slanted downwards towards the front and an adjacent front part (11) at a lower level, either at a slight incline or parallel to the road, and whereby a specially-designed low-entry cab (8) is located above the front and middle parts (10, 11) of the longitudinal members (3, 4) and the front end sections of the rear parts of the longitudinal members (3, 4), **characterised in that** the front ends of the two longitudinal members (3, 4) are connected by a frontend cross member (12), on which a bumper (13) is attached and the low-entry cab (8) is hinged at the front so that it can be tilted by means of two bearing arrangements (14, 15), **characterised in that** an equipment rack (17) is located behind the low-entry cab (8) on the chassis frame (2), which equipment rack (17), by means of its frame (18) and bearing arrangements (19, 20) provided there, above and beyond its usual function also forms the rear bearing point for the lockable low-entry cab (8), which is released there, **in that** a torsion beam axle (21) is used as the front axle (5), whose control arms (23, 24) firmly connected with the axle housing (22) are hinged at outer bearing points (25, 26) of a cross member (27) which connects the middle parts (10) of the longitudinal members (3 ,4) in their front area and supports their two spring damper legs (28, 29) at the top on a cross member (30) connecting the two longitudinal member rear parts (9) at their front end sections (16) and covering the axle housing (22) and at the bottom on the axle housing (22) and **in that** a variety of other vehicle parts and components such as a steering gear (31), further steering parts (114, 184, 188), underride protection (32), a cab tilt cylinder etc, all along with their respective brackets or consoles, are installed on the front and middle parts (10, 11) of the longitudinal members (3, 4) as well as on the cross members (27, 30) which connect said longitudinal members (3, 4).

2. Commercial vehicle as in Claim 1, **characterised in that** the two frame longitudinal members (3, 4) each have the same U-shaped cross-section, whereby the cross-section height h rear part is the same throughout the entire length of the rear part (9), continuously decreases to approx. 0.7-0.8 h in the middle part (10) from the rear part (9) towards the front part (11) and maintains this reduced height consistently throughout the front part (11).

3. Commercial vehicle as in one of the Claims 1 and 2, **characterised in that** the upper edge (33) of the middle part (10) of each frame longitudinal member (3, 4) is slanted at an angle α of approx. 20° to the plane encompassing the upper edge (34) of the rear parts (9) and that the upper edge (35) of the section comprising the front parts (11) is slanted down towards the front by an angle β of approx. 2° to 5° against the horizontal section.

4. Commercial vehicle as in one of the preceding Claims, **characterised in that**, seen from above, the frame longitudinal members (3, 4) run parallel in the rear section of their rear parts (9) up to a point in front of the axle(s) (6, 7), are splayed outwards towards the front in the adjacent middle sections of their rear parts (9), and then continue in parallel at the same distance apart in the adjacent front sections of their rear parts (9) as well as in the adjacent middle parts (10) and front parts (11).

5. Commercial vehicle as in one of the preceding Claims, **characterised in that** the rear part (9), middle part (10) and front part (11) of each frame longitudinal member (3, 4) are each manufactured as one piece in the form of a stamped and bent plate steel part and that these three pre-fabricated parts of each frame longitudinal member (3, 4) are then butt-welded together in end-to-end fashion.

6. Commercial vehicle as in one of the Claims 1 to 4, **characterised in that** the front and middle parts (11, 10) of each frame longitudinal member (3, 4) are formed by a one-piece stamped and bent plate steel part, that the rear part (9) of each frame longitudinal member (3, 4) is also formed by a one-piece stamped and bent plate steel part, and that these two pre-fabricated individual parts of each longitudinal member (3, 4) are then butt-welded to each other in end-to-end fashion.

7. Commercial vehicle as in one of the preceding Claims, **characterised in that** the frame longitudinal members (3, 4) are stiffened by insert plates (36) which are attached, and more particularly welded, on the inside and which cross the respective joints or kinks between the three parts (9, 10, 11).

8. Commercial vehicle as in Claim 1, **characterised in that** the frontend cross member (12) which forms the front end of the frame is made of a stamped and bent plate steel part of U-shaped cross-section with mounting flanges (37) welded to its outer ends, extends between the front ends of the two longitudinal member front parts (11) and is attached on the inside to the vertical walls of said front parts (11) through its mounting flanges (37) by way of screw connections passing through holes that are aligned with each other.

9. Commercial vehicle as in Claim 1, **characterised in that** the underride protection (32) is made up of a profile tube (40) which is straight except at its ends (38, 39), where it is slightly curved towards the rear, and to which brackets (41, 42) are attached which in turn are used to attach it to two bearing shields (43, 44), each of which is attached to the outside of the front part (11) of the longitudinal member, in each case preferably through screw connections which pass through holes that are aligned with each other.

10. Commercial vehicle as in Claim 9, **characterised in that** the profile tube (40) of the underride protection (32) extends parallel to the road at some distance behind the bumper (13) at a height lower than the underside (45) of the bumper (13).

11. Commercial vehicle as in Claim 8, **characterised in that** the detachable shell-shaped bumper (13) is detachably mounted on the vertical wall (45) of the frontend cross member (12) by way of interior spacer consoles (46) frontend cross member with bolted connections and where required is also supported by struts at other points of the frontend cross member (12).

12. Commercial vehicle as in one of the Claims 1 and 8, **characterised in that** in the area of the frontend cross member (12) at least one connecting mount (48) with tapped holes (49) for screwing in a towing lug is attached on the inside by screw connections or welding, either directly on the frontend cross member (12) or on one or both of the longitudinal member front parts (11).

13. Commercial vehicle as in Claim 1, **characterised in that** the cross member (30) located in the area of the front axle (5) is of U-shape when viewed from the front, bridges the axle housing (22) of the torsion beam axle (21) with a traverse (50) forming a roof, also bridges a transverse panhard rod (51) which runs below the axle housing (22) and is made up of three parts, namely the traverse (50) and two spring strut brackets (52, 53) attached to its ends, whereby
a. the U-shaped cross member (30) is attached by each spring strut bracket (52, 53) to the outside of one of the two frame longitudinal members (3, 4),
b. a spring strut (28, 29) consisting of an air or coil spring (54) and an associated coaxial shock absorber (55) is provided per axle end
c. each spring strut (28, 29) is attached at its upper end (56) to the associated spring strut bracket (52, 53) and at its lower end (57) to a hinge point (58) on the axle housing (22),
**in that** the torsion beam axle is hinged to the frame-mounted bearing points (25, 26) of the cross member (27) by the free ends of its two control arms (23, 24) and **in that** the panhard rod (51) provided for lateral location of the torsion beam axle (21) is hinged at one end to the rigid axle housing/control arm assembly and at the other end indirectly to the frame.

14. Commercial vehicle as in one of the Claims 1 and 13, **characterised in that** the torsion beam axle (21) is of self-stabilising design and hence discharges the function of a stabiliser which limits the rolling of the commercial vehicle, whereby
a. the two control arms (23, 24) are each connected a large distance apart in either a non-positive or, where applicable, a positive manner, preferably on the front of the rigid axle housing (22) by way of bolts (59),
b. the rigid axle housing (22) is designed to permit a defined torsion in a straight middle area between the connected control arms (23, 24),
c. the two control arms (23, 24) are comparatively resistant to bending in vertical direction but designed to permit limited torsion about their longitudinal axes and are adjusted with regard to their bending resistance and torsion capacity to the total stabilising effect in connection with the torsion-capable rigid axle housing (22) through corresponding dimensioning and shaping of the determinant cross-sections.

15. Commercial vehicle as in one of the Claims 13 and 14, **characterised in that** each of the two spring struts (28, 29) - as seen from the side - is positioned either vertically or slightly inclined towards the front or rear and is hinged at its lower end (57) by one bearing eye to the bearing point (58) on the axle housing (22) using a built-in claw-type joint (60), whereby the bearing point (58) is designed with a moulded-on and appropriately machined lugs (63, 64) on the axle housing (22) which are as close as possible to each of the wheel support connecting heads (61, 62).

16. Commercial vehicle as in one of the Claims 13 to 15, **characterised in that** each spring strut bracket (52, 53) is designed, at least in its upper area, in the form of a half-shell (65, 66) open to the outside, the limiting wall (67, 68) of which partially covers the associated spring strut (28, 29) in the area of its air or coil spring (54) radially on the outside at a small distance from the inside and on whose head plate (69, 70) the top end of the respective spring strut (28, 29) is supported and mounted via a claw-type joint (71).

17. Commercial vehicle as in Claim 16, **characterised in that** at approximately mid-height each spring strut holder (52, 53) features a connecting flange (72, 73) with several bolt holes which fits up to the outside of the half-shell (65, 66), that this connecting flange (72, 73) is located at approximately shear centre and that each spring strut holder (52, 53) is attached to the respective frame longitudinal member (3, 4) by its connecting flange (72, 73) via the bolt holes and bolted connections which pass through the associated aligned holes inside the longitudinal member (3, 4 at the respective frame longitudinal member (3, 4).

18. Commercial vehicle as in one of the Claims 13 to 17, **characterised in that** each of the two spring strut holders (52, 53) is made of a cast steel part which after casting is subsequently machined and/or finished at the required points and which features cut-outs (74) for weight reductions at suitable locations, and that the traverse (50), which also functions as a part of the U-shaped cross member (30), is made of a pressed sheet metal part (or, where required of a forging or casting) which is of hat-shaped cross-section and features a straight middle section and on each side an obliquely rising end section (75, 76) as well as, if applicable, one or more cut-outs for weight reduction in the middle of its upper chord.

19. Commercial vehicle as in Claim 18, **characterised in that** the outer ends of the traverse (50) are formed in the shape of a jaw, with which the spring strut holder (52, 53) to be connected is encompassed on the outside, whereby each jaw on the traverse (50) is formed by a cut-out (77, 78) in its top chord and on both sides by the flanges (79, 80; 81, 82) which remain from the cut-out (77, 78), to which are assigned associated contact surfaces on the front and back of the respective spring strut holder (52, 53), in which area the traverse (50) is supported by its flanges and is firmly connected with the spring strut holder (52, 53) via bolted connections which pass through holes that are aligned with each other.

20. Commercial vehicle as in one of the Claims 13 to 19, **characterised in that** one of the two spring strut holders (52, 53) is also assigned an additional function, namely to form the bracing, holding and hinge component for the chassis end of the panhard rod (51), for which purpose said spring strut holder is extended downwards by a bearing shield (83), on the lower end of which there is a jaw (84) and on each side of this a bearing eye (85) to which the panhard rod (51) is attached by bolted connections via a claw-type joint (89) built into the bearing eye (86) at is one end, and that the panhard rod (51) is hinged at its opposite end using a claw-type joint (89) built into the bearing eye (88) there to the rigid axle housing/control arm assembly at a suitable point which could, for example, be a bearing bracket that is either integral with or attached to the axle housing (22) or to one of the two control arms (23, 24) and at which a corresponding contact area and tapped holes are provided for the purpose of fitting the claw-type joint (89) with bolts.

21. Commercial vehicle as in one of the Claims 1 and 13 to 20, **characterised in that** the cross members (27) on which the control arms (23, 24) of the torsion beam axle (21) are hinged consist of three parts connected to each other by bolts, namely a left and right angle bracket (90, 91) and a traverse (92), whereby each angle bracket (90, 91) features a cross web (93), an outside vertical web protruding upwards, as well as an inside and outside bearing flange (95, 96) positioned so as to protrude downwards from the cross web (93), whereby each angle bracket (90, 91) is attached by its cross web (93) and the outer vertical web (94) butted on the side and bottom of the longitudinal member middle part (10) by way of bolted connections passing through holes aligned with each other so that the traverse (92) featuring connecting flanges (97, 98) is taken up between the inner bearing flanges (95) of the two angle brackets (90, 91) and is connected to these by way of bolted connections passing through aligned holes and that the front end (99) of each control arm (23, 24), which is designed as a bearing eye with built-in rubber metal bearing, is taken up with lateral location and is hinged between the downwards protruding bearing flanges (95, 96) of each angle bracket (90, 91) at the cross web (93) by way of a bolt (100) passing through transverse holes aligned with each other.

22. Commercial vehicle as in Claim 1, **characterised in that** the steering gear (31) is fastened in the front end area of the longitudinal member middle part (10) and mounted on a specially designed console (101) in a position that is tilted slightly forwards.

23. Commercial vehicle as in Claims 21 and 22, **characterised in that** the console (101) carrying the steering gear (31) spatially overlaps the angle bracket (90) of the cross member (27) and is attached by flange on both sides of same on the outside of the longitudinal member middle part (10) by way of bolted connections which pass through holes aligned with each other.

24. Commercial vehicle as in one of the Claims 22 and 23, **characterised in that** the steering gear console (101) consists of an inner plate (102) and an outer plate (104) at a distance to the former and at least approximately parallel to it, as well as of a head plate (105) which connects both plates (102, 104) at the top, **in that** the inner plate (102) features a cut-out (103) to allow the angle bracket (90) of the cross member (27) to pass through and transverse holes for bolts screws for attachment to the outside of the longitudinal member middle part (10), **in that** the outer plate (104) features several transverse holes for attaching the steering gear (31) by way of bolted connections as well as a cut-out (106) to allow the output shaft (107) of the steering gear (31) to pass through it into the console (101) interior and **in that** the cut-out (106) continues in a cut-out (108) in the head plate (105) which enables a partial ingress of a steering arm (109) attached to the steering gear output shaft (107).

25. Commercial vehicle as in Claim 24, **characterised in that** the console (101) is stiffened on the inside by partition walls (110) which extend between the plates (102, 104) and is designed as either a welded or a cast construction.

26. Commercial vehicle as in one of the Claims 22 to 25, **characterised in that** the input shaft (111) at the front of the steering gear (31) is connected with the output shaft (113) of a mitre gear (114) via a propshaft (112) leading to the front and, via its input shaft (115), with the steering column of the commercial vehicle, whereby the steering column is leads out of the low-entry cab (8) out to the input shaft (115) of the mitre gear (114) through a hole in the floor (116), whereby the mitre gear (114) is attached to a console (117) mounted on the outside front area of the longitudinal member front part (11).

27. Commercial vehicle as in one of the Claims 24 to 26, **characterised in that** the exit of the steering gear (31) attached on the outside of the console (101) can be found on the inside in the protected overlap area of the console (101) and that the steering arm (109) connected to the output shaft (107) of the steering gear (31) acts on a steering arm (123) on the wheel carrier (124) of a wheel (125) of the front axle (5) by way of a drag link (122) jointed to its lower open end.

28. Commercial vehicle as in Claim 1, **characterised in that** the low-entry cab (8) is so long and so positioned in relation to the front axle (5) that the axes of rotation of the wheels (125, 127) of the front axle (5) lie in a vertical transverse plane which includes the rear wall (28) of the low-entry cab (8) or is located closely in front of or behind said rear wall (28).

29. Commercial vehicle as in Claim 1, **characterised in that** the two bearing arrangements (14, 15) designed for the front mounting of the low-entry cab (8) are each designed with a console (129) attached to the front end of one of the two cab floor bearers (130, 131), with the console featuring two parallel mounting flanges (133, 134) some distance apart and protruding from a connecting plate (132), and with two angled mounts (135), which mounts (135) are attached, preferably by way of bolted connections passing through holes aligned with each other, to the upper and front side of the frontend cross member (12) by their transverse plate (136) and vertical plate (137) and feature a built-in rubber metal bearing (139) in an upper bearing eye (138), whereby the bearing (139) is overlapped on the outside from both sides by the bearing flanges (133, 134) of the associated console (129), and **in that** the connection between a console (129) and the associated mount (135) is achieved by a bearing bolt (140) which passes through the main hole in the rubber metal bearing (139) as well as through the associated aligned holes in the console bearing flanges (133, 134).

30. Commercial vehicle as in Claim 29, **characterised in that** each of the consoles (129), which are of identical design, in the area where it is connected, particularly welded, to the associated cab floor bearer (130, 131), is of U-shaped cross-section and in this area overlaps the floor bearer (130, 131) in a positive manner on the outside and **in that** bearing flanges (133, 134) of these consoles (129) are extended so far forward beyond the U-profile area that the bearing eye (138) on the associated mount (135) is fully covered.

31. Commercial vehicle as in Claim 1, **characterised in that** two bearing consoles (142, 143), each with two forward-projecting bearing shields (144, 145 and 146, 147 respectively), are provided as the rear mounts for the low-entry cab (8) on the frame (18) of the equipment rack (17), the end areas of which bearing consoles (142, 143) freely protrude towards the front and form a jaw (152, 153) limited on both sides by flanges (148, 149 and 150, 151 respectively) which are parallel to the longitudinal axis of the vehicle and to each other, in which jaw (152, 153) a bearing shield (154, 155) protruding upwards is welded or attached by bolted connections passing through transverse holes aligned with each other, said bearing shield (154, 155) featuring above its attachment area a central transverse bearing pin (156, 157) that projects to a certain extent on both sides with one rubber metal bearing (158, 159; 160, 161) attached to each of the projecting parts of the pin.

32. Commercial vehicle as in Claim 31, **characterised in that** a bearing console (162, 163) is welded to the rear end of each of the two cab floor bearers (130, 131), also as part of the rear mounts of the low-entry cab (8), which bearing console (162, 163) features horizontal connecting flanges (164, 165) to which two downward-projecting bearing shields (166, 167 and 168, 169 respectively) parallel to each other and to the vehicle's longitudinal axis are attached at a suitable distance by way of bolted connections, and that on the inside of each of which bearing shield (166, 167, 168, 169) two coupling jaws (170, 171) are mounted that are pivotable at the top, form components of a cab locking mechanism and through an associated actuating mechanism (172) can be moved from a locking position, in which they largely cover the rubber metal bearings (158, 159 and 160, 161 respectively) on the outside, to an unlocking position which then allows tilting of the low-entry cab (8).

33. Commercial vehicle as in Claim 31, **characterised in that** the two consoles (142, 143) located with their forward-projecting bearing shields (144, 145; 146, 147) on the frame (18) of the equipment rack (17) as the rear mounts of the cab extend forwards into an area located above the axle housing (22) of the torsion beam axle (21).

34. Commercial vehicle as in one of the Claims 31 to 33, **characterised in that** each bearing console (142, 143) located on the frame (18) of the equipment rack (17) as the rear mounts of the cab consists of several stamped and/or stamped and bent sheet metal parts which are individually manufactured and then welded together.

35. Commercial vehicle as in one of the Claims 31 to 33, **characterised in that** each of the two bearing consoles (142, 143) located on the frame (18) of the equipment rack (17) as the rear mounts of the cab is at the same time designed to function also as a connecting element for the two supporting columns (173, 174; 175, 176) located at the front and back on each side of the frame (18) and is connected by welding to these columns in the form of a bracing rod or wall.

36. Commercial vehicle as in Claim 35, **characterised in that** each of the two bearing consoles (143, 143) simultaneously also forms a frame leg provided on each side of the frame (18) and for this purpose features a floor plate (177, 178), on the inside of which the back and front supporting columns (173, 174; 175, 176) on each side of the frame (18) stands and forms a support plateau by which the frame (18) is either attached directly to a longitudinal member rear part (9) or to a console (179, 180) bolted or welded to such longitudinal member rear part (9) in such a way that the frame (18) can be removed by virtue of bolted connections which pass through holes aligned with each other.

37. Commercial vehicle as in one of the preceding Claims, **characterised in that** different vehicle assemblies and parts such as radiators, compressed air reservoirs and other parts of the compressed air system, air intake sections, exhaust line sections and similar are indirectly mounted in the frame (18) of the equipment rack (17).

38. Commercial vehicle as in Claim 1, **characterised in that** when the vehicle features a steerable leading or trailing axle (7) assigned to the rear axle (6) the wheels (182, 183) of such leading or trailing axle (7) are steered via a hydraulic slave cylinder (181), one end of which is hinged on the chassis frame (3, 4) and the other end of which is hinged on the wheel carrier of one of the two wheels (183, 183) of the leading or trailing axle (7), said slave cylinder (181) being connected via hydraulic lines to a master cylinder (184), the rear end (185) of which is hinged approximately in the middle of the steering arm (108) attached at the exit of the steering gear (31), the master cylinder (184) extending towards the front on the outside along the longitudinal member front part (11) against the direction of travel and being hinged by its front end (186) on a bearing unit (187) on a bearing support (188) attached on the outside of the front end of the longitudinal member front part (11).

39. Commercial vehicle as in Claim 38, **characterised in that** the bearing support (188) is angled in itself, welded to the outside of the longitudinal member front part (11) by its vertical flange (189) or attached by several bolted connections passing through holes aligned with each other and bears on the top of its traverse flange (190) as a bearing unit (187) e.g. a ball head, to which the master cylinder (184) is hinged by a ball joint on its front end (186).

40. Commercial vehicle as in Claim 1, **characterised in that** a cab tilt cylinder is hinged by its rear end to a bearing support (192) fixed to the frame, extends towards the front against the direction of travel and is hinged by its front end to a bearing support that is attached to the cab floor (116) or to a cab floor bearer (130, 131), whereby the bearing support (192) fixed to the frame is attached either to a longitudinal member (3, 4) or to the cross member (27) which connects the two longitudinal members (3, 4) and bears the front end of the front axle control arms (23, 24) or to both this cross member (27) and to a longitudinal member (3, 4).

41. Commercial vehicle as in Claim 4, **characterised in that** the bearing support (192) consists of one stamped and bent sheet metal part or of several pre-fabricated stamped and bent sheet metal parts welded together and features at least one connecting flange (193, 194) for its attachment to the front of the cross member (27) and/or to one of the angle brackets (90, 91) and two flanges (199, 200) which are parallel to each other and to the vehicle's longitudinal axis and between which a bearing eye located at the rear end of the tilt cylinder is held and hinged there in a manner which allows pivoting by means of a bearing bolt which passes through holes aligned with each other.

42. Commercial vehicle as in Claims 40 and 41, **characterised in that** the cab tilt cylinder is connected with a hydraulic cab tilt pump via a hydraulic line, whereby the pump is attached to a bracket which is fixed to the frame and also serves as the bracket for a mudguard section (203) which is located above a wheel of the front axle (5).

43. Commercial vehicle as in Claim 1, **characterised in that** the floor (116) of the low-entry cab (8) is level in its front area (116/1) and parallel to the road and is designed in a step-like manner in its adjacent middle area in order to form a platform for the driver and passenger seat mountings, whereby this platform is designed at the front with a floor section (116/2) which is vertical or slightly inclined to the top rear forming an angle of approx. 120° to the front area (116/1) and at the top with a floor section (116/3) which is parallel to the road and is followed by a steeply upward-inclined rear floor area (116/4).

44. Commercial vehicle as in Claim 43, **characterised in that** the rear floor area (116/4) is curved in itself, whereby its relatively short lower level section (116/41) forms an angle α of approximately 140° with the upper floor section (116/3) in the platform area and the upper section (116/42) which follows the lower section (116/41) is steeper and forms an angle β of approx. 155° with the lower section (116/41).

45. Commercial vehicle as in one of the Claims 43 and 44, **characterised in that** the floor bearers (130, 131) are nestled against and closely follow the given form of the cab floor (116) and are of U- or hat-shaped cross-section.

46. Commercial vehicle as in Claim 45, **characterised in that** the floor bearers (130, 131) - as viewed from above - run parallel to each other in the front sections (130/1, 131/1) at a distance that is smaller than that between the two frame longitudinal members (3, 4), then rise obliquely but parallel to each other with their sections (130/2, 131/2) under the floor section (116/2), then extend outwards at right angles to the direction of travel with the sections (130/3, 131/3), which are joined to sections (130/2, 131/2) and cross the longitudinal member front parts (11) and are then continued up to the rear end of the floor (116) with sections (130/4, 131/4), which are parallel to each other and to the longitudinal axis of the vehicle.

47. Commercial vehicles as in one of the Claims 45 and 46, **characterised in that** the floor bearers (130, 131) are supplemented at different points by welded-on consoles (130/5, 131/5) of hat-shaped or angled profile which feature the contact surface for the connecting flanges which enlarge the cab floor (116), to which connecting flanges the cab floor (116) is attached by way of bolted connections or by welding.

48. Commercial vehicle as in one of the Claims 43 to 47, **characterised in that** the rear floor area (116/4) is raised by approx. 500 to 700 mm up to a level that is above the upper edge of the longitudinal member rear parts (9).

49. Commercial vehicle as in Claim 48, **characterised in that** the rear floor area (116/4) features in the middle of its transverse extension an indent into which the commercial vehicle's drive unit (204), which is located behind the indent and in the chassis (2) between the frame longitudinal members (3, 4), is partially inserted.

50. Commercial vehicle as in one of the Claims 43 to 49, **characterised in that** the commercial vehicle's drive unit (204), which is adjacent to the rear floor area (116/4) of the low-entry cab (8) and consists of a combustion engine, a clutch and a transmission, traverses - from above and with small clearance - the axle housing (22) of the torsion beam axle (21) as well as the cross member (30) covering it in the area of the cross traverse (50) of said cross member (30) and also runs extends below the equipment rack (17) towards the rear.

51. Commercial vehicle as in one of the Claims 43 to 47, **characterised in that** the floor (116) of the low-entry cab (8) features - seen from the side - in its platform-shaped middle area (116/2, 116/3) beside the section carrying the driver's seat under a section carrying a passenger seat a wall cut-out which may be closed up by a lid and forms an access to a case installed in this area on the cab floor (116) and intended to house electrical and electronic components (such as a vehicle management computer and/or other computers, central electrics box, fuses, diagnostic power sockets, etc.) which cannot be accommodated in the area of the dashboard or front wall (209) of the commercial vehicle but are now attached in suitable inserts or to consoles in the case and connected by way of an underfloor wiring harness to the existing electrical and dashboard components of the commercial vehicle located in either the dashboard or the cab front wall.

52. Commercial vehicle as in Claim 1, **characterised in that** the low-entry cab (8) features on its passenger side wall (206) an inward-swinging single-leaf passenger door (206) which is attached to transverse protruding arms of a rotating bar mounted in bearings at the top and bottom of the low-entry cab (8), guided at some distance from said bar, at least in its upper area, by a sliding roller or sliding block in a guide integrated in the side wall (205) of the cab and opened and closed via a hydraulic cylinder hinged at one end to the cab side wall (205) and at the other end to the free end of a slewing arm protruding from the bar.

## Revendications

1. Véhicule industriel, en particulier véhicule à bennes à ordures ménagères ou autre véhicule de voirie, comprenant une cabine à accès surbaissé (8), fixé de manière basculante sur un châssis (1) conçu de manière spéciale en dessous de celle-ci, châssis dont les deux longerons (3, 4) sont reliés au moyen de plusieurs traverses, et qui présente un essieu avant (5), un pont arrière (6) et, le cas échéant, un essieu poussé ou un essieu traîné (7), auquel cas chacun des deux longerons (3, 4) est constitué d'une partie arrière (9) s'étendant parallèlement à la chaussée à hauteur normale, d'une partie centrale (10) inclinée vers le bas et reliée à la partie arrière de manière inclinée vers l'avant et d'une partie avant (11) reliée à la partie centrale à un niveau plus bas et s'étendant vers l'avant en étant soit légèrement inclinée, soit parallèle à la chaussée et auquel cas une cabine à accès surbaissé (8) est disposée au-dessus des parties avant et centrale (10, 11) des longerons ainsi qu'au-dessus de la section finale avant (16) des parties arrière (9) des longerons, **caractérisé en ce que** les extrémités avant des deux longerons (3, 4) sont reliés au moyen d'une traverse avant (12) sur laquelle est fixé un pare-chocs (13) et la cabine à accès surbaissé (8) est articulée de manière basculante vers l'avant par l'intermédiaire de deux éléments de fixation (14, 15), **en ce que** le cadre de châssis (2) reçoit derrière la cabine à accès surbaissé (8) porte-organes mécaniques (17) qui forme, au-delà de sa fonction normale, avec son faux-châssis (18) et des éléments de fixation (19, 20) prévus à cet endroit, également le point de fixation arrière pour la cabine à accès surbaissé (8) qui est verrouillable de manière amovible à cet endroit, **en ce qu'**un essieu à plusieurs bras de guidage longitudinaux (21) est utilisé en tant qu'essieu avant (5), dont les bras oscillants longitudinaux (23, 24) reliés de manière fixe au corps d'essieu (22) sont articulés sur des points d'appui extérieurs (25, 26) d'une traverse (27) reliant les parties centrales (10) des longerons dans leur partie avant et dont les jambes de suspension-amortisseur (28, 29) situées de chaque côté sont en appuie en haut sur une traverse (30) qui relie les deux parties arrière (9) des longerons dans leur section finale avant (16) et recouvre le corps d'essieu (22), ainsi qu'en bas sur le corps d'essieu (22), et **en ce que** différentes autres pièces ainsi que différents organes mécaniques de véhicule, tels qu'un boîtier de direction (31), d'autres pièces de direction (114, 184, 188), une barre anti-encastrement (32), un vérin de basculement de cabine, etc., sont montés sur les parties centrale et avant (10, 11) des longerons ainsi que sur les traverses (27, 30) reliant celles-ci, par l'intermédiaire de propres supports ou de propres consoles.

2. Véhicule industriel selon la revendication 1, **caractérisé en ce que** les deux longerons de cadre (3, 4) ont chacun une section transversale identique en forme de U, auquel cas la hauteur de section transversale h dans la partie arrière (9) reste constante sur toute la longueur, diminue à partir de la partie arrière (9) jusqu'à la partie avant (11) progressivement pour atteindre 0,7 à 0,8 h dans la partie centrale (10) et se poursuit dans la partie avant (11) de manière constante avec cette hauteur réduite.

3. Véhicule industriel selon l'une des revendications 1 et 2, **caractérisé en ce que** la partie centrale (10) de chaque longeron de cadre (3, 4) est inclinée au niveau de son bord supérieur (33) à un angle α d'environ 20° par rapport au plan incluant le bord supérieur (34) des parties arrière (9) et **en ce que** le plan incluant le bord supérieur (35) des parties avant (11) est incliné en bas vers l'avant à un angle β d'environ 2 à 5° par rapport au plan horizontal.

4. Véhicule industriel selon l'une des revendications mentionnées précédemment, **caractérisé en ce que**, vu d'en haut, les longerons de cadre (3, 4) s'étendent parallèlement dans la section arrière de leurs parties arrière (9) jusque devant le/les essieu(x) (6, 7), sont orientés, dans les sections médianes adjacentes de leurs parties arrière (9), de biais vers l'extérieur à l'avant à un écart plus grand et se poursuivent ensuite en s'étendant parallèlement à un écart identique dans les sections avant adjacentes de leurs parties arrière (9) ainsi que dans les parties centrales (10) et les parties avant (11) adjacentes.

5. Véhicule industriel selon l'une des revendications mentionnées précédemment, **caractérisé en ce que** la partie arrière (9), la partie centrale (10) et la partie avant (11) de chaque longeron de cadre (3, 4) sont à chaque fois fabriquées d'une seule pièce en forme de pièce pliée et estampée en tôle et ces trois parties préfabriquées de chaque longeron de cadre (3, 4) sont à chaque fois soudées bout à bout les unes avec les autres.

6. Véhicule industriel selon l'une des revendications 1 à 4, **caractérisé en ce que** la partie avant et la partie centrale (11, 10) de chaque longeron de cadre (3, 4) sont formées d'une pièce pliée et estampée en tôle monobloc, la partie arrière (9) de chaque longeron de cadre (3, 4) est également formée d'une pièce pliée et estampée en tôle monobloc et ces deux pièces individuelles préfabriquées de chaque longeron de cadre (3, 4) sont soudées bout à bout l'une avec l'autre.

7. Véhicule industriel selon l'une des revendications mentionnées précédemment, **caractérisé en ce que** les longerons (3, 4) de cadre sont rigidifiés au moyen de plaques rapportées (36) montées à l'intérieur, en particulier soudées, et traversant les points de choc et les points de flexion respectifs des trois parties (9, 10, 11).

8. Véhicule industriel selon la revendication 1, **caractérisé en ce que** la traverse avant (12) formant l'extrémité avant du cadre est formée d'une pièce pliée et estampée en tôle en forme de U dans sa section, comprenant des brides de fixation (37) soudées sur les extrémités extérieures, s'étend entre les extrémités avant des deux parties avant (11) de longeron et est fixée à l'intérieur sur les parois verticales des parties avant par l'intermédiaire de ses brides de fixation (37) au moyen de liaisons boulonnées traversant des alésages alignés les uns par rapport aux autres.

9. Véhicule industriel selon la revendication 1, **caractérisé en ce que** la barre anti-encastrement (32) est formée d'un tube profilé (40) légèrement courbé vers l'arrière sur ses extrémités (38, 39) et droit entre ses extrémités, sur lequel sont montés des supports (41, 42) avec lesquels il est fixé sur deux flasques (43, 44), dont chacun est fixé à l'extérieur sur la partie avant (11) de longeron, auquel cas la fixation respective est réalisée de préférence par l'intermédiaire de liaisons boulonnées traversant des alésages alignés les uns par rapport aux autres.

10. Véhicule industriel selon la revendication 9, **caractérisé en ce que** le tube profilé (40) de la barre anti-encastrement (32) s'étend, de manière éloignée derrière le pare-chocs (13), à une hauteur plus faible par rapport au côté inférieur (45) du pare-chocs (13), parallèlement à la chaussée.

11. Véhicule industriel selon la revendication 8, **caractérisé en ce que** le pare-chocs (13) en forme de coque est fixé de manière amovible, au moyen de liaisons vissées par l'intermédiaire de consoles intérieures (45) fournissant la distance, sur la paroi verticale (47) de la traverse avant (12) et, le cas échéant, est également soutenu par l'intermédiaire de montants d'appui à d'autres endroits de la traverse avant (12).

12. Véhicule industriel selon l'une des revendications 1 et 8, **caractérisé en ce que**, au niveau de la traverse avant (12), au moins un support de raccordement (48) à alésage taraudé (49) pour le vissage d'un oeillet de remorquage est, à l'intérieur, soit fixé au moyen de liaisons boulonnées, soit soudé directement sur la traverse avant ou sur une ou sur les deux parties avant de longeron (11).

13. Véhicule industriel selon la revendication 1, **caractérisé en ce que** la traverse (30) disposée au niveau de l'essieu avant (5) est formée en U, vue de face, ponte avec sa traverse (50) le corps d'essieu (22) de l'essieu à plusieurs bras de guidage longitudinaux (21) en formant un toit et également une barre Panhard (51) s'étendant transversalement en dessous, et est composée de trois pièces, à savoir de la traverse (50) et de deux supports de jambe de suspension (52, 53) fixés sur les extrémités de la traverse (50), auquel cas
- la traverse (30) en forme de U est fixée à l'extérieur sur l'un des deux longerons de cadre (3, 4) à chaque fois à l'aide d'un support de jambe de suspension (52, 53),
- une jambe de suspension (28, 29) constituée d'un coussin pneumatique ou d'un ressort hélicoïdal (54) et d'un amortisseur (55) coaxial à ce coussin ou ressort, est prévu de chaque côté de l'essieu,
- chaque jambe de suspension (28, 29) est reliée avec son extrémité supérieure (56) au support de jambe de suspension (52, 53) correspondant et est reliée avec son extrémité inférieure (57) à un point d'articulation (58) sur le corps d'essieu (22),
**en ce que** l'essieu à plusieurs bras de guidage longitudinaux est articulé sur les points de palier (25, 26) fixes sur le cadre de la traverse (27) avec les extrémités libres de ses deux bras de guidage longitudinaux et **en ce que** la barre Panhard prévue pour le guidage transversal de l'essieu à plusieurs bras de guidage longitudinaux (21) est, sur une extrémité, articulée à l'unité de corps d'essieu rigide/bras de guidage longitudinal et, sur l'autre extrémité, indirectement sur le cadre.

14. Véhicule industriel selon l'une des revendications 1 et 13, **caractérisé en ce que** l'essieu à plusieurs bras de guidage longitudinaux (21) possède une caractéristique d'auto-stabilisation, présentant par conséquent la fonction d'un stabilisateur limitant le roulis du véhicule industriel, auquel cas
- les deux bras de guidage longitudinaux (23, 24) sont reliés à une certaine distance l'un de l'autre, à chaque fois de préférence du côté frontal, à l'avant sur le corps d'essieu rigide (22) au moyen de vis (59), par adhérence et, le cas échéant, également de manière bloquable,
- le corps d'essieu rigide (22) est formé, dans une partie centrale droite entre les bras de guidage longitudinaux (23, 24) reliés, de façon à pouvoir se tordre de manière définie,
- les deux bras de guidage longitudinaux (23, 24), vus dans le sens vertical, sont, en comparaison, formés de manière résistante à la flexion, mais peuvent être tordus de manière limitée autour de leur axe longitudinal et sont adaptés, quant à leur résistance à la flexion et leur aptitude à la torsion, à l'effet de stabilisation général en combinaison avec le corps d'essieu rigide (22) apte à la torsion par un dimensionnement et une conception correspondants des sections transversales déterminantes à cet effet.

15. Véhicule industriel selon l'une des revendications 13 et 14, **caractérisé en ce que** chacune des jambes de suspension (28, 29) est disposée, vues de côté, soit verticalement, soit de manière légèrement inclinée vers l'avant ou vers l'arrière et est articulée sur son extrémité inférieure (57) au point de fixation (58) fixe sur le corps d'essieu à l'aide d'un orifice de fixation par l'intermédiaire d'une articulation à griffe (60) intégrée, ce point de fixation étant formé de saillies (63, 64) façonnées et repris de manière correspondante par enlèvement de copeaux, poussées aussi loin que possible à chaque fois vers une tête de raccordement (61, 62) de support de roue sur l'extrémité du corps d'essieu.

16. Véhicule industriel selon l'une des revendications 13 à 15, **caractérisé en ce que** chaque support de jambe de suspension (52, 53), au moins dans sa partie supérieure, est exécuté de manière similaire à une demi-coque (65, 66) ouverte vers l'extérieur, par la paroi de limitation (67, 68) de laquelle la jambe de suspension (28, 29) correspondante est recouverte partiellement depuis l'intérieur au niveau de son coussin pneumatique ou ressort hélicoïdal (54), radialement à l'extérieur à un faible écart et sur la plaque supérieure (69, 70) de laquelle chaque jambe de suspension (28, 29) est soutenue sur l'extrémité supérieure et est fixée au moyen d'une articulation à griffe (71).

17. Véhicule industriel selon la revendication 16, **caractérisé en ce que** chaque support de jambe de suspension (52, 53) présente, par exemple dans sa partie haute centrale, une bride de raccordement (72, 73) adjacente à la demi-coque (65, 66) sur le côté extérieur, munie de plusieurs trous de passage de vis, **en ce que** cette bride de raccordement (72, 73) est présente par exemple au centre de poussée et **en ce que** chaque support de jambe de suspension (52, 53) est fixé de manière bridée sur chacun des longerons de cadre (3, 4) à l'aide de sa bride de raccordement (72, 73) par l'intermédiaire des trous de passage de vis et de liaisons boulonnées traversant des trous alignés aux trous de passage de vis de manière interne au longeron.

18. Véhicule industriel selon l'une des revendications 13 à 17, **caractérisé en ce que** les deux supports de jambe de suspension (52, 53) sont à chaque fois formés d'une pièce en acier en fonte, qui, après le coulage, est retouchée ou finie aux endroits nécessaires par enlèvement de copeaux et qui présente des passages (74) pour réduire le poids à des endroits appropriés, et **en ce que** la traverse (50) agissant également comme partie de la traverse (30) en forme de U est formée d'une pièce emboutie en tôle, à section en forme de chapeau, le cas échéant également d'une pièce forgée ou d'une pièce moulée en fonte, qui présente une section centrale droite et, de chaque côté de celle-ci, à chaque fois une section finale (75, 76) relevée de biais ainsi qu'éventuellement au milieu de sa ceinture supérieure, un ou plusieurs passages servant à réduire le poids.

19. Véhicule industriel selon la revendication 18, **caractérisé en ce que** les extrémités extérieures de la traverse (50) sont exécutées de manière similaire à une mâchoire, avec laquelle le support de jambe de suspension (52, 53) à raccorder est pris de l'extérieur, chaque mâchoire sur la traverse (50) étant formée d'une découpe (77, 78) dans ceinture membrure supérieure et par des joues (79, 80 ; 81, 82) restant de chaque côté de la découpe (77, 78), auxquelles sont associées des surfaces d'appui correspondantes à l'avant et à l'arrière sur chacun des supports (52, 53) de jambe de suspension, au niveau desquelles la traverse (50) est soutenue par ses joues et y est reliée de manière fixe au support de jambe de suspension (52, 53) par l'intermédiaire de liaisons boulonnées traversant des alésages alignés les uns par rapport aux autres.

20. Véhicule industriel selon l'une des revendications 13 à 19, **caractérisé en ce que** l'un des deux supports de jambe de suspension (52, 53) possède, en plus de sa fonction proprement dite, une autre fonction, à savoir constituer l'organe d'appui, de maintien et d'articulation pour l'une des extrémités, côté châssis, de la barre Panhard (51), ce support de jambe de suspension étant à cet effet prolongé vers le bas par un flasque (83), à l'extrémité inférieure duquel sont formés une mâchoire (84) et à chaque fois un orifice de fixation (85) de chaque côté de celle-ci, sur lesquels est fixée la barre Panhard (51) par l'intermédiaire d'une articulation à griffe (89) intégrée dans son orifice de fixation (86) à une extrémité au moyen de liaisons boulonnées, et **en ce que** la barre Panhard (51) est articulée à l'endroit approprié du groupement corps d'essieu rigidebras de guidage longitudinal au niveau de son autre extrémité opposée par l'intermédiaire d'une articulation à griffe (89) intégrée dans le orifice de fixation (88) à cet endroit, pour laquelle il s'agit, par exemple, d'un support de palier qui est soit façonné, soit monté sur le corps d'essieu (22) ou sur l'un des deux bras de guidage longitudinaux (23, 24) et sur lequel une surface d'appui correspondante et des alésages taraudés sont prévus pour le vissage de l'articulation à griffe (89) au moyen de vis.

21. Véhicule industriel selon l'une des revendications 1 et 13 à 20, **caractérisé en ce que** la traverse (27), sur laquelle sont articulés les bras de guidage longitudinaux (23, 24) de l'essieu à plusieurs bras de guidage longitudinaux (21), est constituée de trois pièces reliées entre elles au moyen de boulons, à savoir une équerre d'assemblage gauche et une équerre d'assemblage droite (90, 91) ainsi qu'une traverse (92), auquel cas chaque équerre d'assemblage (90, 91) présente un montant transversal (93), un montant vertical (94) y dépassant à l'extérieur vers le haut ainsi qu'une joue intérieure et une joue extérieure (95, 96) disposées sur le montant transversal (93) en dépassant vers le bas, chaque équerre d'assemblage (90, 91), avec son montant transversal (93) et le montant vertical extérieur (94), étant fixée latéralement et en bas de manière adjacente à la partie centrale de longeron (10) au moyen de liaisons boulonnées traversant des alésages alignés les uns par rapport aux autres, **en ce que** la traverse (92) présentant des brides de raccordement (97, 98) du côté frontal est logée entre les joues intérieures (95) des deux équerres d'assemblage (90, 91) et raccordée à celles-ci au moyen de liaisons boulonnées traversant des alésages alignés et **en ce que** l'extrémité avant (99), formée comme orifice de fixation avec palier en caoutchouc-métal monté, de chaque bras de guidage longitudinal (23, 24) est logée par guidage transversal entre les deux joues (95, 96), dépassant vers le bas au niveau de la traverse (93), de chaque équerre d'assemblage (90, 91) et y est articulée au moyen d'une vis de palier (100) traversant des alésages transversaux alignés les uns par rapport aux autres.

22. Véhicule industriel selon la revendication 1, **caractérisé en ce que** le boîtier de direction (31) est disposé au niveau de la zone finale avant de la partie centrale de longeron (10) en étant fixé sur une console (101) conçue de manière spéciale dans une position légèrement basculée vers l'avant.

23. Véhicule industriel selon les revendications 21 et 22, **caractérisé en ce que** la console (101) portant le boîtier de direction (31) recouvre spatialement l'équerre d'assemblage (90) de la traverse (27) et est fixée de chaque côté de cette équerre d'assemblage à l'extérieur au niveau de la partie centrale de longeron (10) par bridage au moyen de liaisons boulonnées traversant des alésages alignés les uns par rapport aux autres.

24. Véhicule industriel selon l'une des revendications 22 et 23, **caractérisé en ce que** la console (101) du boîtier de direction est constituée d'une plaque intérieure (102) et d'une plaque extérieure (104) à distance de celle-ci et au moins approximativement parallèle ainsi que d'une plaque supérieure (105) reliant les deux plaques (102, 104) en haut, **en ce que** la plaque intérieure (102) présente un évidement (103) pour le passage de l'équerre d'assemblage (90) de la traverse (27) ainsi que des alésages de passage transversal pour le passage de boulons destinées à la fixation sur le côté extérieur de la partie centrale de longeron (10), **en ce que** la plaque extérieure (104) présente plusieurs alésages de passage transversal pour la fixation du boîtier de direction (31) au moyen de liaisons boulonnées ainsi qu'un évidement (106) pour le passage de l'arbre de sortie (107) du boîtier de direction (31) dans l'espace intérieur de la console (101), et **en ce que** l'évidement (106) se poursuit dans un évidement (108) dans la plaque supérieure (105), qui permet un enfoncement partiel d'un levier de commande (109) fixé sur l'arbre de sortie (107) du boîtier de direction.

25. Véhicule industriel selon la revendication 24, **caractérisé en ce que** la console (101) est rigidifiée à l'intérieur au moyen de parois de montant (110) s'étendant entre les plaques (102, 104) et est réalisée soit à partir d'une construction soudée, soit à partir d'une construction en fonte.

26. Véhicule industriel selon l'une des revendications 22 à 25, **caractérisé en ce que** l'arbre de commande (111) présent devant sur le boîtier de direction (31) est en liaison avec l'arbre de sortie (113) d'un engrenage conique (114) par l'intermédiaire d'un arbre articulé (112) menant vers l'avant et est en liaison avec la colonne de direction du véhicule industriel par l'intermédiaire de l'arbre de commande (115) de l'engrenage conique, la colonne de direction étant guidée hors de la cabine à accès surbaissé (8) à travers une ouverture dans le plancher (116) de celle-ci en direction de l'arbre de commande (115) de l'engrenage conique (114), auquel cas celui-ci (114) est monté sur une console (117) fixée latéralement à l'extérieur sur la zone avant de la partie avant de longeron (11).

27. Véhicule industriel selon l'une des revendications 24 à 26, **caractérisé en ce que** la sortie du boîtier de direction (31) monté latéralement à l'extérieur sur la console (101) est présente à l'intérieur dans la partie de recouvrement protégée de la console (101) et **en ce que** le levier de commande (109) raccordé à l'arbre de sortie (107) du boîtier de direction (31) agit sur un levier de commande (123) au niveau du support de roue (124) d'une roue (125) de l'essieu avant (5) par l'intermédiaire d'une barre de commande de direction (122) reliée de manière articulée sur son extrémité libre inférieure.

28. Véhicule industriel selon la revendication 1, **caractérisé en ce que** la cabine à accès surbaissé (8) est constituée d'une telle longueur et est disposée en relation avec l'essieu avant (5) de telle manière que les axes de rotation des roues (125, 127) de l'essieu avant (5) soient situés dans un plan transversal vertical qui inclut la paroi arrière (28) de la cabine à accès surbaissé (8) ou se trouve devant ou derrière cette paroi arrière de manière adjacente.

29. Véhicule industriel selon la revendication 1, **caractérisé en ce que** les deux éléments de fixation (14, 15) prévus pour la suspension avant de la cabine à accès surbaissé (8) présentent à chaque fois une console (129) fixée sur l'extrémité avant de l'un des deux supports de plancher de cabine (130, 131), cette console présentant deux joues (133, 134) dépassant parallèlement à une certaine distance au niveau d'une plaque de raccordement (132), et deux supports (135) coudés, lesquels sont fixés, avec leur plaque transversale coudée (136) et leur plaque verticale coudée (137), de manière adjacente au côté supérieur et au côté avant de la traverse avant (12), de préférence par l'intermédiaire de liaisons boulonnées traversant des alésages alignés les uns par rapport aux autres, et présentant un palier en caoutchouc-métal (139) monté dans un orifice de fixation (138) du côté supérieur, cet orifice étant recouvert à l'extérieur de chaque côté par les joues (133, 134) de la console correspondante (129), et **en ce que** la liaison entre une console (129) et le support correspondant (135) est établie par l'intermédiaire d'une vis de palier (140) traversant l'alésage central dans le palier en caoutchouc-métal (139) ainsi que des alésages, alignés par rapport à cet alésage central, dans les joues de fixation de la console (133, 134) .

30. Véhicule industriel selon la revendication 29, **caractérisé en ce que** chacune des deux consoles (129) exécutées de manière identique est en particulier soudée dans la partie dans laquelle elle est reliée au support de plancher de cabine (130, 131) correspondant, possède une section en forme de U et recouvre le support de plancher (130, 131) dans cette partie, à l'extérieur par adhérence de forme, et **en ce que** les joues (133, 134) de ces consoles (129) sont prolongées vers l'avant au-delà de la partie à profil en U de telle manière que l'orifice de fixation (138) sur le support correspondant (135) soit complètement recouvert.

31. Véhicule industriel selon la revendication 1, **caractérisé en ce que** deux consoles de fixation (142, 143), comprenant à chaque fois deux flasques (144, 145 et 146, 147) dépassant vers l'avant, sont prévues sur le cadre porteur (18) du porteur d'organes mécaniques (17) pour la suspension arrière de la cabine à accès surbaissé (8), auquel cas les parties terminales des flasques dépassant librement vers l'avant forment une mâchoire (152, 153) limitée de chaque côté par des joues (148, 149 et 150, 151) parallèles l'une à l'autre et parallèles au sens longitudinal du véhicule, mâchoire dans laquelle est soudé un flasque (154, 155) dépassant vers le haut ou fixé au moyen de liaisons boulonnées traversant des alésages transversaux alignés les uns par rapport aux autres, auquel cas le flasque (154, 155) présente au-dessus de sa partie de fixation un tourillon (156, 157) centralement transversal et dépassant d'une certaine dimension de chaque côté, comprenant à chaque fois un palier en caoutchouc-métal (158, 159 ; 160, 161) fixé sur chaque partie de tourillon en saillie.

32. Véhicule industriel selon la revendication 31, **caractérisé en ce que**, pour la suspension arrière de la cabine à accès surbaissé (8), une console de fixation (162, 163) est soudée en outre sur l'extrémité arrière de chacun des deux supports de plancher de cabine (130, 131), cette console de fixation présentant des brides de raccordement (164, 165) disposées horizontalement, sur lesquelles sont fixés deux flasques (166, 167 et 168, 169) parallèles l'un à l'autre et parallèles au sens longitudinal du véhicule, à une certaine distance correspondante en dépassant vers le bas, au moyen de liaisons boulonnées, sur lesquels sont logées à l'intérieur à chaque fois deux mâchoires d'accouplement (170, 171) de manière pivotante sur l'extrémité supérieure, qui forment les pièces d'un mécanisme de verrouillage de cabine et peuvent être transposées, au moyen d'un mécanisme d'actionnement correspondant (172), d'une position de verrouillage dans lequel elles comprennent extérieurement en grande partie les paliers en caoutchouc-métal (158, 159 et 160, 161), dans une position de déverrouillage qui permet alors le basculement de la cabine à accès surbaissé (8).

33. Véhicule industriel selon la revendication 31, **caractérisé en ce que** les deux consoles (142, 143) disposées sur le cadre porteur (18) du porteur d'organes mécaniques (17) s'étendent, avec leurs flasques (144, 145 ; 146, 147) dépassant vers l'avant et servant de suspension arrière de cabine, jusque dans une partie vers l'avant, qui est présente au-dessus du corps d'essieu (22) de l'essieu à bras de guidage longitudinaux (21).

34. Véhicule industriel selon l'une des revendications 31 à 33, **caractérisé en ce que** chaque console de fixation (142, 143) disposée sur le cadre porteur (18) du porteur d'organes mécaniques (17) et servant de suspension arrière de cabine est constituée de plusieurs pièces estampées en tôle et/ou de pièces pliées et estampées en tôle fabriquées individuellement et ensuite soudées ensemble.

35. Véhicule industriel selon la revendication 34, **caractérisé en ce que** chacune des deux consoles de support (142, 143), disposées sur le cadre porteur (18) du porteur d'organes mécanique (17) et servant de suspension arrière de cabine, est également exécutée pour servir simultanément d'élément de liaison pour les deux colonnes de support (173, 174 ; 175, 176), disposées devant et derrière pour chaque côté du cadre porteur (18), et est raccordée, par soudure, à ces colonnes de support de manière similaire à un montant ou une paroi de rigidification.

36. Véhicule industriel selon la revendication 35, **caractérisé en ce que** chacune des deux consoles de fixation (142, 143) forme simultanément également un pied de cadre porteur prévu pour chaque côté du cadre porteur (18) et présente à cet effet une plaque de fond (177, 178) en bas, sur laquelle la colonne de support arrière et avant (173, 174 ; 175, 176) du cadre porteur (18) est montée à la verticale à l'intérieur pour chaque côté et forme un plateau d'appui, à l'aide duquel le cadre porteur (18) est fixé de manière amovible soit directement sur une partie arrière de longeron (9), soit sur une console (179, 180) vissée ou soudée sur la partie arrière de longeron (9) par l'intermédiaire de liaisons boulonnées traversant des alésages alignés les uns par rapport aux autres.

37. Véhicule industriel selon l'une des revendications mentionnées précédemment, **caractérisé en ce que** différents organes mécaniques et différentes pièces de véhicule, tels que radiateur, réservoir pneumatique et d'autres pièces de l'installation pneumatique, des sections de la conduite d'admission d'air, des sections du tuyau d'échappement et similaires, sont fixés de manière indirecte dans le cadre porteur (18) du porteur d'organes mécaniques (17).

38. Véhicule industriel selon la revendication 1, **caractérisé en ce que**, lorsque celui-ci présente un essieu poussé ou un essieu traîné (7) directeur, associé au pont arrière (6), la direction de ses roues (182, 183) est réalisée par l'intermédiaire d'un cylindre récepteur (181) hydraulique qui, sur une extrémité, est articulé au niveau du cadre de châssis (3, 4) et, sur l'autre extrémité, est articulé au niveau du support de roue de l'une des deux roues (182, 183) de l'essieu poussé ou de l'essieu traîné (7) et est raccordé à un cylindre émetteur (184) par l'intermédiaire de conduites hydrauliques, qui, avec son extrémité arrière (185), est articulé par exemple au milieu au niveau du levier de commande (10) raccordé à la sortie du boîtier de direction (31) et qui s'étend vers l'avant, à l'extérieur le long de la partie avant de longeron (11), dans le sens inverse de la marche, et est articulé avec son extrémité avant (166) à un organe de fixation (187) sur un support (188) qui est fixé à l'extérieur sur l'extrémité avant de la partie avant de longeron (11).

39. Véhicule industriel selon la revendication 38, **caractérisé en ce que** le support (188) est coudé en soi, est soudé avec sa joue verticale (189) à l'extérieur sur la partie avant de longeron (11) ou est fixé à l'aide de plusieurs liaisons boulonnées traversant des alésages alignés les uns par rapport aux autres, et porte au-dessus sur sa joue transversale (190), par exemple, une rotule en tant qu'organe de fixation (187), sur laquelle est articulé le cylindre émetteur (184) à l'aide d'une calotte sphérique présente sur son extrémité avant (186).

40. Véhicule industriel selon la revendication 1, **caractérisé en ce qu'**un vérin de basculement de cabine est articulé, par son extrémité arrière, à un support (192) fixe sur le cadre, s'étend vers l'avant en sens inverse de la marche et est articulé, par son extrémité avant, à un support fixé sur un plancher de cabine (116) ou un support de plancher de cabine (130, 131), le support (192) fixe sur le cadre étant fixé soit sur un longeron (3, 4), soit sur la traverse (27) reliant les deux longerons (3, 4) et fixant devant les bras de guidage longitudinaux (23, 24) de l'essieu avant, soit aussi bien sur la traverse (27) que sur un longeron (3, 4).

41. Véhicule industriel selon la revendication 40, **caractérisé en ce que** le support (192) est constitué d'une pièce pliée et estampée en tôle ou de plusieurs pièces pliées et estampée en tôle préfabriquées et soudées ensemble et présente au moins une bride de raccordement (193, 194) pour sa fixation devant sur la traverse (27) et/ou sur l'une des équerres d'assemblage (90, 91), ainsi que deux joues (199, 200) parallèles l'une à l'autre et parallèles au sens longitudinal du véhicule, entre lesquelles est logé un orifice de fixation disposé sur l'extrémité arrière du vérin de basculement et y est articulé de manière pivotante par l'intermédiaire d'une vis de palier traversant des alésages alignés les uns par rapport aux autres.

42. Véhicule industriel selon les revendications 40 et 41, **caractérisé en ce que** le vérin de basculement de cabine est raccordé à une pompe hydraulique de basculement de cabine par l'intermédiaire d'une conduite hydraulique, cette pompe hydraulique étant fixée sur un support fixe sur le cadre, qui sert simultanément également de support pour une pièce de garde-boue (203) disposée au-dessus d'une roue de l'essieu avant (5).

43. Véhicule industriel selon la revendication 1, **caractérisé en ce que** le plancher (116) de la cabine à accès surbaissé (8) est exécuté de manière plane dans sa partie avant (116/1) et est disposé parallèlement à la chaussée et est constitué d'une sorte de marche constituant une surélévation au niveau de sa partie centrale adjacente pour la fixation du siège de chauffeur et du siège convoyeur, auquel cas cette surélévation est formé à l'avant d'une section de plancher (116/2) verticale ou légèrement inclinée en biais en haut vers l'arrière et incluant un angle γ d'environ 120° avec la partie avant de plancher (116/1) et en haut d'une section de plancher (113/3) s'étendant parallèlement à la chaussée, à laquelle est reliée une section de plancher arrière (116/4) remontant de manière inclinée et abrupte vers le haut.

44. Véhicule industriel selon la revendication 43, **caractérisé en ce que** la partie arrière de plancher (116/4) est courbée en soi, auquel cas sa section inférieure (116/41) plane, relativement courte inclut, avec la section de plancher supérieure (116/3), un angle α d'environ 140° dans la zone de surélévation et la section supérieure (116/42) reliant la section inférieure (116/41) est plus abrupte et inclut, avec la section inférieure (116/41), un angle β d'environ 155°.

45. Véhicule industriel selon l'une des revendications 43 et 44, **caractérisé en ce que** les supports de plancher (130, 131) suivent la forme prédéfinie du plancher de cabine (116) en étant adaptés à celui-ci et présentent en section un profil en U ou un profil en chapeau.

46. Véhicule industriel selon la revendication 45, **caractérisé en ce que** les supports de plancher (130, 131), vus d'en haut, s'étendent, dans des sections avant (130/1, 131/1) dans une distance inférieure à celle des deux longerons (3, 4) de cadre, parallèlement l'un à l'autre, puis remontent vers le haut, en dessous de la section de fond (116/2), de manière inclinée parallèlement l'un à l'autre avec leurs sections (130/2, 131/2), puis mènent vers l'extérieur transversalement au sens de marche, avec des sections (130/3, 131/3) se raccordant à ces sections traversant les parties avant de longeron (11) et se raccordant à ces sections (130/1, 131/2) et puis se poursuivent par des sections (130/4, 131/4) s'étendant jusqu'à l'extrémité arrière du plancher (116) parallèlement l'une à l'autre et parallèlement à l'axe du véhicule.

47. Véhicule industriel selon l'une des revendications 45 et 46, **caractérisé en ce que** les supports de plancher (130, 131) sont complétés à différents endroits par des consoles (130/5, 131/5) soudées présentant un profil en chapeau ou un profil angulaire, qui présentent des brides de raccordement agrandissant la surface d'appui pour le plancher de cabine (116), sur lesquelles le plancher de cabine (116) est fixé au moyen de liaisons boulonnées ou par soudure.

48. Véhicule industriel selon l'une quelconque des revendications 43 à 47, **caractérisé en ce que** la partie arrière du plancher (116/4) remonte vers le haut à une dimension de l'ordre de grandeur d'environ 500 à 700 mm jusqu'à une position en hauteur au-dessus du bord supérieur des parties de longeron (9).

49. Véhicule industriel selon la revendication 48, **caractérisé en ce que** la partie arrière du plancher (116/4) présente un creux au milieu de son étendue transversale, dans lequel l'organe moteur (204) du véhicule, disposé derrière et monté sur le châssis (2) entre les longerons (3, 4) de cadre, remonte en partie.

50. Véhicule industriel selon l'une des revendications 43 à 49, **caractérisé en ce que** l'organe moteur (204) du véhicule, se raccordant à la partie arrière de plancher (116/4) de la cabine à accès surbaissé (8) et constitué du moteur à combustion, de l'embrayage et de la boîte de vitesses, dépasse en haut avec à une faible distance le corps d'essieu (22) de l'essieu à plusieurs bras de guidage longitudinaux (21) ainsi que la traverse (30) recouvrant celui-ci au niveau de sa traverse (50) et s'étend également en dessous du support d'organes mécaniques (17) par guidage vers l'arrière.

51. Véhicule industriel selon l'une des revendications 43 à 47, **caractérisé en ce que** le plancher (116) de la cabine à accès surbaissé (8), dans sa partie centrale (116/2, 116/3) en forme de surélévation, présente un passage dans la paroi, vu en sens transversal, à côté d'une section portant le siège chauffeur, en dessous d'une section portant un siège convoyeur, ce passage dans la paroi pouvant être fermée au moyen d'un recouvrement et formant un accès vers une coffre de réception, montée sur le plancher de cabine (116) dans cette zone, pour les composants électriques et électroniques, tels qu'ordinateur de pilotage du véhicule et/ou d'autres ordinateurs, le tableau électrique central, les fusibles, la prise de diagnostic, etc., qui ne peuvent pas être disposés dans la partie du tableau de bord ou de la paroi frontale (209) du véhicule industriel, qui sont alors fixés dans le coffre de réception dans des puits d'insertion correspondants ou sur des consoles et qui sont raccordés à des composants électriques et des composants de tableau de bord du véhicule, disponibles du côté du tableau de bord et du côté de la paroi frontale de cabine par l'intermédiaire d'un faisceau de câbles posé du côté du soubassement.

52. Véhicule industriel selon la revendication 1, **caractérisé en ce que** la cabine à accès surbaissé (8), dans sa paroi latérale (205) côté convoyeur, présente une porte convoyeur (206) à un seul vantail à débattement intérieur, qui est fixée sur une colonne pivotante fixée en haut et en bas dans la cabine à accès surbaissé (8), sur des bras y dépassant transversalement ainsi que guidée à une certaine distance des bras au moins dans sa partie supérieure, au moyen d'un galet à coulisse ou d'un coulisseau, dans une coulisse de guidage intégrée à la paroi latérale, et dont l'ouverture et la fermeture sont réalisées au moyen d'un vérin hydraulique qui, sur une extrémité, est articulé à la paroi latérale de cabine (205) et, sur l'autre extrémité, à l'extrémité libre d'un bras pivotant dépassant sur la colonne.
